# EUROPÄISCHE PATENTANMELDUNG

(11) **EP 3 926 424 A1**
(43) Veröffentlichungstag der Anmeldung: **22.12.2021**
(21) Anmeldenummer: 20180860.7
(22) Anmeldetag: 18.06.2020
(51) Int. Cl.: G05B 19/19

(54) **VERFAHREN ZUM BETREIBEN EINES PLANARANTRIEBSSYSTEMS UND PLANARANTRIEBSSYSTEM**

(71) Anmelder: Beckhoff Automation GmbH, 33415 Verl (DE)
(72) Erfinder: BENTFELD, Lukas, 33129 Delbrück (DE)
(74) Vertreter: Patentanwaltskanzlei WILHELM & BECK

(57) **Zusammenfassung**

Die Erfindung betrifft ein Verfahren zum Betreiben eines Planarantriebssystems. Das Planarantriebssystem weist einen Stator, mehrere Läufer und eine Hauptsteuervorrichtung auf. Der Stator weist mehrere bestrombare Statorleiter auf. Ein Bestromen von Statorleitern des Stators ist mit Hilfe der Hauptsteuervorrichtung steuerbar. Jeder Läufer weist eine Magneteinrichtung mit wenigstens einem Läufermagneten auf. Zwischen bestromten Statorleitern des Stators und den Magneteinrichtungen der Läufer ist eine magnetische Wechselwirkung hervorrufbar, um die Läufer anzutreiben. Jedem Läufer ist wenigstens eine eigene Läuferkennung zugeordnet. Es wird eine Identifizierung der Läufer durchgeführt, indem Positionsinformationen der Läufer und Läuferkennungen der Läufer bereitgestellt werden, und mit Hilfe der Hauptsteuervorrichtung die bereitgestellten Positionsinformationen der Läufer mit den bereitgestellten Läuferkennungen der Läufer verknüpft werden. Die Erfindung betrifft des Weiteren ein Planarantriebssystem.

## Beschreibung

Die vorliegende Erfindung betrifft ein Verfahren zum Betreiben eines Planarantriebssystems. Die Erfindung betrifft des Weiteren ein Planarantriebssystem.

Planarantriebssysteme können in unterschiedlichen Gebieten zur Anwendung kommen. Mögliche Beispiele sind die Automatisierungstechnik, insbesondere die Fertigungstechnik, die Handhabungstechnik und die Verfahrenstechnik. Mit Hilfe eines Planarantriebssystems kann ein bewegliches Element, welches zum Beispiel Bestandteil einer Anlage oder Maschine sein kann, in mindestens zwei linear unabhängigen Richtungen bewegt oder positioniert werden. Ein Planarantriebssystem kann einen permanenterregten elektromagnetischen Planarmotor mit wenigstens einem planaren Stator und wenigstens einem über dem Stator in wenigstens zwei Richtungen beweglichen Läufer umfassen.

Der Stator eines Planarantriebssystems kann eine Mehrzahl an bestrombaren Statorleitern aufweisen. Der Läufer kann eine Magneteinrichtung mit mehreren Permanentmagneten aufweisen. Ein Antreiben des Läufers kann durch Bestromen von Statorleitern des Stators im Bereich des Läufers erfolgen. Auf diese Weise kann eine magnetische Wechselwirkung zwischen bestromten Statorleitern und der Magneteinrichtung des Läufers hervorgerufen werden, wodurch der Läufer schwebend über dem Stator gehalten sowie über diesem bewegt werden kann.

Um Statorleiter des Stators im Bereich des Läufers zu bestromen, ist es erforderlich, eine Position des Läufers zu erfassen. Dies kann mit Hilfe eines Positionserfassungssystems durchgeführt werden. Sofern mehrere Läufer auf dem Stator eingesetzt werden, können die Positionen der mehreren Läufer bestimmt werden. Abgesehen von der Positionserfassung kann es von Interesse sein, die einzelnen Läufer voneinander zu unterscheiden.

Die Aufgabe der vorliegenden Erfindung besteht darin, ein verbessertes Verfahren zum Betreiben eines Planarantriebssystems anzugeben, bei welchem mehrere Läufer voneinander unterschieden werden können. Es ist weiterhin Aufgabe der Erfindung, ein entsprechend ausgebildetes Planarantriebssystem anzugeben.

Diese Aufgabe wird durch die Merkmale der unabhängigen Patentansprüche gelöst. Weitere vorteilhafte Ausführungsformen der Erfindung sind in den abhängigen Ansprüchen angegeben.

Gemäß einem Aspekt der Erfindung wird ein Verfahren zum Betreiben eines Planarantriebssystems vorgeschlagen. Das Planarantriebssystem weist einen Stator, mehrere Läufer und eine Hauptsteuervorrichtung auf. Der Stator weist mehrere bestrombare Statorleiter auf. Ein Bestromen von Statorleitern des Stators kann mit Hilfe der Hauptsteuervorrichtung gesteuert werden. Jeder Läufer weist eine Magneteinrichtung mit wenigstens einem Läufermagneten auf. Zwischen bestromten Statorleitern des Stators und den Magneteinrichtungen der Läufer kann eine magnetische Wechselwirkung hervorgerufen werden, um die Läufer anzutreiben. Jedem Läufer ist wenigstens eine eigene Läuferkennung zugeordnet. In dem Verfahren wird eine Identifizierung der Läufer durchgeführt. Hierzu werden Positionsinformationen der Läufer und Läuferkennungen der Läufer bereitgestellt, und werden mit Hilfe der Hauptsteuervorrichtung die bereitgestellten Positionsinformationen der Läufer mit den bereitgestellten Läuferkennungen der Läufer verknüpft.

Mit Hilfe des vorgeschlagenen Verfahrens können die mehreren Läufer des Planarantriebssystems zuverlässig identifiziert und dadurch voneinander unterschieden werden. Dies wird bei dem Verfahren dadurch durchgeführt, dass Positionsinformationen der Läufer, also Informationen über die jeweilige laterale Position der Läufer auf dem Stator, und Läuferkennungen der Läufer, zur Verfügung gestellt werden. Für jeden Läufer kann wenigstens eine, dem jeweiligen Läufer zugehörige Läuferkennung bereitgestellt werden. Wie weiter unten näher erläutert wird, kann das Bereitstellen der Positionsinformationen und Läuferkennungen durch unterschiedliche Ausgestaltungen des Planarantriebssystems sowie mit Hilfe von geeigneten Einrichtungen und Mitteln verwirklicht werden. Mittels der zum Steuern des Planarantriebssystems eingesetzten Hauptsteuervorrichtung werden die für die einzelnen Läufer bereitgestellten Positionsinformationen und die bereitgestellten und den entsprechenden Läufern zugehörigen Läuferkennungen ferner miteinander verknüpft und dadurch einander zugeordnet. Hierdurch kann eine eindeutige Zuordnung und damit Identifizierung der Läufer ermöglicht werden.

Im Folgenden werden weitere mögliche Details und Ausführungsformen näher beschrieben, welche für das Verfahren und für das Planarantriebssystem in Betracht kommen können.

Die Hauptsteuervorrichtung und der Stator des Planarantriebssystems können derart ausgebildet bzw. derart miteinander verbunden sein, dass eine Datenkommunikation zwischen der Hauptsteuervorrichtung und dem Stator möglich ist. Dabei können Daten sowohl von der Hauptsteuervorrichtung zu dem Stator, als auch von dem Stator zu der Hauptsteuervorrichtung übermittelt werden. Die Hauptsteuervorrichtung dient wie oben angegeben u.a. zum Steuern eines Bestromens von Statorleitern des Stators, und damit zum Steuern des Antreibens der Läufer des Planarantriebssystems. Hierbei können ein Läufer, oder auch mehrere oder sämtliche Läufer gleichzeitig angetrieben werden. Die Hauptsteuervorrichtung kann zu diesem Zweck entsprechende Steuerdaten an den Stator übermitteln, anhand derer der Stator das Bestromen von Statorleitern vornimmt. Die Steuerdaten können Sollstromwerte sein oder Sollstromwerte umfassen.

Die Hauptsteuervorrichtung des Planarantriebssystems kann bei dem Bereitstellen der Positionsinformationen und/oder bei dem Bereitstellen der Läuferkennungen der Läufer miteinbezogen sein. Hierbei können der Hauptsteuervorrichtung entsprechende und sich auf Läuferpositionen bzw. Läuferkennungen beziehende Daten zur Verfügung gestellt werden, welche von der Hauptsteuervorrichtung verarbeitet bzw. weiterverarbeitet werden können.

In einer weiteren Ausführungsform wird das Bereitstellen von Positionsinformationen der Läufer mit Hilfe eines Positionserfassungssystems des Planarantriebssystems durchgeführt. Das Positionserfassungssystem weist mehrere Magnetfeldsensoren auf. Hierbei kann es sich zum Beispiel um Hallsensoren handeln. Die Magnetfeldsensoren können an dem Stator angeordnet und Bestandteile des Stators sein. Mit den Magnetfeldsensoren können die von den Magneteinrichtungen der Läufer erzeugten Magnetfelder erfasst werden. Hierauf basierend kann auf die Positionen der Läufer geschlossen werden. Die Magnetfeldsensoren können Sensorsignale erzeugen, welche die Positionen der Läufer wiedergeben können. Neben den Magnetfeldsensoren kann das Positionserfassungssystem wenigstens eine Verarbeitungseinrichtung aufweisen. Die wenigstens eine Verarbeitungseinrichtung kann ebenfalls Bestandteil des Stators sein. Mittels der wenigstens einen Verarbeitungseinrichtung können Sensorsignale von Magnetfeldsensoren verarbeitet und entsprechende Sensordaten bereitgestellt werden, welche an die Hauptsteuervorrichtung übermittelt werden können. Die Hauptsteuervorrichtung kann zum Weiterverarbeiten der Sensordaten ausgebildet sein. Auf diese Weise können Positionsinformationen der Läufer zur Verfügung gestellt werden.

In einer weiteren Ausführungsform wird die Identifizierung der Läufer bei einem (bzw. jedem) Systemstart bzw. Systemneustart des Planarantriebssystems durchgeführt. Auf diese Weise kann zu Beginn des jeweiligen Betriebs des Planarantriebssystems eine Zuordnung bzw. Erkennung der Läufer erfolgen. Hierdurch kann zum Beispiel für den Fall, dass ein oder mehrere Läufer im ausgeschalteten Zustand des Planarantriebssystems bewegt oder vertauscht werden, eine unsachgemäße oder fehlerhafte Betriebsweise des Planarantriebssystems vermieden werden.

Nach dem Durchführen der Identifizierung kann mit Hilfe der Hauptsteuervorrichtung der weitere Betrieb des Planarantriebssystem vorgenommen werden, indem einzelne, mehrere oder sämtliche Läufer durch Ansteuern des Stators entsprechend angetrieben werden. Die Identifizierung und damit Unterscheidbarkeit der einzelnen Läufer bietet dabei die Möglichkeit, den Betrieb des Planarantriebssystems mit einer hohen Zuverlässigkeit und Genauigkeit durchzuführen.

In einer weiteren Ausführungsform ist jeder Läufer ausgebildet zum Übermitteln der Läuferkennung, um die Läuferkennung bereitzustellen. Ferner werden die Läufer für die Identifizierung derart aktiviert, dass die Läufer nacheinander die Läuferkennung übermitteln.

In der vorgenannten Ausführungsform erfolgt ein Übermitteln der Läuferkennungen durch die Läufer, um die Läuferkennungen zur Verfügung zu stellen. Das Aktivieren der Läufer zum Übermitteln der Läuferkennungen kann durch die Hauptsteuervorrichtung gesteuert bzw. initiiert werden. Die Läufer können hierbei als Sender dienen, welche die jeweilige Läuferkennung an wenigstens einen Empfänger übertragen können. Die empfangenen Läuferkennungen bzw. sich auf die Läuferkennungen beziehende Daten können daraufhin an die Hauptsteuervorrichtung weitergeleitet werden. Die als Sender ausgestalteten Läufer und der Empfänger können geeignete und aufeinander abgestimmte Kommunikationsmittel aufweisen. Wie weiter unten näher erläutert wird, kann der Stator als Empfänger dienen.

Das Aktivieren der Läufer erfolgt gemäß der vorstehend beschrieben Ausführungsform derart, dass das Übermitteln der Läuferkennungen in aufeinanderfolgender Weise durch die Läufer durchgeführt wird. Auf diese Weise können die Positionsinformationen und die Läuferkennungen der Läufer durch die Hauptsteuervorrichtung eindeutig und zuverlässig miteinander verknüpft werden. Um ein sequenzielles Übermitteln der Läuferkennungen zu erzielen, können die Läufer nacheinander zum Übermitteln der Läuferkennung aktiviert werden. Das Aktivieren der Läufer zum aufeinanderfolgenden Übermitteln der Läuferkennungen kann auf unterschiedliche Art und Weise durchgeführt werden, wie weiter unten näher erläutert wird.

In einer weiteren Ausführungsform ist der Stator ausgebildet, das Bestromen von Statorleitern derart durchzuführen, dass mit Hilfe von bestromten Statorleitern ein magnetisches Wechselfeld erzeugt werden kann. Ferner weist jeder Läufer wenigstens eine Läuferspule auf, in welcher aufgrund des magnetischen Wechselfelds eine Wechselspannung induziert werden kann. Diese Ausgestaltung kann zur Anwendung kommen, um eine drahtlose bzw. induktive Energieübertragung von dem Stator zu den Läufern zu ermöglichen. In diesem Zusammenhang kann jeder Läufer des Weiteren einen Gleichrichter zum Umwandeln der induzierten Wechselspannung in eine Gleichspannung aufweisen. Die Spannungsinduktion kann ferner dazu genutzt werden, die Läufer zum aufeinanderfolgenden Übermitteln der Läuferkennungen zu aktivieren, wie weiter unten näher erläutert wird.

Das Erzeugen eines magnetischen Wechselfelds durch den Stator ist gemäß einer weiteren Ausführungsform dadurch verwirklicht, dass das Bestromen von Statorleitern bei dem Stator durch eine Stromregelung auf Basis einer Pulsweitenmodulation (engl. pulse width modulation, PWM) erfolgt. Hierbei können zu bestromende Statorleiter mit einer mittels Pulsweitenmodulation getakteten elektrischen Spannung, und infolgedessen mit durch eine PWM-Taktfrequenz vorgegebenen periodischen Spannungspulsen beaufschlagt werden. Auf diese Weise kann der in bestromten Statorleitern erzeugte elektrische Strom mit einem Wechselstromanteil, dem sogenannten Rippelstrom, überlagert sein. Der Strom kann dabei um einen Mittelwert hin und her pendeln. Das Auftreten des Rippelstroms ist mit einem sich zeitlich ändernden Magnetfeld verbunden, so dass eine elektrische Wechselspannung in der wenigstens einen Läuferspule eines Läufers induziert werden kann.

In einer weiteren Ausführungsform sind die Statorleiter des Stators zu unabhängig voneinander bestrombaren Mehrphasensystemen zusammengeschaltet. Jedes Mehrphasensystem kann mehrere aus Statorleitern gebildete Spulen aufweisen. Zum Antreiben eines Läufers kann jeweils ein Teil der Mehrphasensysteme gleichzeitig bestromt werden.

Die Mehrphasensysteme des Stators können mit einem Mehrphasenstrom beaufschlagt werden. Hierbei kann jede Spule eines bestromten Mehrphasensystems mit einer entsprechenden Phase des Stroms gespeist werden. Die zu diesem Zweck mit Hilfe des Stators durchgeführte Stromregelung kann auf Basis einer mittenzentrierten Pulsweitenmodulation (engl. center aligned PWM) erfolgen, bei welcher die Spulen eines Mehrphasensystems mit mittig zueinander zentrierten Spannungspulsen beaufschlagt werden.

Die Mehrphasensysteme des Stators können Dreiphasensysteme bzw. Dreispulensysteme sein, welche jeweils drei aus Statorleitern gebildete und mit jeweils einem gemeinsamen Sternpunkt zusammengeschaltete Spulen umfassen. Im Betrieb des Planarantriebssystems können derartige Spulensysteme mit einem Dreiphasenstrom beaufschlagt werden.

Für das Durchführen der Stromregelung weist der Stator gemäß einer weiteren Ausführungsform mehrere Stromregeleinrichtungen, mit den Statorleitern bzw. Mehrphasensystemen verbundene Endstufeneinrichtungen und Strommesseinrichtungen auf. Mit Hilfe der Strommesseinrichtungen können Iststromwerte von Statorleitern bzw. Mehrphasensystemen erfasst werden. Die Iststromwerte können, zusammen mit von der Hauptsteuervorrichtung erzeugten Sollstromwerten, den Stromregeleinrichtungen übermittelt werden. Mit Hilfe der Stromregeleinrichtungen können, basierend auf den Iststromwerten und Sollstromwerten, Steuersignale erzeugt werden. Die Steuersignale, bei welchen es sich um pulsweitenmodulierte Steuersignale handeln kann, können an die Endstufeneinrichtungen angelegt werden. Hierauf basierend können mit Hilfe der Endstufeneinrichtungen pulsweitenmodulierte bzw. getaktete Spannungspulse an Statorleiter bzw. Mehrphasensysteme des Stators angelegt werden, wodurch diese periodisch bestromt werden. Die Endstufeneinrichtungen können mit einer Zwischenkreisspannung versorgt werden. Die Zwischenkreisspannung kann durch einen Zwischenkreis des Stators bereitgestellt werden.

In einer weiteren Ausführungsform weist der Stator ein oder mehrere Statormodule auf. Bei einer Ausgestaltung mit mehreren Statormodulen können diese lateral nebeneinander angeordnet sein. Ein solches Statormodul kann mehrere der oben genannten Komponenten, also mehrere Statorleiter bzw. Mehrphasensysteme, Stromregeleinrichtungen, Endstufeneinrichtungen und Strommesseinrichtungen aufweisen. Des Weiteren kann das bzw. jedes Statormodul einen Zwischenkreis aufweisen. Im Hinblick auf das oben beschriebene Positionserfassungssystem kann das bzw. jedes Statormodul ferner mehrere Magnetfeldsensoren und eine Verarbeitungseinrichtung aufweisen.

Wie oben angegeben wurde, kann jeder Läufer ausgebildet sein zum Übermitteln der Läuferkennung, um die Läuferkennung bereitzustellen. Der Stator kann ausgebildet sein, das Bestromen von Statorleitern bzw. Mehrphasensystemen derart durchzuführen, dass mit Hilfe von bestromten Statorleitern ein magnetisches Wechselfeld erzeugt werden kann. Jeder Läufer kann wenigstens eine Läuferspule aufweisen, in welcher aufgrund des magnetischen Wechselfelds eine Wechselspannung induziert werden kann. Für die Identifizierung ist gemäß einer weiteren Ausführungsform vorgesehen, nacheinander mit Hilfe des Stators an denjenigen Positionen, an welchen sich die Läufer befinden, ein die Läufer zum Übermitteln der Läuferkennung aktivierendes magnetisches Wechselfeld zu erzeugen und dadurch eine Wechselspannung in der wenigstens einen Läuferspule der Läufer zu induzieren, so dass die Läufer nacheinander die Läuferkennung übermitteln.

In der vorgenannten Ausführungsform werden die Positionsinformationen der Läufer dazu verwendet, um nacheinander an den unterschiedlichen Positionen der Läufer Statorleiter bzw. Mehrphasensysteme des Stators in geeigneter Weise zu bestromen, und dadurch an diesen Positionen ein die Läufer zum Übermitteln der Läuferkennungen aktivierendes magnetisches Wechselfeld zu erzeugen. Dies kann, basierend auf den Positionsinformationen der Läufer, mittels der Hauptsteuervorrichtung des Planarantriebssystems durch entsprechendes Ansteuern des Stators gesteuert werden. Die auf diese Weise nacheinander von den Läufern übermittelten und damit der Hauptsteuervorrichtung zur Verfügung gestellten Läuferkennungen können daraufhin eindeutig durch die Hauptsteuervorrichtung mit den Positionsinformationen der Läufer verknüpft werden.

Das Antreiben der Läufer beruht wie oben angegeben auf einer magnetischen Wechselwirkung zwischen bestromten Statorleitern bzw. Mehrphasensystemen des Stators und den Magneteinrichtungen der Läufer. Durch eine entsprechende Bestromung können die Läufer zum Beispiel schwebend über dem Stator gehalten sowie zusätzlich bewegt werden. Zum Antreiben der Läufer kann, in Abhängigkeit der Positionen der Läufer, ein Teil der Statorleiter bzw. Mehrphasensysteme gleichzeitig bestromt werden.

Im Hinblick auf das Erzeugen des die Läufer zum Übermitteln der Läuferkennung aktivierenden magnetischen Wechselfelds kann das Bestromen von Statorleitern bzw. Mehrphasensystemen des Stators an den Positionen der Läufer zum Antreiben derselben ferner derart durchgeführt und hierdurch eine solche magnetische Wechselwirkung mit den Magneteinrichtungen der Läufer hervorgerufen werden, dass die Läufer ortsfest auf dem Stator gehalten werden. In diesem Sinne ist gemäß einer weiteren Ausführungsform vorgesehen, dass die Läufer bei dem Aktivieren bzw. bei dem Erzeugen des aktivierenden magnetischen Wechselfelds an den Stator herangezogen werden. Auf diese Weise können die Läufer auf dem Stator zuverlässig fixiert werden.

Zum Antreiben eines Läufers können mehrere Mehrphasensysteme gleichzeitig bestromt werden. Dies gilt in entsprechender Weise mit Bezug auf das Erzeugen des aktivierenden magnetischen Wechselfelds. Hierbei können an den Positionen der einzelnen Läufer jeweils mehrere Mehrphasensysteme gleichzeitig bestromt werden, um jeweils das die Läufer zum Übermitteln der Läuferkennung aktivierende magnetische Wechselfeld zu erzeugen. Bei einer Ausgestaltung des Stators mit mehreren Statormodulen können mehrere gleichzeitig bestromte Mehrphasensysteme auch Bestandteile von mehreren benachbarten Statormodulen sein.

In einer weiteren Ausführungsform weist jeder Läufer eine Speichereinrichtung auf, in welcher die (wenigstens eine) Läuferkennung hinterlegt ist. Die Speichereinrichtung kann in Form einer nichtflüchtigen Speichereinrichtung verwirklicht sein.

In einer weiteren Ausführungsform weist jeder Läufer eine Steuereinrichtung zum Steuern des Übermittelns der Läuferkennung auf. Die Steuereinrichtung kann in Form eines Mikrocontrollers verwirklicht sein. Die Steuereinrichtung kann ferner mit einem geeigneten Kommunikationsmittel des betreffenden Läufers verbunden, und zum Ansteuern desselben ausgebildet sein, um das Übermitteln der Läuferkennung vorzunehmen. Des Weiteren kann die Steuereinrichtung mit einer die jeweilige Läuferkennung enthaltenden Speichereinrichtung des Läufers verbunden sein oder eine solche Speichereinrichtung umfassen.

Mit Bezug auf das oben beschriebene aufeinanderfolgende Aktivieren der Läufer zum Übermitteln der Läuferkennung durch Erzeugen eines aktivierenden magnetischen Wechselfelds mittels des Stators können unterschiedliche Ausgestaltungen in Betracht kommen, wie im Folgenden erläutert wird.

In einer weiteren Ausführungsform, in welcher jeder Läufer eine Steuereinrichtung zum Steuern des Übermittelns der Läuferkennung aufweist, und in welcher die Steuereinrichtung jedes Läufers mit Hilfe der in der wenigstens einen Läuferspule induzierten Wechselspannung mit Energie versorgt werden kann, wird bei jedem Läufer durch das Erzeugen des aktivierenden magnetischen Wechselfelds an der Position des betreffenden Läufers und die dadurch in der wenigstens einen Läuferspule induzierte Wechselspannung die Energieversorgung der Steuereinrichtung eingeleitet, woraufhin die Steuereinrichtung das Übermitteln der Läuferkennung veranlasst.

Der vorgenannten Ausführungsform liegt eine Ausgestaltung der Läufer zugrunde, in welcher die in der wenigstens einen Läuferspule induzierte Wechselspannung zur Versorgung der Steuereinrichtung des jeweiligen Läufers mit elektrischer Energie genutzt werden kann. Zu diesem Zweck kann jeder Läufer, wie oben angedeutet wurde, einen Gleichrichter zum Umwandeln der induzierten Wechselspannung in eine Gleichspannung aufweisen. Mit der Gleichspannung kann die Steuereinrichtung jedes Läufers elektrisch versorgt werden. Die Steuereinrichtung jedes Läufers kann ferner dazu ausgebildet sein, das Übermitteln der Läuferkennung zu initiieren, sobald die Energieversorgung aufgrund der Spannungsinduktion in der wenigstens einen Läuferspule des betreffenden Läufers beginnt.

In einer weiteren Ausführungsform, in welcher jeder Läufer eine Steuereinrichtung zum Steuern des Übermittelns der Läuferkennung aufweist, wird bei jedem Läufer durch das Erzeugen des aktivierenden magnetischen Wechselfelds an der Position des betreffenden Läufers und die dadurch in der wenigstens einen Läuferspule induzierte Wechselspannung ein Aktivierungsbefehl an den Läufer übertragen, woraufhin die Steuereinrichtung das Übermitteln der Läuferkennung veranlasst.

Der vorgenannten Ausführungsform liegt eine Ausgestaltung des Planarantriebssystems zugrunde, in welcher eine Datenübertragung von dem Stator zu den Läufern möglich ist. Dies kann durch solches Bestromen von Statorleitern bzw. Mehrphasensystemen des Stators erfolgen, dass das auf diese Weise erzeugte magnetische Wechselfeld und die in der wenigstens einen Läuferspule eines Läufers induzierte Wechselspannung in einer geeigneten und die zu übertragenden Daten enthaltenden Weise moduliert sind. Dies kann erreicht werden durch zeitweises Beeinflussen des Bestromens von Statorleitern, um dadurch zeitweise eine Veränderung in Bezug auf die in der wenigstens einen Läuferspule eines Läufers induzierte Wechselspannung hervorzurufen. Ein Übertragen von Datensignalen von dem Stator zu einem Läufer kann durch intermittierendes bzw. pulsförmiges Beeinflussen der Bestromung von Statorleitern erfolgen, wodurch auch eine intermittierend bzw. pulsförmig auftretende Veränderung in Bezug auf das durch den Stator erzeugte magnetische Wechselfeld, und damit in Bezug auf die in der wenigstens einen Läuferspule eines Läufers induzierte Wechselspannung hervorgerufen werden kann.

In diesem Zusammenhang kann der Stator wenigstens eine Beeinflussungseinrichtung aufweisen, mit deren Hilfe die Bestromung von Statorleitern bzw. die Stromregelung von einem oder mehreren Mehrphasensystemen zeitweise beeinflusst werden kann. Bei einer Ausgestaltung des Stators mit mehreren Statormodulen kann jedes Statormodul eine solche Beeinflussungseinrichtung aufweisen, um die Bestromung von Statorleitern bzw. Mehrphasensystemen des betreffenden Statormoduls zu beeinflussen. Die Beeinflussungseinrichtung(en) kann/können durch die Hauptsteuervorrichtung gesteuert werden. Die Hauptsteuervorrichtung kann hierzu entsprechende Datensteuersignale an die Beeinflussungseinrichtung(en) übermitteln, anhand derer die Beeinflussungseinrichtung(en) das zeitweise Beeinflussen der Bestromung von Statorleitern vornehmen kann/können.

Um die Veränderung der Spannungsinduktion zu erfassen, kann jeder Läufer eine Spannungsmesseinrichtung zum Messen der in der wenigstens einen Läuferspule induzierten Wechselspannung aufweisen. Des Weiteren kann die Steuereinrichtung jedes Läufers zum Auswerten der gemessenen Induktionsspannung ausgebildet sein. Durch das Auswerten können die von dem Stator erzeugten Datensignale ermittelt werden.

Hinsichtlich des Veranlassens der Läufer zum Übermitteln der Läuferkennung kann das Bestromen bzw. beeinflusste Bestromen von Statorleitern des Stators derart erfolgen, dass das hierdurch jeweils an der Position eines Läufers erzeugte aktivierende magnetische Wechselfeld und die damit in der wenigstens einen Läuferspule des betreffenden Läufers induzierte Wechselspannung in einer den Aktivierungsbefehl wiedergebenden Weise moduliert sind. Dies kann durch die Hauptsteuervorrichtung des Planarantriebssystems gesteuert werden. Hierzu kann die Hauptsteuervorrichtung eine oder mehrere Beeinflussungseinrichtungen des Stators ansteuern und sich auf den Aktivierungsbefehl beziehende Datensteuersignale an die Beeinflussungseinrichtung(en) übermitteln. Durch Messen der induzierten Wechselspannung, was mit Hilfe der Spannungsmesseinrichtung jedes Läufers erfolgen kann, und durch Auswerten der gemessenen induzierten Wechselspannung, was mit Hilfe der Steuereinrichtung jedes Läufers durchgeführt werden kann, kann der Aktivierungsbefehl durch die Steuereinrichtung jedes Läufers erkannt werden, woraufhin die Steuereinrichtung das Übermitteln der Läuferkennung initiieren kann.

Mit Bezug auf das Übermitteln der Läuferkennung durch die Läufer kann der Stator, wie oben angedeutet wurde, als Empfänger dienen. In diesem Zusammenhang können im Folgenden beschriebene Ausführungsformen zur Anwendung kommen.

Wie oben angegeben wurde, kann der Stator ausgebildet sein, das Bestromen von Statorleitern bzw. Mehrphasensystemen derart durchzuführen, dass mit Hilfe von bestromten Statorleitern bzw. Mehrphasensystemen ein magnetisches Wechselfeld erzeugt werden kann. Des Weiteren kann jeder Läufer wenigstens eine Läuferspule aufweisen, in welcher aufgrund des magnetischen Wechselfelds eine Wechselspannung induziert werden kann. In einer weiteren Ausführungsform ist jeder Läufer ausgebildet zum Übermitteln der Läuferkennung an den Stator, um die Läuferkennung bereitzustellen. Jeder Läufer ist in diesem Zusammenhang ausgebildet, das Übermitteln der Läuferkennung an den Stator durch zeitweises Belasten der wenigstens einen Läuferspule durchzuführen, um dadurch zeitweise eine erhöhte Stromaufnahme von bestromten Statorleitern des Stators hervorzurufen.

Der vorgenannten Ausführungsform liegt eine Ausgestaltung des Planarantriebssystems zugrunde, in welcher eine Datenübertragung von den Läufern zu dem Stator mittels Lastmodulation möglich ist. Dabei wird ausgenutzt, dass durch elektrisches Belasten der wenigstens einen Läuferspule eines Läufers, was mit Hilfe einer zugehörigen Steuereinrichtung des Läufers gesteuert werden kann, aus dem mit Hilfe des Stators erzeugten magnetischen Wechselfeld Energie entzogen bzw. in verstärkter Form entzogen werden kann. Die Energieentnahme ist mit einem erhöhten Stromverbrauch von bestromten Statorleitern des Stators verbunden. Das zeitweise Belasten der wenigstens einen Läuferspule kann derart erfolgen, dass die erhöhte Stromaufnahme bei dem Stator in einer geeigneten und die zu übertragenden Daten enthaltenden Weise moduliert ist. Ein Übertragen von Datensignalen von einem Läufer zu dem Stator kann durch intermittierendes bzw. pulsförmiges Belasten der wenigstens einen Läuferspule erfolgen, wodurch auch eine intermittierend bzw. pulsförmig auftretende erhöhte Stromaufnahme bei dem Stator hervorgerufen werden kann.

Für das elektrische Belasten kann jeder Läufer ausgebildet sein, die wenigstens eine Läuferspule oder einen Spulenteil der wenigstens einen Läuferspule kurzzuschließen. Das Kurzschließen kann über einen Lastwiderstand erfolgen. Zum Verwirklichen des Kurzschließens kann jeder Läufer eine Schalteinrichtung aufweisen. Die Schalteinrichtung jedes Läufers kann durch die dazugehörige Steuereinrichtung angesteuert werden.

Um die erhöhte Stromaufnahme von bestromten Statorleitern zu erfassen, kann der Stator eine Summenstrommesseinrichtung zum Messen eines Summenstroms von bestromten Statorleitern bzw. Mehrphasensystemen aufweisen. Des Weiteren kann der Stator eine Auswerteeinrichtung zum Auswerten des gemessenen Summenstroms aufweisen. Die Auswerteeinrichtung kann entsprechende Auswertesignale bzw. Auswertedaten erzeugen, welche die von einem Läufer erzeugten Datensignale wiedergeben können, und welche an die Hauptsteuervorrichtung des Planarantriebssystems übermittelt werden können. Bei einer Ausgestaltung des Stators mit mehreren Statormodulen kann jedes Statormodul eine Summenstrommesseinrichtung aufweisen, um die erhöhte Stromaufnahme von bestromten Statorleitern bzw. Mehrphasensystemen des betreffenden Statormoduls zu messen. Auch kann jedes Statormodul eine Auswerteeinrichtung zum Auswerten des gemessenen Summenstroms und Erzeugen von Auswertedaten aufweisen. Die Hauptsteuervorrichtung kann im Rahmen der Auswertung miteinbezogen sein. In diesem Sinne kann die Hauptsteuervorrichtung zum Weiterverarbeiten der von dem Stator kommenden Auswertesignale bzw. Auswertedaten ausgebildet sein, um hierauf basierend die von einem Läufer erzeugten Datensignale zu ermitteln.

Hinsichtlich des Übermittelns der Läuferkennung eines Läufers an den Stator kann das zeitweise Belasten der wenigstens einen Läuferspule derart erfolgen, dass die hierdurch bei dem Stator zeitweise bewirkte erhöhte Stromaufnahme in einer die Läuferkennung wiedergebenden Weise moduliert ist. Dies kann durch die Steuereinrichtung des Läufers gesteuert werden. Hierzu kann die Steuereinrichtung die Schalteinrichtung des Läufers in einer auf die Läuferkennung abgestimmten Weise periodisch bzw. pulsförmig zum Kurzschließen der Läuferspule oder eines Spulenteils derselben ansteuern. Durch Messen des Summenstroms und Auswerten desselben mit Hilfe von einer oder mehreren Summenstrommesseinrichtungen und einer oder mehreren Auswerteeinrichtungen des Stators können die Läuferkennung wiedergebende Auswertedaten erzeugt werden, welche an die Hauptsteuervorrichtung übermittelt, und durch die Hauptsteuervorrichtung weiterverarbeitet werden können. Auf diese Weise kann die Läuferkennung bereitgestellt werden.

Für die Identifizierung der mehreren Läufer des Planarantriebssystems können die Läufer in der oben beschriebenen Weise sequenziell zum Übermitteln der Läuferkennung aktiviert werden, und somit nacheinander durch zeitweises Belasten der wenigstens einen Läuferspule die jeweilige Läuferkennung an den Stator übermitteln. Hierdurch können die Läuferkennungen der Läufer nacheinander zur Verfügung gestellt werden.

In einer weiteren Ausführungsform ist jeder Läufer ausgebildet zum Übermitteln der Läuferkennung mittels Funkübertragung, um die Läuferkennung bereitzustellen.

Mit Bezug auf die vorgenannte Ausführungsform kann jeder Läufer eine Funksendeeinrichtung aufweisen, und kann wenigstens eine Funkempfangseinrichtung zum Einsatz kommen, um die Läuferkennungen per Funk von den Läufern an die wenigstens eine Funkempfangseinrichtung zu übertragen. Die wenigstens eine Funkempfangseinrichtung kann zum Beispiel an dem Stator angeordnet und/oder Bestandteil des Stators sein. Die wenigstens eine Funkempfangseinrichtung kann auch eine von dem Stator separate bzw. externe Funkempfangseinrichtung sein bzw. sich außerhalb des Stators befinden, und derart mit der Hauptsteuervorrichtung verbunden sein, dass eine Datenkommunikation zwischen der Hauptsteuervorrichtung und der wenigstens einen Funkempfangseinrichtung möglich ist. Die Funksendeeinrichtung eines Läufers kann durch eine zugehörige Steuereinrichtung des Läufers gesteuert werden. Die von der oder den Funkempfangseinrichtungen empfangenen Läuferkennungen bzw. die Läuferkennungen wiedergebende Empfangsdaten können weiter an die Hauptsteuervorrichtung übermittelt, und durch die Hauptsteuervorrichtung weiterverarbeitet werden.

Für die Identifizierung der mehreren Läufer des Planarantriebssystems können die Läufer in der oben beschriebenen Weise sequenziell zum Übermitteln der Läuferkennung aktiviert werden, und somit nacheinander die jeweilige Läuferkennung mittels Funkübertragung an wenigstens eine Funkempfangseinrichtung bzw. an den Stator übermitteln. Hierdurch können die Läuferkennungen der Läufer nacheinander zur Verfügung gestellt werden.

Abgesehen von den vorstehend beschriebenen Ausführungsformen können weitere Ausführungsformen in Betracht kommen, um Läuferkennungen der Läufer sowie auch Positionsinformationen der Läufer zur Verfügung zu stellen, welche mittels der Hauptsteuervorrichtung verknüpft werden.

Es ist zum Beispiel möglich, dass die den Läufern zugeordneten Läuferkennungen optisch sichtbar auf den Läufern vorliegen bzw. in Form von optisch sichtbaren Zeichen auf den Läufern verwirklicht sind. Die Läuferkennungen können zum Beispiel auf den Läufern aufgedruckt sein. Ein weiteres Beispiel sind die Läuferkennungen wiedergebende und auf den Läufern angeordnete Aufkleber. Die optisch sichtbaren Läuferkennungen können des Weiteren zum Beispiel in Form einer maschinenlesbaren Kennung, eines QR-Codes (engl. Quick Response), eines Barcodes oder auch als Klartext ausgestaltet sein.

Um der Hauptsteuervorrichtung solche Läuferkennungen bereitzustellen, kann das Planarantriebssystem zum Beispiel eine Kamera aufweisen. Mit Hilfe der Kamera können die optisch sichtbaren Läuferkennungen der Läufer ausgelesen, und damit der Hauptsteuervorrichtung zur Verfügung gestellt werden. Die Hauptsteuervorrichtung und die Kamera können derart miteinander verbunden sein, dass eine Datenkommunikation zwischen der Hauptsteuervorrichtung und der Kamera möglich ist. Die Kamera kann derart ausgebildet bzw. angeordnet sein, dass sich sämtliche Läufer im Bildbereich der Kamera befinden können, so dass sämtliche Läufer und deren Läuferkennungen mittels der Kamera erfasst werden können.

Unter Einsatz der Kamera können der Hauptsteuervorrichtung ferner Positionsinformationen der Läufer übermittelt werden. Die kamerabasierten Positionsinformationen können durch die Hauptsteuervorrichtung mit Positionsinformationen, welche mit Hilfe des oben beschriebenen und Magnetfeldsensoren umfassenden Positionserfassungssystems bereitgestellt werden können, kombiniert oder abgeglichen werden.

Für das Bereitstellen der Läuferkennungen und der Positionsinformationen besteht ferner die Möglichkeit, dass sich die Läufer hierbei nicht an verschiedenen Positionen auf dem Stator befinden. Stattdessen können die Läufer einzeln bzw. nacheinander durch Antreiben der Läufer zu einer vorgegebenen Position auf dem Stator bewegt werden, an welcher jeweils die Läuferkennung eines Läufers bereitgestellt wird. Dies kann mittels der Hauptsteuervorrichtung durch entsprechendes Ansteuern des Stators zum Bestromen von Statorleitern gesteuert werden. Die vorgegebene Position kann dabei als Auslesestation des Stators dienen. Auf diese Weise können im Rahmen der Identifizierung für die Läufer jeweils dieselben Positionsinformationen zur Verfügung gestellt werden. Für das Bereitstellen der Läuferkennungen kann zum Beispiel, wie oben beschrieben, eine mit der Hauptsteuervorrichtung verbundene Kamera zum Einsatz kommen. Die Kamera kann sich im Bereich der vorgegebenen Position befinden, so dass die Läufer einzeln unter die Kamera zum Auslesen der optisch sichtbaren Läuferkennung gefahren werden können.

Eine Auslesestation an einer vorgegebenen Position auf dem Stator kann nicht nur unter Verwendung einer Kamera, sondern alternativ mit anderen Mitteln verwirklicht sein. Es kann zum Beispiel in Betracht kommen, die vorgegebene Position als definierten Funkübertragungsbereich einzusetzen, an welchem die Läufer die jeweilige Läuferkennung, entsprechend der oben beschriebenen Ausführungsform, mittels Funkübertragung an eine Funkempfangseinrichtung übermitteln können. Die Funkempfangseinrichtung kann Bestandteil des Stators, oder eine externe Funkempfangseinrichtung sein. Die Funkempfangseinrichtung kann im Bereich der vorgegebenen Position, oder auch an einer anderen Stelle vorhanden sein. Die Läufer können Funksendeeinrichtungen aufweisen, welche durch Steuereinrichtungen der Läufer gesteuert werden können. Zum Übermitteln der Läuferkennungen kann auch eine Funkübertragungstechnik wie zum Beispiel NFC (engl. near field communication) zur Anwendung kommen. Hierbei kann der Stator im Bereich der vorgegebenen Position eine NFC-Leseeinrichtung, und können die Läufer NFC-Transponder aufweisen. Möglich ist auch die Verwendung einer von dem Stator separaten externen NFC-Leseeinrichtung im Bereich der vorgegebenen Position, welche mit der Hauptsteuervorrichtung verbunden ist. Die mittels der Funkempfangseinrichtung oder der NFC-Leseeinrichtung gewonnenen Läuferkennungen bzw. sich hierauf beziehende Daten können an die Hauptsteuervorrichtung weitergeleitet werden.

Es ist ferner möglich, mehrere vorgegebene Positionen bzw. räumlich verteilte Auslesestationen auf dem Stator vorzusehen, zu welchen die Läufer durch Antreiben derselben gefahren werden können, um an diesen Stellen die jeweilige Läuferkennung bereitzustellen. Auch dies kann mittels der Hauptsteuervorrichtung durch entsprechendes Ansteuern des Stators zum Bestromen von Statorleitern gesteuert werden. Auf diese Weise können im Rahmen der Identifizierung unterschiedliche Positionsinformationen der Läufer zur Verfügung gestellt werden. Das Bereitstellen der Läuferkennungen an den unterschiedlichen vorgegebenen Positionen bzw. Auslesestationen kann analog zu den vorstehend beschriebenen Ausgestaltungen erfolgen, indem an diesen Stellen Kameras zum Auslesen der optisch sichtbaren Läuferkennungen, oder Funkempfangseinrichtungen oder NFC-Leseeinrichtungen vorhanden sind, wodurch die Läuferkennungen von den Läufern zu den Funkempfangseinrichtungen bzw. NFC-Leseeinrichtungen, und daraufhin zu der Hauptsteuervorrichtung übermittelt werden können.

Mit Bezug auf ein Übermitteln der Läuferkennungen von den Läufern per Funk können ferner folgende Ausgestaltungen zur Anwendung kommen. Es können mehrere, zum Beispiel am Rand des Stators angeordnete Funkempfangseinrichtungen eingesetzt werden. Diese können gegebenenfalls Bestandteile des Stators sein. Die Läufer können eine Funksendeeinrichtung zum Aussenden bzw. Übermitteln der Läuferkennung an die Funkempfangseinrichtungen aufweisen. Die Funksendeeinrichtungen können durch Steuereinrichtungen der Läufer gesteuert werden. Anhand unterschiedlicher Signalstärken von Funksignalen, welche von den Funksendeeinrichtungen beim Aussenden der Läuferkennungen abgestrahlt werden können, bzw. unter Anwendung einer Funkpeilung mittels Triangulation, können die Positionen der Läufer erfasst und Positionsinformationen der Läufer bereitgestellt werden. In diesem Zusammenhang kann ferner die Anwendung von Richtfunk in Betracht kommen. Hierbei können die Funksendeeinrichtungen der Läufer ausgebildet sein, Funksignale in unterschiedliche Richtungen abzustrahlen, was ebenfalls eine Positionserfassung anhand unterschiedlicher Signalstärken, und dadurch ein Bereitstellen von Positionsinformationen der Läufer möglich macht. Das Aussenden der Läuferkennungen durch die Funksendeeinrichtungen der Läufer kann nacheinander oder gleichzeitig erfolgen.

Mit den vorstehend beschriebenen Methoden (Funkpeilung, Richtfunk) kann eine grobe Erfassung der Läuferpositionen erfolgen. Darüber hinaus können weitere Positionsinformationen der Läufer herangezogen werden, welche mit Hilfe des oben beschriebenen und Magnetfeldsensoren umfassenden Positionserfassungssystems bereitgestellt werden können. Hierbei können die groben Positionsinformationen durch die Hauptsteuervorrichtung mit Positionsinformationen, welche unter Verwendung der Magnetfeldsensoren bereitgestellt werden können, kombiniert oder abgeglichen werden.

Bei Ausgestaltungen, in welchen Läuferkennungen per Funkübertragung bereitgestellt werden, kann ein Aktivieren der Läufer zum Aussenden bzw. Übermitteln der Läuferkennungen entsprechend den oben beschriebenen Ausführungsformen erfolgen. In diesem Sinne kann an den Positionen der Läufer ein die Läufer aktivierendes magnetisches Wechselfeld erzeugt und dadurch eine Wechselspannung in der wenigstens einen Läuferspule der Läufer induziert werden. Durch das Erzeugen des magnetischen Wechselfelds und das Induzieren der Wechselspannung kann die Energieversorgung von Steuereinrichtungen der Läufer eingeleitet oder ein Aktivierungsbefehl an die Läufer übertragen werden, woraufhin die Steuereinrichtungen das Übermitteln der Läuferkennungen initiieren können.

Mit Bezug auf das Aktivieren der Läufer zum Aussenden der Läuferkennung mittels Funkübertragung ist es ferner denkbar, auch das Aktivieren der Läufer per Funk durchzuführen, indem ein Aktivierungsbefehl per Funk an einen oder mehrere Läufer übermittelt wird. Zu diesem Zweck können der Stator und die Läufer entsprechende Funktransceiver aufweisen, um einen Aktivierungsbefehl per Funk von dem Stator zu den Läufern, und die Läuferkennungen ebenfalls per Funk von den Läufern zu dem Stator zu übertragen. Möglich ist auch die Verwendung eines von dem Stator separaten externen Funktransceivers, welcher mit der Hauptsteuervorrichtung verbunden sein kann. Hierbei kann ein Aktivierungsbefehl per Funk von dem externen Funktransceiver zu den Läufern, und können die Läuferkennungen ebenfalls per Funk von den Läufern zu dem externen Funktransceiver, und von diesem weiter zu der Hauptsteuervorrichtung übermittelt werden.

Es ist ferner möglich, dass die Läufer einen elektrischen Energiespeicher aufweisen, mit welchem die Energie zum Aussenden bzw. Übermitteln der Läuferkennung zur Verfügung gestellt werden kann. Über einen solchen Energiespeicher eines Läufers können oben beschriebene Läuferkomponenten wie eine Steuereinrichtung, eine Funksendeeinrichtung usw., oder wenigstens eine weitere Einrichtung, welche auf dem Läufer angeordnet und/oder Bestandteil des Läufers sein kann, elektrisch versorgt werden.

Nach dem Durchführen der Identifizierung können die Läuferkennungen der Läufer zu Steuerungszwecken eingesetzt werden. Dies ist zum Beispiel der Fall bei folgender Ausführungsform. Hierbei wird das Bestromen von Statorleitern zum Antreiben wenigstens eines Läufers, was wie oben angegeben mit Hilfe der Hauptsteuervorrichtung gesteuert werden kann, auf der Grundlage eines Parametersatzes durchgeführt, welcher der Läuferkennung des betreffenden Läufers und damit dem Läufer zugeordnet ist. Der Parametersatz kann ein individualisierter, und auf das Antreiben des Läufers abgestimmter Parametersatz sein. In entsprechender Weise kann das Bestromen von Statorleitern zum Antreiben mehrerer oder sämtlicher Läufer des Planarantriebssystems auf der Grundlage von den Läuferkennungen der jeweiligen Läufer zugeordneten Parametersätzen durchgeführt werden.

Der vorgenannten Ausführungsform kann zugrunde liegen, dass ein oder mehrere Läufer des Planarantriebssystems bzw. deren Magneteinrichtungen herstellungsbedingt Toleranzabweichungen aufweisen können. Für solche Läufer kann durch eine Messung bzw. Kalibrierung, was nach der Herstellung der Läufer erfolgen kann, jeweils ein individualisierter Parametersatz ermittelt werden. Unter Verwendung eines individualisierten Parametersatzes kann die Hauptsteuervorrichtung eine genauere, d.h. die Toleranzabweichung zumindest teilweise kompensierende Steuerung des Antreibens des zugehörigen Läufers durchführen.

Die individualisierten Parametersätze können zum Beispiel mit den jeweiligen Läuferkennungen von einem Server runtergeladen werden. Ferner können die individualisierten Parametersätze auch in den Läufern hinterlegt sein, zum Beispiel in einer Speichereinrichtung derselben. Hierbei können die individualisierten Parametersätze mit oben beschriebenen Methoden (Lastmodulation oder Funk) an die Hauptsteuervorrichtung, gegebenenfalls über den Stator, übermittelt werden. Dies kann zum Beispiel bei einer Erstinbetriebnahme des Planarantriebssystems erfolgen.

In diesem Zusammenhang besteht ferner die Möglichkeit, ein mehrstufiges System von Parametersätzen der Läufer über deren Läuferkennungen zur Verfügung zu stellen. In einer ersten Stufe kann die mit Hilfe der Hauptsteuervorrichtung vorgenommene Steuerung des Antreibens der Läufer unter Verwendung von generalisierten Parametern durchgeführt werden, welche für alle Läufer gleich sind. In einer zweiten Stufe kann die Steuerung des Antreibens eines einzelnen, mehrerer oder sämtlicher Läufer des Planarantriebssystems unter Einsatz individualisierter Parametersätze erfolgen, welche bei der Produktion der jeweiligen Läufer ermittelt worden sind. In einer dritten Stufe können noch genauere individualisierte Parametersätze zur Anwendung kommen, welche zum Beispiel durch eine Messung über einen längeren Zeitraum oder mit einer höheren Auflösung gewonnen wurden.

Abgesehen hiervon können die Läuferkennungen der Läufer auch für einen anderen Zweck genutzt werden. Möglich ist zum Beispiel eine anhand der Läuferkennungen erzielbare Produktverfolgung bzw. Rückverfolgung der Läufer von der Produktion bis zum Einsatz oder Servicefall.

Bei den verwendeten Läuferkennungen kann es sich um systemweite Läuferkennungen handeln, welche lediglich auf das betrachtete Planarantriebssystem und dessen Läufer bezogen sind. Mit Bezug auf wenigstens ein weiteres Planarantriebssystem können dieselben, und erneut auf das jeweilige Planarantriebssystem bezogenen systemweiten Läuferkennungen zum Einsatz kommen.

Des Weiteren kann es sich bei den eingesetzten Läuferkennungen auch um weltweite Läuferkennungen handeln. Derartige Läuferkennungen können für jeden Läufer lediglich einmal vergeben, und infolgedessen eineindeutig sein.

Es ist ferner möglich, dass den Läufern sowohl eine systemweite Läuferkennung als auch eine weltweite Läuferkennung zugeordnet ist. Hierbei können die systemweiten Läuferkennungen im üblichen Betrieb des Planarantriebssystems zum Einsatz kommen, um die Läufer durch Durchführen der Identifizierung eindeutig zuordnen und erkennen zu können. Die weltweiten Läuferkennungen können hingegen eingesetzt werden, um zum Beispiel eine Rückverfolgung der Läufer vorzunehmen, oder um individualisierte Parametersätze für eine genauere Steuerung von Läufern bereitzustellen. Mit Bezug auf das betrachtete Planarantriebssystem kann in diesem Zusammenhang eine Verknüpfung von weltweiter Läuferkennung und systemweiter Läuferkennung erfolgen, um der Hauptsteuervorrichtung individualisierte Parametersätze für Läufer des Planarantriebssystems zur Verfügung zu stellen, anhand derer die Hauptsteuervorrichtung, wie oben angegeben, eine genauere Steuerung des Antreibens der Läufer vornehmen kann.

Im Rahmen des Identifizierens der Läufer kann ein Bereitstellen von systemweiten Läuferkennungen der Läufer durchgeführt werden. Möglich ist auch ein Bereitstellen von weltweiten Läuferkennungen, oder ein Bereitstellen von systemweiten Läuferkennungen und weltweiten Läuferkennungen der Läufer.

Gemäß einem weiteren Aspekt der Erfindung wird ein Planarantriebssystem vorgeschlagen. Das Planarantriebssystem kann zum Durchführen des oben beschriebenen Verfahrens bzw. zum Durchführen von einer oder mehreren der oben beschriebenen Ausführungsformen des Verfahrens ausgebildet sein. Das Planarantriebssystem weist einen Stator, mehrere Läufer und eine Hauptsteuervorrichtung auf. Der Stator weist mehrere bestrombare Statorleiter auf. Die Hauptsteuervorrichtung ist ausgebildet zum Steuern eines Bestromens von Statorleitern des Stators. Jeder Läufer weist eine Magneteinrichtung mit wenigstens einem Läufermagneten auf. Zwischen bestromten Statorleitern des Stators und den Magneteinrichtungen der Läufer kann eine magnetische Wechselwirkung hervorgerufen werden, um die Läufer anzutreiben. Jedem Läufer ist wenigstens eine eigene Läuferkennung zugeordnet. Das Planarantriebssystem ist ausgebildet zum Durchführen einer Identifizierung der Läufer, indem Positionsinformationen der Läufer und Läuferkennungen der Läufer bereitgestellt werden, und mit Hilfe der Hauptsteuervorrichtung die bereitgestellten Positionsinformationen der Läufer mit den bereitgestellten Läuferkennungen der Läufer verknüpft werden.

Für das Planarantriebssystem können dieselben Merkmale, Details und Ausführungsformen zur Anwendung kommen und können dieselben Vorteile in Betracht kommen, wie sie oben mit Bezug auf das Verfahren erläutert wurden. Durch das Bereitstellen von Positionsinformationen und Läuferkennungen der Läufer und das mittels der Hauptsteuervorrichtung durchgeführte Verknüpfen der Positionsinformationen und der Läuferkennungen kann eine eindeutige Zuordnung und damit Identifizierung der Läufer erzielt werden.

Die vorstehend erläuterten und/oder in den Unteransprüchen wiedergegebenen vorteilhaften Aus- und Weiterbildungen der Erfindung können - außer zum Beispiel in Fällen eindeutiger Abhängigkeiten oder unvereinbarer Alternativen - einzeln oder aber auch in beliebiger Kombination miteinander zur Anwendung kommen.

Die oben beschriebenen Eigenschaften, Merkmale und Vorteile dieser Erfindung, sowie die Art und Weise, wie diese erreicht werden, werden klarer und deutlicher verständlich in Zusammenhang mit der folgenden Beschreibung von Ausführungsbeispielen, die im Zusammenhang mit den schematischen Zeichnungen näher erläutert werden. Es zeigen:
Figur 1 eine perspektivische Darstellung eines Planarantriebssystem mit einem Stator und mehreren Läufern;
Figur 2 eine perspektivische Darstellung eines Statormoduls des Stators;
Figur 3 eine perspektivische Darstellung eines Läufers;
Figur 4 einen Regelkreis zur Stromregelung eines Spulensystems des Stators auf Basis der Pulsweitenmodulation;
Figur 5 zeitliche Spannungs- und Stromverläufe bei einer pulsweitenmodulierten Bestromung eines einphasigen und eines dreiphasigen Spulensystems;
Figur 6 eine Darstellung eines Läufers und des Stators, wobei der Läufer zur Datenübertragung per Funk ausgebildet ist;
Figur 7 einen Verfahrensablauf zur Identifizierung von Läufern des Planarantriebssystems;
Figur 8 eine Darstellung eines Läufers, welcher zum Kurzschließen eines Spulenteils einer Läuferspule ausgebildet ist;
Figur 9 einen weiteren Regelkreis zur Stromregelung eines Spulensystems des Stators, wobei der Stator eine Summenstrommesseinrichtung und eine Auswerteeinrichtung aufweist;
Figur 10 einen weiteren Regelkreis zur Stromregelung eines Spulensystems des Stators, wobei der Stator eine Beeinflussungseinrichtung zum Beeinflussen der Stromregelung aufweist;
Figur 11 zeitliche Spannungs- und Stromverläufe bei einer pulsweitenmodulierten Bestromung eines Spulensystems, wobei eine Beeinflussung durch die Beeinflussungseinrichtung dargestellt ist;
Figuren 12 und 13 Darstellungen des Planarantriebssystems, wobei eine Kamera zur Anwendung kommt;
Figuren 14 und 15 Darstellungen des Planarantriebssystems, wobei eine Funkübertragung und eine NFC-Übertragung zur Anwendung kommen;
Figuren 16 und 17 weitere Darstellungen des Planarantriebssystems unter Anwendung einer Funkübertragung;
Figur 18 eine Darstellung des Planarantriebssystems mit einem Läufer, welcher einen Energiespeicher aufweist; und
Figur 19 eine Darstellung einer weiteren Ausgestaltung eines Läufers, welche eine Läuferspule im Bereich von lateralen Außenseiten aufweist.

Auf der Grundlage der folgenden schematischen Figuren werden Ausführungsformen eines Planarantriebssystems und eines Verfahrens zum Betreiben eines Planarantriebssystems beschrieben. Das Planarantriebssystem umfasst einen planaren Stator und mehrere bewegliche Läufer. Den Läufern sind eigene Läuferkennungen zugeordnet, anhand derer eine Identifizierung der Läufer vorgenommen wird. Hierauf basierend kann der Betrieb des Planarantriebssystems mit einer hohen Zuverlässigkeit und Genauigkeit durchgeführt werden. Mit Bezug auf die im Folgenden beschriebenen Ausführungsformen wird darauf hingewiesen, dass Aspekte und Details, welche in Bezug auf eine Ausführungsform beschrieben werden, auch bei einer anderen Ausführungsform zur Anwendung kommen können. Des Weiteren besteht die Möglichkeit, Merkmale von mehreren Ausführungsformen miteinander zu kombinieren.

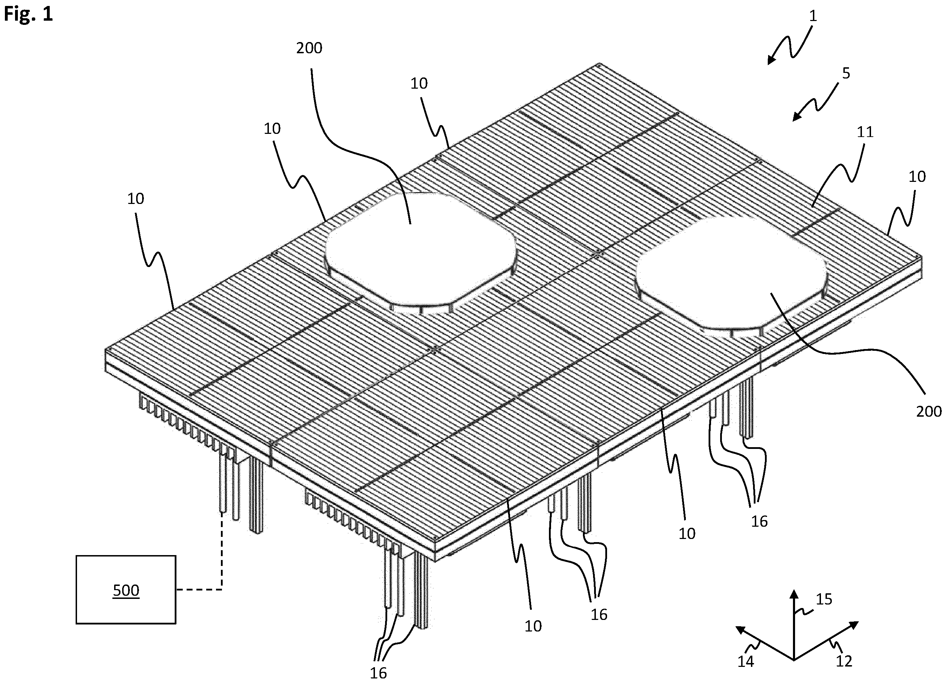

**Figur 1** zeigt eine perspektivische Darstellung einer Ausgestaltung eines Planarantriebssystems 1, welches einen Stator 5 und mehrere Läufer 200 aufweist. Die Läufer 200 sind im Betrieb des Planarantriebssystems 1 beweglich über dem Stator 5 angeordnet. Das Planarantriebssystem 1 umfasst des Weiteren eine in Figur 1 schematisch angedeutete Hauptsteuervorrichtung 500. Die Hauptsteuervorrichtung 500 dient zum Steuern des Stators 5, und damit zum Steuern eines Antreibens der Läufer 200. Der Stator 5 des Planarantriebssystems 1 weist mehrere nebeneinander angeordnete Statormodule 10 auf.

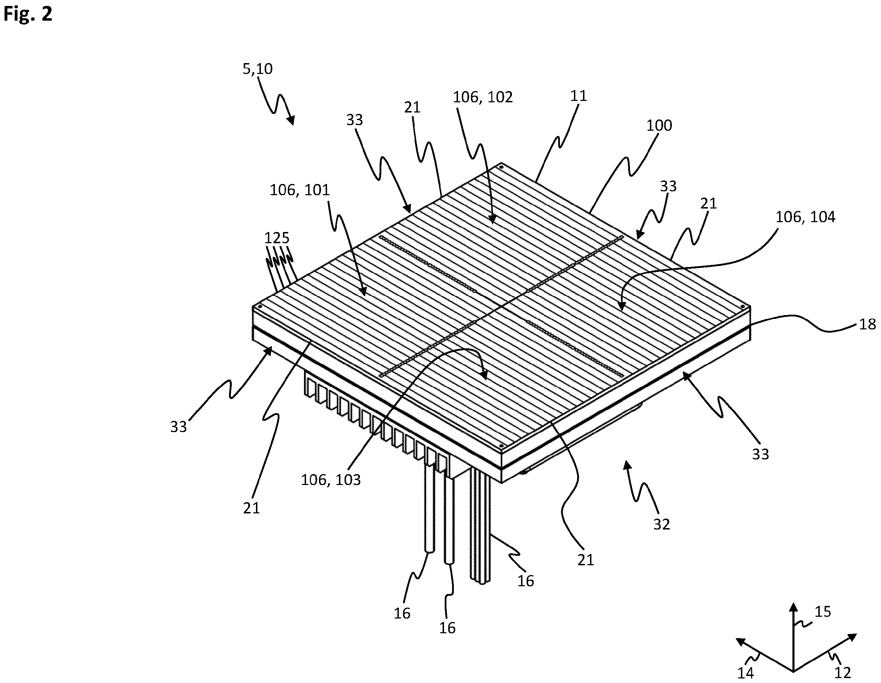

**Figur 2** zeigt eine perspektivische Darstellung eines einzelnen Statormoduls 10 des Stators 5 gemäß einer möglichen Ausgestaltung. Das Statormodul 10 umfasst ein Modulgehäuse 18 und eine Statoreinheit 100, welche an einer Oberseite des Modulgehäuses 18 angeordnet ist. Die Statoreinheit 100 ist als Planarstator ausgebildet und weist eine ebene bzw. planare Statorfläche 11 auf. Die Statorfläche 11 erstreckt sich über die gesamte Oberseite der Statoreinheit 100 und des Statormoduls 10. Die Statoreinheit 100 weist mehrere mit elektrischen Antriebsströmen beaufschlagbare metallische Statorleiter 125 auf. Die Statorleiter 125 können auch als Spulenleiter oder Leiterstreifen bezeichnet werden.

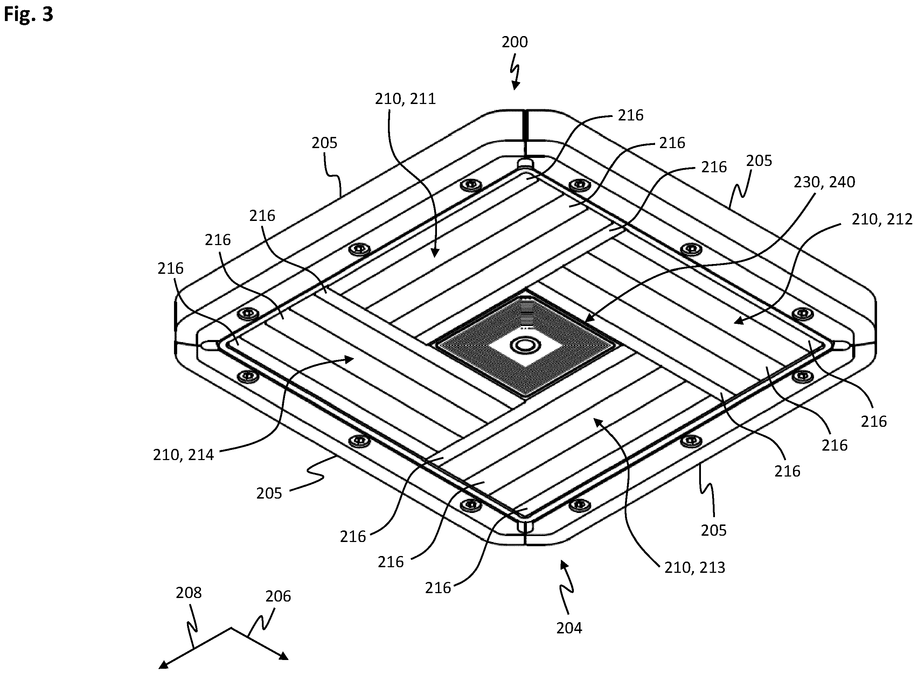

Durch das Bestromen von Statorleitern 125 des Statormoduls 10 kann ein Magnetfeld erzeugt werden, welches einen Läufer 200 des Planarantriebssystems 1 in Wechselwirkung mit einer Magneteinrichtung 204 des Läufers 200 (vgl. **Figur 3**) antreiben kann. Der Läufer 200 kann hierbei schwebend über der Statorfläche 11 gehalten sowie zusätzlich bewegt werden. Ein Bewegen des Läufers 200 kann sowohl in einer ersten Richtung 12 als auch in einer zweiten Richtung 14 erfolgen. Wie in **Figur 2** (und auch **Figur 1**) gezeigt ist, sind die erste Richtung 12 und zweite Richtung 14 senkrecht zueinander, und jeweils parallel zu der Statorfläche 11 orientiert. Indem ein Läufer 200 zugleich in der ersten Richtung 12 als auch in der zweiten Richtung 14 bewegt wird, kann der Läufer 200 in einer beliebigen Richtung über der Statorfläche 11 bewegt werden. Ein Antreiben eines Läufers 200 ist ferner in einer zu der ersten Richtung 12, der zweiten Richtung 14 und der Statorfläche 11 senkrecht orientierten dritten Richtung 15 möglich. Auf diese Weise kann der Abstand des betreffenden Läufers 200 zu der Statorfläche 11 variiert werden, der Läufer 200 also über der Statorfläche 11 angehoben oder abgesenkt werden. Möglich ist auch ein Heranziehen und dadurch Andrücken des Läufers 200 an das Statormodul 10.

In dem Modulgehäuse 18 des in **Figur 2** gezeigten Statormoduls 10 sind nicht dargestellte weitere elektrische und elektronische Komponenten und Einrichtungen des Statormoduls 10 angeordnet. Diese Bestandteile dienen u.a. zur Erzeugung von elektrischen Antriebsströmen und dadurch zur Bestromung von Statorleitern 125 des Statormoduls 10. Wie weiter unten näher erläutert wird, erfolgt die Bestromung durch eine Stromregelung auf Basis der Pulsweitenmodulation.

An einer der Statorfläche 11 gegenüberliegenden Modulunterseite 32 des Modulgehäuses 18 befinden sich in **Figur 2** nicht dargestellte Anschlüsse, welche zur Verbindung des Statormoduls 10 mit mehreren Anschlussleitungen 16 dienen. Die Anschlussleitungen 16 können eine Energieversorgungsleitung zur Versorgung des Statormoduls 10 mit elektrischer Energie, eine Eingangsdatenleitung und eine Ausgangsdatenleitung umfassen. Über die Energieversorgungsleitung kann dem Statormodul 10 elektrische Energie u.a. zur Erzeugung von Antriebsströmen zugeführt werden. Über die Eingangs- und Ausgangsdatenleitung kann ein Senden von Daten an das Statormodul 10 und von dem Statormodul 10 erfolgen. Auf diese Weise kann eine Datenkommunikation zwischen dem Statormodul 10 und der Hauptsteuervorrichtung 500 (vgl. **Figur 1**) des Planarantriebssystems 1 verwirklicht sein. Dies umfasst zum Beispiel ein Übermitteln von Steuersignalen bzw. Steuerdaten wie beispielsweise elektrischen Sollstromwerten oder auch anderen Daten von der Hauptsteuervorrichtung 500 an das Statormodul 10. In entsprechender Weise können Daten, beispielsweise Positionsdaten der Läufer 200 sowie Läuferkennungen der Läufer 200 wiedergebende Daten, von dem Statormodul 10 an die Hauptsteuervorrichtung 500 übermittelt werden.

Anhand von **Figur 2** wird deutlich, dass das Modulgehäuse 18, die Statoreinheit 100 und die Statorfläche 11 des Statormoduls 10 in der Aufsicht auf die Statorfläche 11 rechteckig bzw. quadratisch ausgebildet sind. Die Statorfläche 11 wird durch vier jeweils gerade Außenkanten 21 begrenzt. Jeweils zwei Außenkanten 21 sind parallel zu der ersten Richtung 12, und zwei weitere Außenkanten 21 sind parallel zu der zweiten Richtung 14 orientiert. Das Statormodul 10 und das Modulgehäuse 18 weisen ferner zwischen der Statorfläche 11 und der gegenüberliegenden Modulunterseite 32 vier ebene Seitenflächen 33 auf, welche an der Statorfläche 11 bündig mit den Außenkanten 21 abschließen.

Der in **Figur 1** gezeigte Stator 5 des Planarantriebssystems 1 ist aus mehreren Exemplaren des in **Figur 2** gezeigten Statormoduls 10 aufgebaut. Die mehreren Statormodule 10 sind nebeneinander angeordnet, so dass die Außenkanten 21 und Seitenflächen 33 benachbarter Statormodule 10 aneinander liegen. Auf diese Weise bilden die Statorflächen 11 der Statormodule 10 eine zusammenhängende Arbeitsfläche, über welche die Läufer 200 des Planarantriebssystems 1 unterbrechungsfrei bewegt werden können. Dies erfolgt durch eine entsprechende Bestromung von Statorleitern 125 der Statormodule 10, wodurch die Läufer 200 antreibende Magnetfelder erzeugt werden können.

**Figur 1** zeigt eine Ausgestaltung des Stators 5 mit sechs nebeneinander angeordneten Statormodulen 10. Die Statormodule 10 sind in zwei in der zweiten Richtung 14 nebeneinanderliegenden und entlang der ersten Richtung 12 ausgedehnten ersten Reihen und in drei in der ersten Richtung 12 nebeneinanderliegenden und entlang der zweiten Richtung 14 ausgedehnten zweiten Reihen bzw. Spalten nebeneinander angeordnet. Abgesehen hiervon können für den Stator 5 auch andere Ausgestaltungen mit anderen Anordnungen und/oder anderen Anzahlen an nebeneinander angeordneten Statormodulen 10 in Betracht kommen. In entsprechender Weise kann das Planarantriebssystem 1 abgesehen von den in **Figur 1** gezeigten zwei Läufern 200 eine andere bzw. größere Anzahl an Läufern 200 umfassen (jeweils nicht dargestellt).

Die oben erwähnte Energieversorgung und Datenkommunikation mit der Hauptsteuervorrichtung 500 kann bei jedem der Statormodule 10 des Stators 5 über jeweils eigene Anschlussleitungen 16 der Statormodule 10 verwirklicht sein. Alternative, hier nicht dargestellte Ausgestaltungen der Statormodule 10 können ferner elektrische Verbindungselemente aufweisen, mittels derer elektrische Energie und/oder Daten von einem Statormodul 10 zu einem benachbarten Statormodul 10 übertragen werden können. Derartige Verbindungselemente können zum Beispiel an den Seitenflächen 33 der Statormodule 10 angeordnet sein.

Bevor weitere Details des Stators 5 beschrieben werden, wird zunächst auf eine Ausgestaltung der Läufer 200 näher eingegangen. Die Läufer 200 können wie folgt verwirklicht sein.

**Figur 3** zeigt eine Ausgestaltung eines Läufers 200 des Planarantriebssystems 1 in einer perspektivischen Ansicht von unten auf eine Unterseite des Läufers 200. Im Betrieb des Planarantriebssystems 1 ist die Unterseite des Läufers 200 den Statorflächen 11 der Statormodule 10 des Stators 5 zugewandt angeordnet. Auch sind der Läufer 200 bzw. dessen Unterseite parallel oder im Wesentlichen parallel zu den Statorflächen 11 orientiert. Der Läufer 200 weist an der Unterseite eine Magneteinrichtung 204 auf. Die Magneteinrichtung 204 besitzt eine rechteckige bzw. quadratische Außenkontur, und umfasst vier Magneteinheiten 210, d.h. eine erste Magneteinheit 211, eine zweite Magneteinheit 212, eine dritte Magneteinheit 213 und eine vierte Magneteinheit 214. Die erste Magneteinheit 211 und die dritte Magneteinheit 213 weisen jeweils in einer ersten Läuferrichtung 206 nebeneinander angeordnete und entlang einer zu der ersten Läuferrichtung 206 senkrecht orientierten zweiten Läuferrichtung 208 ausgedehnte längliche Läufermagnete 216 auf. Die zweite Magneteinheit 212 und die vierte Magneteinheit 214 weisen jeweils in der zweiten Läuferrichtung 208 nebeneinander angeordnete und entlang der ersten Läuferrichtung 206 ausgedehnte längliche Läufermagnete 216 auf. Bei den Läufermagneten 216 handelt es sich um Permanentmagnete. Die erste Magneteinheit 211 und die dritte Magneteinheit 213 dienen einem Antrieb des Läufers 200 in der ersten Läuferrichtung 206. Die zweite Magneteinheit 212 und die vierte Magneteinheit 214 dienen einem Antrieb des Läufers 200 in der zweiten Läuferrichtung 208.

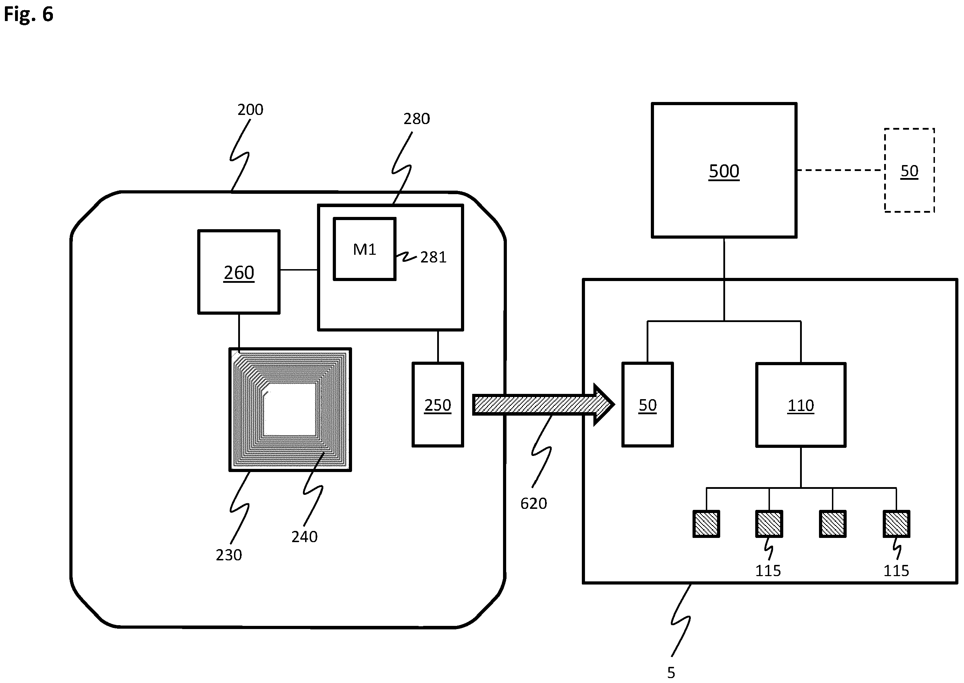

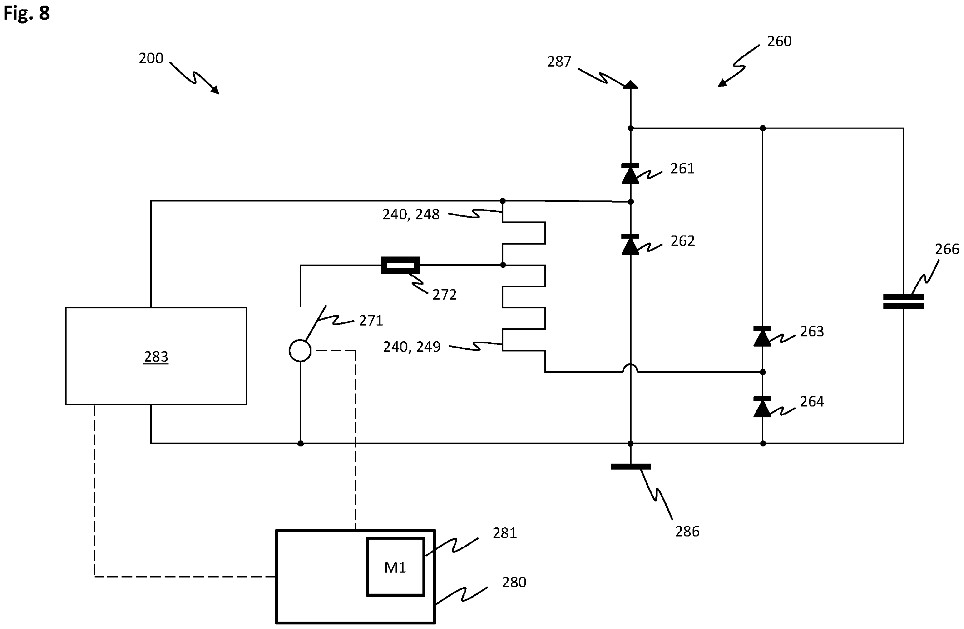

Die Magneteinheiten 210 der Magneteinrichtung 204 und deren Läufermagnete 216 sind derart angeordnet, dass diese einen Bereich umgeben. In dem von den Läufermagneten 216 umgebenen Bereich weist der Läufer 200 gemäß der in **Figur 3** gezeigten Ausgestaltung eine erste Leiterplatte 230 mit einer Läuferspule 240 auf. Die erste Leiterplatte 230 kann mehrlagig ausgeführt sein, und eine Mehrzahl an übereinander angeordneten und elektrisch miteinander verbundenen spiralförmigen metallischen Leiterbahnen aufweisen (nicht dargestellt). Die Läuferspule 240 kann durch die miteinander verbundenen spiralförmigen Leiterbahnen gebildet sein. Die Läuferspule 240 kann, zusammen mit den Statorleitern 125 des Stators 5, für eine induktive Energieübertragung von dem Stator 5 zu dem Läufer 200 und, je nach Ausgestaltung, für eine Datenübertragung zwischen dem Stator 5 und dem Läufer 200 eingesetzt werden. Wie weiter unten näher erläutert wird, wird hierbei ausgenutzt, dass durch die pulsweitenmodulierte elektrische Ansteuerung von Statorleitern 125 ein Rippelstrom und dadurch ein magnetisches Wechselfeld erzeugt wird, so dass eine elektrische Wechselspannung in der Läuferspule 240 induziert werden kann. Die induzierte Wechselspannung kann zur Energieversorgung herangezogen, und zu diesem Zweck mit Hilfe eines Gleichrichters 260 des Läufers 200 (vgl. die **Figuren 6** **und** **8**) gleichgerichtet werden.

Der in **Figur 3** gezeigte Läufer 200 weist ferner vier Abstandshalter 205 auf, welche die Magneteinrichtung 204 umgeben und laterale Außenseiten des Läufers 200 bilden. Mit Bezug auf die mehreren Läufer 200 des Planarantriebssystems 1 (vgl. **Figur 1**) können die Abstandshalter 205 dafür sorgen, dass bei sich berührenden Abstandshaltern 205 zweier Läufer 200 ein Mindestabstand zwischen den Magneteinrichtungen 204 der Läufer 200 eingehalten wird. Auf diese Weise kann vermieden werden, dass die Unterseiten der Läufer 200 durch eine Anziehungskraft zwischen ihren Magneteinrichtungen 204 aus der zu den Statorflächen 11 parallelen Position aufgerichtet werden und die Läufer 200 mit einander zugewandten Unterseiten aneinander magnetisch haften bleiben.

Wie oben beschrieben wurde, weist jedes Statormodul 10 des Stators 5 eine Statoreinheit 100 mit mehreren bestrombaren Statorleitern 125 auf. Wie in **Figur 2** gezeigt ist, weist die Statoreinheit 100 vier Statorsektoren 106, d.h. einen ersten Statorsektor 101, einen zweiten Statorsektor 102, einen dritten Statorsektor 103 und einen vierten Statorsektor 104 auf. Die Statorsektoren 106 umfassen jeweils einen Teil der jeweils elektrisch voneinander isolierten Statorleiter 125. Die Statorsektoren 106 sind rechteckig bzw. quadratisch ausgebildet, und umfassen jeweils ein Viertel der Fläche, d.h. einen Quadranten, der Statoreinheit 100.

Innerhalb der Statorsektoren 106 sind die Statorleiter 125 in mehreren übereinanderliegenden Statorlagen angeordnet. Dabei weist jede Statorlage lediglich Statorleiter 125 auf, welche entweder entlang der ersten Richtung 12 nebeneinander angeordnet und entlang der zweiten Richtung 14 länglich ausgedehnt sind, oder lediglich Statorleiter 125, welche entlang der zweiten Richtung 14 nebeneinander angeordnet und entlang der ersten Richtung 12 länglich ausgedehnt sind. In **Figur 2** (und auch **Figur 1**) sind lediglich die obersten Statorlagen der Statorsektoren 106 gezeigt, welche entlang der zweiten Richtung 14 ausgedehnte Statorleiter 125 umfassen. Darunter befinden sich weitere Statorlagen mit entlang der zweiten Richtung 14 oder entlang der ersten Richtung 12 ausgedehnten Statorleitern 125 (nicht dargestellt).

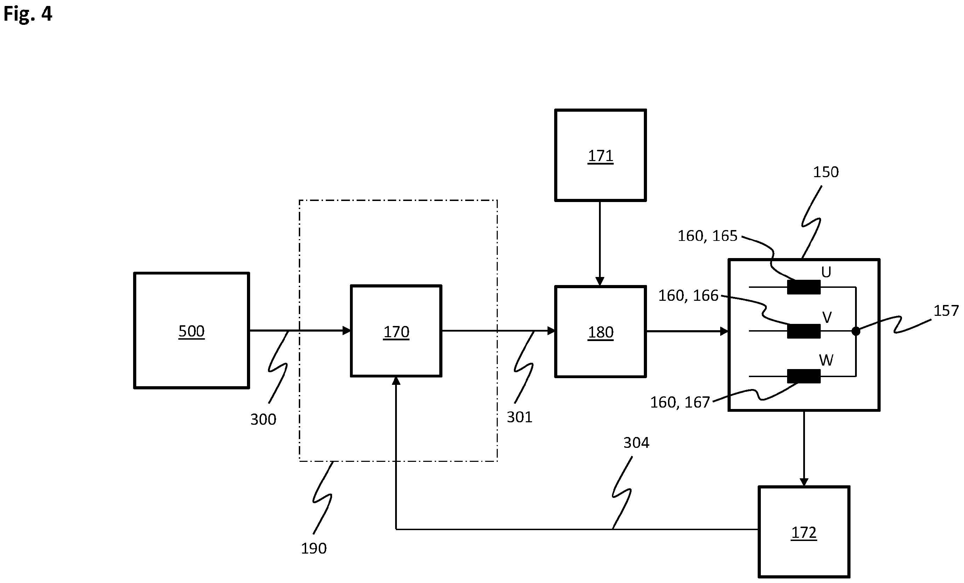

Mehrere entlang der ersten Richtung 12 oder entlang der zweiten Richtung 14 verlaufende Statorleiter 125 der einzelnen Statorsektoren 106 sind jeweils zu unabhängig voneinander bestrombaren dreiphasigen Spulensystemen verschaltet, welche im Folgenden auch als Dreiphasensysteme 150 bezeichnet werden. Ein Dreiphasensystem 150 ist dabei in Form einer Sternschaltung aus drei Spulen 160 verwirklicht (vgl. **Figur 4**). Die Dreiphasensysteme 150 können im Betrieb des Planarantriebssystems 1 mit einem dreiphasigen elektrischen Antriebsstrom beaufschlagt werden. Hierbei können eine erste Phase U, eine zweite Phase V und eine dritte Phase W der Antriebsströme untereinander jeweils einen Phasenversatz von 120° aufweisen.

In einer möglichen Ausgestaltung sind die Statorleiter 125 der Statoreinheit 100 eines Statormoduls 10 zu insgesamt vierundzwanzig Dreiphasensystemen 150 zusammengeschaltet. Die Dreiphasensysteme 150 umfassen dabei zwölf erste Dreiphasensysteme und zwölf zweite Dreiphasensysteme, wobei die zwölf ersten Dreiphasensysteme aus in der zweiten Richtung 14 ausgedehnten Statorleitern 125, und die zwölf zweiten Dreiphasensysteme aus in der ersten Richtung 12 ausgedehnten Statorleitern 125 verwirklicht sind (nicht dargestellt). Hierbei umfasst jeder Statorsektor 106 drei erste Dreiphasensysteme und drei zweite Dreiphasensysteme. Das durch die ersten Dreiphasensysteme erzeugte Magnetfeld kann für eine Bewegung eines Läufers 200 entlang der ersten Richtung 12 sorgen. Das durch die zweiten Dreiphasensysteme erzeugte Magnetfeld kann eine Bewegung eines Läufers 200 entlang der zweiten Richtung 14 bewirken.

Im Betrieb des Planarantriebssystems 1 können die Läufer 200 derart über dem Stator angeordnet sein, dass die in **Figur 3** dargestellte erste Läuferrichtung 206 entlang der ersten Richtung 12 und die zweite Läuferrichtung 208 entlang der zweiten Richtung 14 orientiert ist. Hierbei können die erste Magneteinheit 211 und dritte Magneteinheit 213 der Magneteinrichtung 204 eines Läufers 200 mit dem durch die ersten Dreiphasensysteme erzeugten Magnetfeld wechselwirken, um eine Bewegung des betreffenden Läufers 200 entlang der ersten Richtung 12 hervorzurufen. Die zweite Magneteinheit 212 und vierte Magneteinheit 214 können mit dem durch die zweiten Dreiphasensysteme erzeugten Magnetfeld wechselwirken, um eine Bewegung des Läufers 200 entlang der zweiten Richtung 14 zu bewirken. Alternativ können die Läufer 200 derart ausgerichtet sein, dass die erste Läuferrichtung 206 entlang der zweiten Richtung 14 und die zweite Läuferrichtung 208 entlang der ersten Richtung 12 orientiert ist. Hierbei können die erste Magneteinheit 211 und dritte Magneteinheit 213 eines Läufers 200 mit dem Magnetfeld der zweiten Dreiphasensysteme für einen Antrieb des Läufers 200 in der zweiten Richtung 14, und können die zweite Magneteinheit 212 und vierte Magneteinheit 214 mit dem Magnetfeld der ersten Dreiphasensysteme für einen Antrieb des Läufers 200 in der ersten Richtung 12 zusammenwirken.

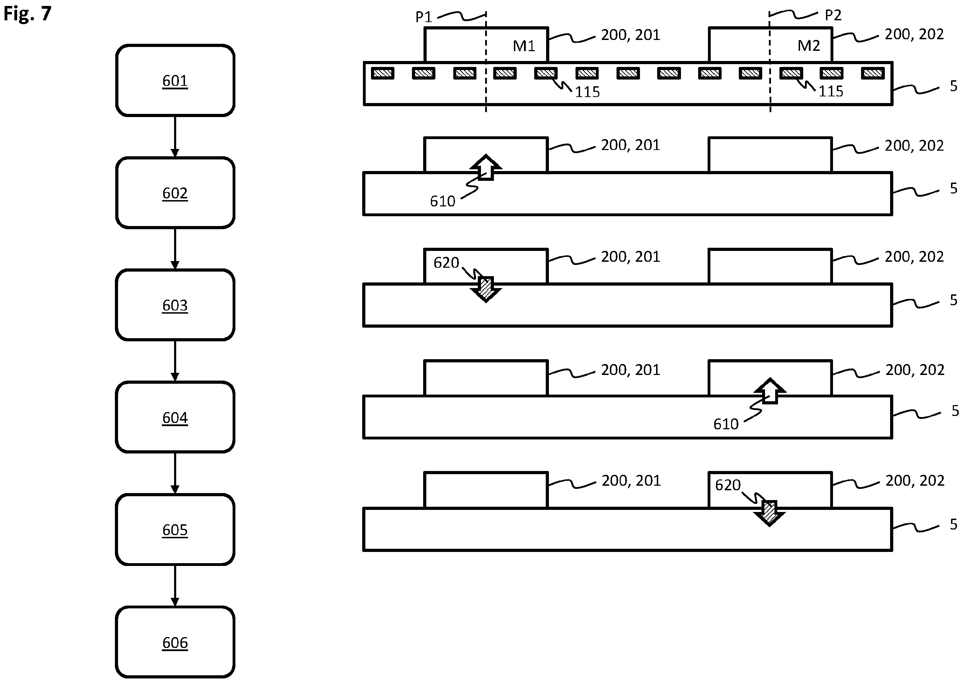

Das Antreiben eines Läufers 200 des Planarantriebssystems 1 erfolgt durch eine geeignete Bestromung von Dreiphasensystemen 150 wenigstens eines Statormoduls 10 des Stators 5. Hierbei kann ein Teil der Dreiphasensysteme 150 von einem oder mehreren benachbarten Statormodulen 10 des Stators 5 zeitgleich elektrisch angesteuert werden. Dies betrifft Dreiphasensysteme 150, welche sich im Bereich des anzutreibenden Läufers 200 befinden. In diesem Zusammenhang wird die aktuelle Position des Läufers 200 berücksichtigt. Zu diesem Zweck kommt ein Positionserfassungssystem zur Anwendung, welches mehrere Magnetfeldsensoren 115 umfasst (vgl. die **Figuren 6** **und** **7**). Unter Verwendung des Positionserfassungssystems können Positionsinformationen der Läufer 200 bereitgestellt werden, wie weiter unten näher erläutert wird.

Die Bestromung von Dreiphasensystemen 150 der Statormodule 10 des Stators 5 erfolgt, wie oben angedeutet wurde, durch eine Stromregelung auf Basis der Pulsweitenmodulation. Zur Veranschaulichung zeigt **Figur 4** ein Blockschaltbild eines Regelkreises zur Stromregelung eines Dreiphasensystems 150 eines Statormoduls 10, wie er bei dem Planarantriebssystem 1 zur Anwendung kommen kann. Der Regelkreis umfasst, neben der Hauptsteuervorrichtung 500 des Planarantriebssystems 1, eine Modulsteuervorrichtung 190, eine Endstufeneinrichtung 180, einen Zwischenkreis 171, ein Dreiphasensystem 150 und eine Strommesseinrichtung 172. Die Modulsteuervorrichtung 190, welche eine Stromregeleinrichtung 170 umfasst, kann in Form eines FPGAs (engl. field programmable gate array) verwirklicht sein. Die Endstufeneinrichtung 180, welche in Form einer nicht dargestellten Treiberschaltung mit drei Halbbrücken ausgebildet sein kann, ist mit dem Zwischenkreis 171 verbunden, so dass die Endstufeneinrichtung 180 mit einer Zwischenkreisspannung versorgt werden kann. Der Zwischenkreis 171, welcher einen Zwischenkreisspeicher umfassen kann, kann auch als Gleichspannungszwischenkreis bezeichnet werden. Das Dreiphasensystem 150 umfasst drei Spulen 160, d.h. eine erste Spule 165, eine zweite Spule 166 und eine dritte Spule 167, welche in einem gemeinsamen Sternpunkt 157 zusammengeschaltet sind. Im Betrieb kann die erste Spule 165 zur Beaufschlagung der ersten Phase U eines dreiphasigen Antriebsstroms dienen, und können die zweite Spule 166 zur Beaufschlagung der zweiten Phase V und die dritte Spule 167 zur Beaufschlagung der dritten Phase W des Antriebsstroms verwendet werden. Die Modulsteuervorrichtung 190, die Endstufeneinrichtung 180, der Zwischenkreis 171, das Dreiphasensystem 150 und die Strommesseinrichtung 172 sind Bestandteile eines Statormoduls 10 des Stators 5 des Planarantriebssystems 1.

Die elektrische Strommesseinrichtung 172 ist zum Erfassen von Iststromwerten 304 des Dreiphasensystems 150 ausgebildet. Dies kann durch periodisches Abtasten zu vorgegebenen Zeitpunkten erfolgen. Bei der Strommessung können lediglich die Ströme von zwei der drei Spulen 160 des Dreiphasensystems 150 abgetastet werden. Denn anhand der in den zwei abgetasteten Spulen 160 fließenden Ströme kann auf den in der nicht abgetasteten Spule 160 fließenden Strom geschlossen werden. Dies liegt an der Sternschaltung der Spulen 160 des Dreiphasensystems 150.

Wie in **Figur 4** dargestellt ist, werden im Betrieb des Planarantriebssystems 1 mit Hilfe der Hauptsteuervorrichtung 500 Sollstromwerte 300 erzeugt und an die Stromregeleinrichtung 170 übermittelt. Des Weiteren werden von der Strommesseinrichtung 172 durch das Abtasten an dem Dreiphasensystem 150 gewonnene Iststromwerte 304 an die Stromregeleinrichtung 170 weitergeleitet. Auf der Grundlage der Sollstromwerte 300 und Iststromwerte 304 werden von der Stromregeleinrichtung 170 pulsweitenmodulierte Steuersignale 301 erzeugt, welche an die Endstufeneinrichtung 180 angelegt werden. Basierend auf den Steuersignalen 301 können mit Hilfe der Endstufeneinrichtung 180 pulsweitenmodulierte Spannungspulse in Höhe der Zwischenkreisspannung an das Dreiphasensystem 150 bzw. dessen Spulen 160 angelegt werden, wodurch in diesen entsprechende Antriebsströme fließen können.

Jedes Statormodul 10 ist ausgebildet, für jedes der zugehörigen Dreiphasensysteme 150 eine eigene, und insofern von anderen Dreiphasensystemen 150 unabhängige Stromregelung entsprechend des in **Figur 4** gezeigten Regelkreises durchzuführen. Daher weist jedes Statormodul 10 für jedes Dreiphasensystem 150 eine Stromregeleinrichtung 170 und eine Endstufeneinrichtung 180 auf. Mit Bezug auf die oben genannte Ausgestaltung jedes Statormoduls 10 mit vierundzwanzig Dreiphasensystemen 150 können pro Statormodul 10 vierundzwanzig Stromregeleinrichtungen 170 vorhanden sein, welche in der zugehörigen Modulsteuervorrichtung 190 des jeweiligen Statormoduls 10 integriert sind, sowie vierundzwanzig Endstufeneinrichtungen 180. Die Endstufeneinrichtungen 180 werden jeweils aus dem Zwischenkreis 171 des betreffenden Statormoduls 10 mit elektrischer Energie versorgt.

Mit Bezug auf die Strommessung besteht ebenfalls die Möglichkeit, für jedes Dreiphasensystem 150 eine Strommesseinrichtung 172 vorzusehen. Alternativ kann jedes Statormodul 10 des Stators 5 mehrere Strommesseinrichtungen 172 aufweisen, welche jeweils mit einer Gruppe aus drei Dreiphasensystemen 150 verbunden, und dadurch jeweils einer solchen Gruppe aus drei Dreiphasensystemen 150 zur Stromabtastung zugeordnet sind (nicht dargestellt). Jedes Statormodul 10 kann dabei acht Strommesseinrichtungen 172 umfassen.

Die Hauptsteuervorrichtung 500 des Planarantriebssystems 1 ist wie oben angegeben in geeigneter Weise mit den Statormodulen 10 des Stators 5 verbunden, um eine Datenkommunikation zwischen der Hauptsteuervorrichtung 500 und den Statormodulen 10 zu ermöglichen. Zum Antreiben eines Läufers 200 kann die Hauptsteuervorrichtung 500 Sollstromwerte 300 an eine oder mehrere Stromregeleinrichtungen 170 eines oder mehrerer Statormodule 10 übermitteln, wodurch die zugehörigen Dreiphasensysteme 150 pulsweitenmoduliert bestromt werden können. Die Hauptsteuervorrichtung 500 berücksichtigt dabei die aktuelle Position des anzutreibenden Läufers 200, welche mit Hilfe des Positionserfassungssystems bereitgestellt werden kann.

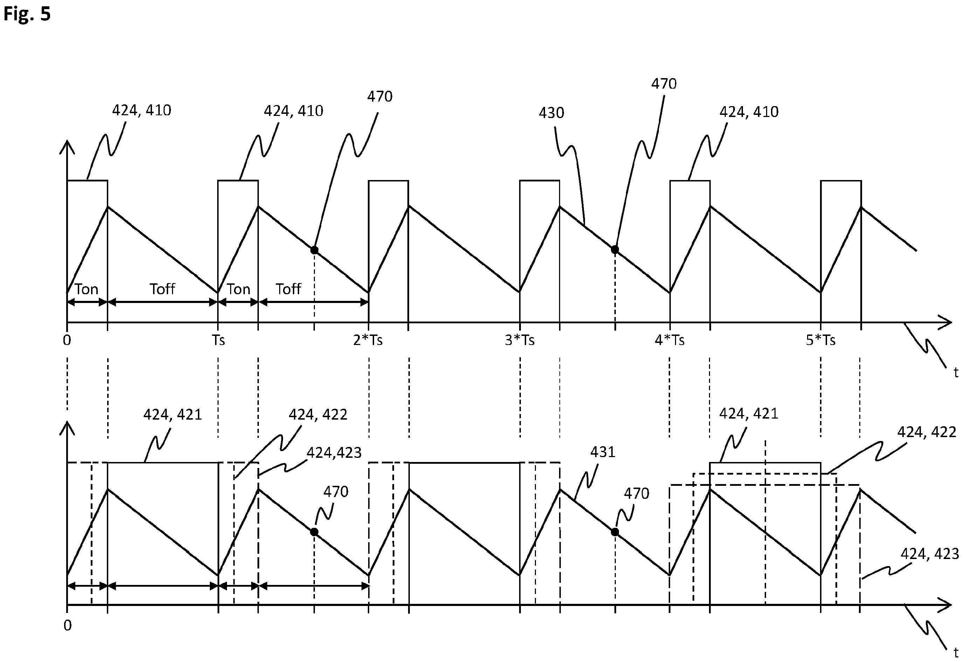

**Figur 5** zeigt mögliche elektrische Spannungs- und Stromverläufe in Abhängigkeit der Zeit t, wie sie bei einer pulsweitenmodulierten elektrischen Ansteuerung von Spulensystemen auftreten können. Das obere Diagramm von **Figur 5** zeigt, zur vereinfachenden Veranschaulichung, Gegebenheiten bei einer Ansteuerung eines nicht dargestellten einphasigen Spulensystems mit lediglich einer Spule 160. Das Spulensystem wird mit einer durch die PWM-Taktfrequenz vorgegebenen elektrischen Ansteuerspannung, und damit mit periodischen Spannungspulsen 424 beaufschlagt. Diese werden mit Bezug auf das einphasige Spulensystem im Folgenden als erste Spannungspulse 410 bezeichnet. Die Spannung weist einen nahezu rechteckförmigen Verlauf mit zwei Spannungsniveaus auf. Ergänzend sind eine Periodendauer Ts der Pulsweitenmodulation, sowie eine Pulsdauer Ton und eine Auszeitdauer Toff dargestellt. Während der Pulsdauer Ton, in welcher das Spulensystem mit der Spannung beaufschlagt wird, liegt jeweils ein erster Spannungspuls 410 vor. Während der Auszeitdauer Toff erfolgt keine Spannungsbeaufschlagung des Spulensystems. Aufgrund einer glättenden Wirkung des Spulensystems folgt der in dem Spulensystem fließende elektrische Strom den ersten Spannungspulsen 410 derart, dass ein dreieckförmiger erster Stromverlauf 430 vorliegt. Sofern die ersten Spannungspulse 410 an dem Spulensystem anliegen, erfolgt eine Vergrößerung des Stroms bzw. Strombetrags, und ansonsten eine Verkleinerung. Auf diese Weise pendelt der Strom mit der Taktfrequenz der Pulsweitenmodulation und damit der Periodendauer Ts um einen Mittelwert hin und her. Der Mittelwert des Stroms ist abhängig von dem Tastgrad, also dem Verhältnis aus der Pulsdauer Ton zu der Periodendauer Ts. Der in dem Spulensystem fließende Strom weist somit einen Wechselstromanteil, den sogenannten Rippelstrom, auf, was mit einem Auftreten eines sich zeitlich ändernden Magnetfelds verbunden ist.

Das untere Diagramm von **Figur 5** zeigt Gegebenheiten bei einer elektrischen Ansteuerung eines dreiphasigen Spulensystems mit drei Spulen 160. Diese Art der Ansteuerung, welche auf einer mittenzentrierten Pulsweitenmodulation (engl. center aligned PWM) basiert, kann bei jedem der Dreiphasensysteme 150 des Planarantriebssystem 1 eingesetzt und mit Hilfe des oben anhand von **Figur 4** beschriebenen Regelkreises verwirklicht werden. Das Dreiphasensystem 150 wird mit drei durch die PWM-Taktfrequenz vorgegebenen Ansteuerspannungen, und damit mit drei periodischen Spannungspulsen 424 mit unterschiedlichen Pulsbreiten bzw. Pulsdauern beaufschlagt. Diese werden mit Bezug auf das Dreiphasensystem 150 im Folgenden als zweite Spannungspulse 421, dritte Spannungspulse 422 und vierte Spannungspulse 423 bezeichnet. Die drei Spannungen weisen nahezu rechteckförmige Verläufe mit zwei Spannungsniveaus auf. Die zweiten Spannungspulse 421 können sich auf die erste Phase U, die dritten Spannungspulse 422 auf die zweite Phase V und die vierten Spannungspulse 423 auf die dritte Phase W eines dreiphasigen Antriebsstroms beziehen. In entsprechender Weise ist es zum Beispiel mit Bezug auf das in **Figur 4** gezeigte Dreiphasensystem 150 möglich, dass die erste Spule 165 mit den zweiten Spannungspulsen 421, die zweite Spule 166 mit den dritten Spannungspulsen 422 und die dritte Spule 167 mit den vierten Spannungspulsen 423 beaufschlagt wird.

Die elektrische Ansteuerung erfolgt derart, dass jeweils ein zweiter Spannungspuls 421, dritter Spannungspuls 422 und vierter Spannungspuls 423 mittig zueinander zentriert sind, und damit die Mitten der jeweiligen Spannungspulse 424 übereinanderliegen. Um diesen Aspekt zu verdeutlichen, sind auf der rechten Seite des unteren Diagramms von **Figur 5** ein zweiter Spannungspuls 421, dritter Spannungspuls 422 und vierter Spannungspuls 423 mit unterschiedlichen Pulshöhen dargestellt. Die Darstellung mit den unterschiedlichen Pulshöhen dient lediglich dazu, die mittenzentrierte Anordnung der zweiten Spannungspulse 421, dritten Spannungspulse 422 und vierten Spannungspulse 423 hervorzuheben. Denn bei der Ansteuerung werden an die Spulen 160 des Dreiphasensystems 150 zweite Spannungspulse 421, dritte Spannungspulse 422 und vierte Spannungspulse 423 mit übereinstimmender Spannungshöhe angelegt, wie es auch bei den übrigen in **Figur 5** gezeigten zweiten Spannungspulsen 421, dritten Spannungspulsen 422 und vierten Spannungspulsen 423 veranschaulicht ist.

In dem unteren Diagramm von **Figur 5** ist ein elektrischer zweiter Stromverlauf 431 dargestellt, wie er bei einer der drei Spulen 160 des mit den zweiten Spannungspulsen 421, dritten Spannungspulsen 422 und vierten Spannungspulsen 423 beaufschlagten Dreiphasensystems 150 auftreten kann. Hierbei kann es sich zum Beispiel um die erste Phase U des dreiphasigen Antriebsstroms und, mit Bezug auf das in **Figur 4** gezeigte Dreiphasensystem 150, um die erste Spule 165 handeln. Auch der zweite Stromverlauf 431 besitzt, aufgrund einer glättenden Wirkung des Spulensystems, eine dreieckförmige Gestalt, und pendelt mit der PWM-Taktfrequenz um einen Mittelwert hin und her. Eine Vergrößerung des Strombetrags erfolgt, wenn sich alle drei Ansteuerspannungen nicht auf dem gleichen (oberen oder unteren) Spannungsniveau befinden. Sofern die drei Spannungen hingegen das gleiche Spannungsniveau besitzen, erfolgt eine Verkleinerung des Strombetrags. Der dabei vorhandene Rippelstrom führt auch hier zu einem Auftreten eines magnetischen Wechselfelds.

Bei den zwei anderen Spulen 160 des Dreiphasensystems 150 liegen zu dem zweiten Stromverlauf 431 korrespondierende, nicht dargestellte dreieckförmige und mit dem Rippelstrom behaftete Stromverläufe vor. Auch hierbei erfolgt jeweils eine Vergrößerung des Strombetrags, wenn sich sämtliche drei Ansteuerspannungen nicht auf dem gleichen Spannungsniveau befinden, und ansonsten eine Verkleinerung des Strombetrags. Wenigstens einer der nicht gezeigten Stromverläufe kann ein zu dem zweiten Stromverlauf 431 inverses Aussehen besitzen, d.h. dass die Stromänderungen mit gegenüber dem zweiten Stromverlauf 431 inversem Vorzeichen stattfinden.

Bei einem bestromten Dreiphasensystem 150 des Planarantriebssystems 1 sind die in den zugehörigen Spulen 160 fließenden Antriebsströme wie vorstehend beschrieben mit einem Rippelstrom überlagert. Das Auftreten des Rippelstroms ist mit einem sich zeitlich ändernden Magnetfeld verbunden. Dieser Effekt kann dazu genutzt werden, um eine elektrische Wechselspannung in der Läuferspule 240 eines Läufers 200 zu induzieren. Gemäß **Figur 5** kann der erste Stromverlauf 430 in dem einphasigen Spulensystem mit dem zweiten Stromverlauf 431 in dem Dreiphasensystem 150 übereinstimmen. Daher kann das obere Diagramm von **Figur 5** als Äquivalenzdarstellung für das Dreiphasensystem 150 dienen, und kann sich der erste Stromverlauf 430 auch auf eine der drei Spulen 160 des Dreiphasensystems 150 beziehen. In diesem Sinne können die ersten Spannungspulse 410 als effektive und eine Vergrößerung des Strombetrags bewirkende Ersatzpulse für die eigentlich an dem Dreiphasensystem 150 anliegenden zweiten Spannungspulse 421, dritten Spannungspulse 422 und vierten Spannungspulse 423 angesehen werden.

**Figur 5** zeigt darüber hinaus Strommesszeitpunkte 470, an welchen die Spulensysteme zum Gewinnen von elektrischen Iststromwerten 304 abgetastet werden können. Das periodische Abtasten erfolgt zeitlich abgestimmt auf die pulsweitenmodulierte periodische Bestromung, und zwar derart, dass sich die Strommesszeitpunkte 470 mittig zwischen aufeinanderfolgenden ersten Spannungspulsen 410 bzw. zweiten Spannungspulsen 421, dritten Spannungspulsen 422 und vierten Spannungspulsen 423 befinden. Hierdurch kann erreicht werden, dass die durch das Abtasten gewonnenen Iststromwerte 304 dem Mittelwert des jeweiligen Stroms entsprechen. Diese Vorgehensweise ermöglicht eine genaue Stromregelung.

Die bei dem Planarantriebssystem 1 gemäß des in **Figur 4** gezeigten Regelkreises durchgeführte Stromregelung kann derart erfolgen, dass zu bestromende Dreiphasensysteme 150 entsprechend **Figur 5** pulsweitenmoduliert angesteuert und dadurch bestromt werden. Hierbei werden durch entsprechende Stromregeleinrichtungen 170 unter Verwendung der von der Hauptsteuervorrichtung 500 vorgegebenen Sollstromwerte 300 und der von einer oder mehreren Strommesseinrichtungen 172 durch Abtasten bereitgestellten Iststromwerte 304 pulsweitenmodulierte Steuersignale 301 erzeugt, welche an die jeweiligen Endstufeneinrichtungen 180 übermittelt werden (vgl. **Figur 4**). Auf diese Weise werden die zu bestromenden Dreiphasensysteme 150 mit Spannungspulsen 424 mit vorgegebenen Tastverhältnissen und Pulsdauern Ton beaufschlagt, so dass diese bestromt werden. Die Mittelwerte der in den Dreiphasensystemen 150 fließenden elektrischen Ströme richten sich nach den von der Hauptsteuervorrichtung 500 vorgegebenen Sollstromwerten 300. Durch eine Änderung der Sollstromwerte 300 kann eine Änderung der Steuersignale 301 und damit der Tastverhältnisse und Pulsdauern der Spannungspulse 424 bewirkt werden, wodurch sich auch die Mittelwerte der Ströme ändern. Im Vergleich zu dem überlagerten Rippelstrom können sich derartige Stromänderungen auf wesentlich größere Zeiträume beziehen. Daher kann die Stromregelung auch als Gleichstromregelung bezeichnet werden.

Im Betrieb des Planarantriebssystems 1 können mehrere Dreiphasensysteme 150 gleichzeitig bestromt werden, um einen oder mehrere Läufer 200 anzutreiben. Dies kann durch die Hauptsteuervorrichtung 500 gesteuert werden, indem die Hauptsteuervorrichtung 500 entsprechende Sollstromwerte 300 für zugehörige Stromregeleinrichtungen 170 ausgibt (vgl. **Figur 4**). Das pulsweitenmodulierte Bestromen von mehreren Dreiphasensystemen 150 kann zeitlich synchron oder im Wesentlichen zeitlich synchron erfolgen. Im Betrieb kann sich ein Läufer 200 im Einflussbereich von mehreren Dreiphasensystemen 150 befinden und dem Einfluss eines resultierenden magnetischen Wechselfelds ausgesetzt sein, welches durch eine Überlagerung mehrerer magnetischer Wechselfelder, jeweils hervorgerufen durch die in den Dreiphasensystemen 150 fließenden Rippelströme, gebildet ist. Die in der zugehörigen Läuferspule 240 induzierte Wechselspannung kann sich dabei nach dem von den mehreren Dreiphasensystemen 150 erzeugten resultierenden magnetischen Wechselfeld richten.

Wie oben angedeutet wurde, sind den Läufern 200 des Planarantriebssystems 1 eigene Läuferkennungen zugeordnet. Des Weiteren ist vorgesehen, hierauf basierend im Betrieb des Planarantriebssystems 1 eine Identifizierung der Läufer 200 vorzunehmen. In diesem Zusammenhang können folgende Ausgestaltungen und Details zur Anwendung kommen.

**Figur 6** zeigt eine schematische Darstellung des Stators 5 und eines Läufers 200 des Planarantriebssystems 1 gemäß einer möglichen Ausgestaltung. Die in **Figur 6** gezeigte Ausgestaltung des Läufers 200 kann auf sämtliche Läufer 200 des Planarantriebssystems 1 zutreffen. Das Planarantriebssystem 1 ist dahingehend ausgebildet, dass Daten von dem Läufer 200 zu der Hauptsteuervorrichtung 500 u.a. per Funk übermittelt werden. Zu diesem Zweck weist der Läufer 200 eine Funksendeeinrichtung 250 auf, und kommt des Weiteren eine Funkempfangseinrichtung 50 zum Einsatz. Wie in **Figur 6** dargestellt ist, kann der Stator 5 die Funkempfangseinrichtung 50 aufweisen. Die Funkempfangseinrichtung 50 kann hierbei an bzw. in einem Statormodul 10 des Stators 5 angeordnet sein. Die Hauptsteuervorrichtung 500 ist, wie oben beschrieben wurde, derart mit den Statormodulen 10 des Stators 5 verbunden, dass eine Datenkommunikation zwischen der Hauptsteuervorrichtung 500 und den Statormodulen 10 möglich ist. Dies gilt in entsprechender Weise für die Funkempfangseinrichtung 50 des Stators 5. Insofern können Daten von der Funksendeeinrichtung 250 des Läufers 200 zu der Funkempfangseinrichtung 50 des Stators 5 übertragen, und daraufhin von der Funkempfangseinrichtung 50 des Stators 5 weiter zu der Hauptsteuervorrichtung 500 übermittelt werden.

**Figur 6** veranschaulicht des Weiteren anhand von gestrichelten Linien eine alternative Ausgestaltung, welche in Bezug auf eine Funkübertragung in Betracht kommen kann. Die verwendete Funkempfangseinrichtung 50 ist hierbei kein Bestandteil des Stators 5, sondern stattdessen eine von dem Stator 5 separate bzw. externe Funkempfangseinrichtung 50, welche sich außerhalb des Stators 5 befinden kann. Die externe Funkempfangseinrichtung 50 ist derart mit der Hauptsteuervorrichtung 500 verbunden, dass eine Datenkommunikation zwischen der Hauptsteuervorrichtung 500 und der Funkempfangseinrichtung 50 möglich ist. Auch in dieser Ausgestaltung können Daten von der Funksendeeinrichtung 250 des Läufers 200 zu der Funkempfangseinrichtung 50 übertragen, und von dieser weiter zu der Hauptsteuervorrichtung 500 übermittelt werden.

Es kann gegebenenfalls ein Weiterverarbeiten bzw. Aufbereiten von Daten erfolgen, bevor diese an die Hauptsteuervorrichtung 500 weitergeleitet werden. Dies kann zum Beispiel mit Hilfe der verwendeten Funkempfangseinrichtung 50, oder mit Hilfe einer nicht dargestellten Einrichtung des Stators 5 durchgeführt werden. Es ist des Weiteren möglich, dass von der jeweiligen Funkempfangseinrichtung 50 empfangene und an die Hauptsteuervorrichtung 500 weitergeleitete Daten zusätzlich oder alternativ durch die Hauptsteuervorrichtung 500 selbst weiterverarbeitet werden.

Im Hinblick auf die Identifizierung des Läufers 200 kommt die Datenübertragung zwischen dem Läufer 200 und dem Stator 5 bzw. der (externen) Funkempfangseinrichtung 50 zum Einsatz, um die dem Läufer 200 zugeordnete Läuferkennung von dem Läufer 200 zu dem Stator 5 bzw. der Funkempfangseinrichtung 50, und hiervon ausgehend weiter zu der Hauptsteuervorrichtung 500 zu übermitteln. **Figur 6** zeigt, dass der Läufer 200 in diesem Zusammenhang eine Speichereinrichtung 281 aufweist, in welcher die Läuferkennung hinterlegt ist. Wie in **Figur 6** angedeutet ist, kann dem Läufer 200 zum Beispiel eine erste Läuferkennung M1 zugeordnet sein, welche in der Speichereinrichtung 281 gespeichert ist. Die Speichereinrichtung 281 kann eine nichtflüchtige Speichereinrichtung wie zum Beispiel ein EPROM-Speicher (engl. erasable programmable read-only memory) sein.

Der in **Figur 6** dargestellte Läufer 200 weist des Weiteren eine Steuereinrichtung 280 auf. Die Steuereinrichtung 280, welche in Form eines Mikrocontrollers verwirklicht sein kann, dient zum Ansteuern der Funksendeeinrichtung 250, und damit zum Steuern der Datenübertragung von dem Läufer 200 zu dem Stator 5 bzw. der Funkempfangseinrichtung 50. Mit Hilfe der Steuereinrichtung 280 kann die Funksendeeinrichtung 250 zum Aussenden und dadurch Übertragen der in der Speichereinrichtung 281 gespeicherten Läuferkennung an die Funkempfangseinrichtung 50 angesteuert werden. Wie in **Figur 6** gezeigt ist, kann die Speichereinrichtung 281 in der Steuereinrichtung 280 integriert, oder alternativ in geeigneter Weise mit der Steuereinrichtung 280 verbunden sein.

Entsprechend der obigen Beschreibung zu **Figur 3** weist der in **Figur 6** gezeigte Läufer 200 ferner eine erste Leiterplatte 230 mit einer Läuferspule 240 auf, in welcher im Betrieb des Stators 5, bedingt durch den in bestromten Statorleitern 125 bzw. in einem oder mehreren Dreiphasensystemen 150 fließenden Rippelstrom und das dadurch erzeugte magnetische Wechselfeld, eine elektrische Wechselspannung induziert werden kann. Darüber hinaus weist der Läufer 200 einen Gleichrichter 260 auf. Mit Hilfe des Gleichrichters 260, welcher mit der Läuferspule 240 elektrisch verbunden ist, und welchem ferner ein Glättungskondensator zugeordnet sein kann (nicht dargestellt in **Figur 6**), kann die induzierte Wechselspannung in eine Gleichspannung umgewandelt werden. Mit der Gleichspannung kann die Steuereinrichtung 280, sowie auch die Funksendeeinrichtung 250 des Läufers 200 elektrisch versorgt werden. Der Läufer 200 kann des Weiteren einen nicht dargestellten Spannungsregler in Form eines Längsreglers oder eines Schaltreglers aufweisen. Ferner kann der Gleichrichter 260 gegebenenfalls als Spannungsverdopplerschaltung ausgeführt sein. Es ist möglich, dass einzelne oder mehrere der vorgenannten Komponenten wie der Gleichrichter 260, die Steuereinrichtung 280 sowie die Funksendeeinrichtung 250 Bestandteile der ersten Leiterplatte 230 des Läufers 200 und/oder auf der ersten Leiterplatte 230 angeordnet sind.

**Figur 6** veranschaulicht des Weiteren das oben erwähnte und zum Erfassen der Positionen der Läufer 200 auf dem Stator 5 verwendete Positionserfassungssystem. Das Positionserfassungssystem umfasst mehrere verteilt angeordnete Magnetfeldsensoren 115, und wenigstens eine Verarbeitungseinrichtung 110. Die Magnetfeldsensoren 115 und die Verarbeitungseinrichtung 110 sind an dem Stator 5 angeordnet und Bestandteile des Stators 5. Die oben beschriebene Datenkommunikation zwischen der Hauptsteuervorrichtung 500 und dem Stator 5 schließt die Verarbeitungseinrichtung 110 mit ein. Die Magnetfeldsensoren 115, von welchen abweichend von der schematischen Darstellung in **Figur 6** eine größere Anzahl vorgesehen sein kann, können zum Beispiel Hallsensoren sein. Mit den Magnetfeldsensoren 115 können die von den Magneteinrichtungen 204 der Läufer 200 (vgl. **Figur 3**) erzeugten Magnetfelder erfasst werden, und kann hierauf basierend auf die Positionen der Läufer 200 geschlossen werden. Im Betrieb des Planarantriebssystem 1 können die Magnetfeldsensoren 115 Sensorsignale erzeugen, welche die Positionen der Läufer 200 wiedergeben. Mit Hilfe der Verarbeitungseinrichtung 110 können Sensorsignale von Magnetfeldsensoren 115 verarbeitet und entsprechende Sensordaten bereitgestellt werden, welche an die Hauptsteuervorrichtung 500 übermittelt werden können. Die empfangenen Sensordaten können durch die Hauptsteuervorrichtung 500 weiterverarbeitet werden. Auf diese Weise können Positionsinformationen der Läufer 200 zur Verfügung gestellt werden. Wie oben beschrieben wurde, werden diese Informationen von der Hauptsteuervorrichtung 500 beim Ansteuern des Stators 5 zum Antreiben der Läufer 200 berücksichtigt.

Mit Bezug auf die oben beschriebene Ausgestaltung des Stators 5 mit mehreren Statormodulen 10 (vgl. **Figur 1**) kann jedes Statormodul 10 mehrere verteilt angeordnete Magnetfeldsensoren 115 aufweisen. Ferner kann jedes Statormodul 10 eine Verarbeitungseinrichtung 110 zum Verarbeiten von Sensorsignalen der Magnetfeldsensoren 115 des jeweils zugehörigen Statormoduls 10, und zum Bereitstellen und Weiterleiten von Sensordaten an die Hauptsteuervorrichtung 500 umfassen.

Die Identifizierung der Läufer 200 des Planarantriebssystems 1 wird dadurch durchgeführt, dass Positionsinformationen der Läufer 200 und die Läuferkennungen der Läufer 200 bereitgestellt werden, was wie oben beschrieben unter Mitwirkung der Hauptsteuervorrichtung 500 erfolgen kann, woraufhin die Hauptsteuervorrichtung 500 eine Verknüpfung der Positionsinformationen mit den Läuferkennungen vornimmt. Dies kann wie im Folgenden beschrieben durchgeführt werden.

In einem möglichen, zum Zwecke der Identifizierung der Läufer 200 des Planarantriebssystems 1 durchgeführten Verfahren werden die aktuellen Positionen der Läufer 200 mit Hilfe des Positionserfassungssystems erfasst, um Positionsinformationen der Läufer 200 bereitzustellen. Ferner werden die Läufer 200 derart aktiviert, dass die Läufer 200 nacheinander ihre jeweilige Läuferkennung an den Stator 5 bzw. an eine (externe) Funkempfangseirichtung 50 übermitteln. Hiervon ausgehend werden die Läuferkennungen, ebenfalls nacheinander, an die Hauptsteuervorrichtung 500 weitergeleitet. Für das Aktivieren der Läufer 200 wird nacheinander mit Hilfe des Stators 5 an denjenigen Positionen, an welchen sich die Läufer 200 befinden, ein die Läufer 200 zum Übermitteln der Läuferkennung aktivierendes magnetisches Wechselfeld erzeugt und dadurch eine Wechselspannung in der Läuferspule 240 der Läufer 200 induziert. Das Erzeugen des aktivierenden magnetischen Wechselfelds erfolgt durch eine geeignete Bestromung von Statorleitern 125 bzw. Dreiphasensystemen 150 des Stators 5 an den Positionen der Läufer 200, was mit Hilfe der Hauptsteuervorrichtung 500, unter Verwendung der Positionsinformationen der Läufer 200, durch entsprechendes Ansteuern des Stators 5 durchgeführt wird. Die auf diese Weise nacheinander zur Verfügung gestellten Läuferkennungen können durch die Hauptsteuervorrichtung 500 eindeutig und zuverlässig mit den Positionsinformationen der Läufer 200 verknüpft werden.

Gemäß der in **Figur 6** gezeigten Ausgestaltung weisen die Läufer 200 eine Steuereinrichtung 280 auf. Die Steuereinrichtung 280 kann durch die in der Läuferspule 240 des zugehörigen Läufers 200 induzierte Wechselspannung, und die hieraus durch das Gleichrichten bereitgestellte Gleichspannung mit elektrischer Energie versorgt werden.

Durch das in dem Identifizierungsverfahren erfolgte Erzeugen des aktivierenden magnetischen Wechselfelds an den Positionen der Läufer 200 kann daher jeweils die Energieversorgung der Steuereinrichtung 280 der Läufer 200 eingeleitet werden. In diesem Zusammenhang kann die Steuereinrichtung 280 jedes Läufers 200 dazu ausgebildet sein, das Übermitteln der Läuferkennung, was gemäß **Figur 6** durch entsprechendes Ansteuern der Funksendeeinrichtung 250 des jeweiligen Läufers 200 erfolgt, zu veranlassen, sobald die Energieversorgung aufgrund der Spannungsinduktion in der Läuferspule 240 beginnt.

Indem das Erzeugen des aktivierenden magnetischen Wechselfelds in aufeinanderfolgender Weise an den Positionen der Läufer 200 durchgeführt wird, kann auch die Energieversorgung der Steuereinrichtungen 280 der Läufer 200 in aufeinanderfolgender Weise eingeleitet werden. In entsprechender Weise können die Steuereinrichtungen 280 nacheinander das Übermitteln der Läuferkennungen mittels Funkübertragung an den Stator 5 bzw. an die Funkempfangseinrichtung 50 initiieren, wodurch diese nacheinander zu der Hauptsteuervorrichtung 500 weitergeleitet werden können. Die dadurch nacheinander zu der Hauptsteuervorrichtung 500 gelangenden Läuferkennungen kann die Hauptsteuervorrichtung 500 eindeutig mit den Positionsinformationen der Läufer 200 in Verbindung bringen.

Zur weiteren Veranschaulichung des vorstehend beschriebenen Identifizierungsverfahrens zeigt **Figur 7** einen entsprechend durchgeführten Verfahrensablauf. Der gezeigte Verfahrensablauf bezieht sich auf eine Ausgestaltung des Planarantriebssystems 1 mit zwei Läufern 200, wie sie auch in **Figur 1** dargestellt ist. Zur Unterscheidung werden die beiden Läufer 200 im Folgenden auch als erster Läufer 201 und zweiter Läufer 202 bezeichnet. Dem ersten Läufer 201 ist eine erste Läuferkennung M1, und dem zweiten Läufer 202 ist eine zweite Läuferkennung M2 zugeordnet. Die erste Läuferkennung M1 und zweite Läuferkennung M2 sind in der Speichereinrichtung 281 (vgl. **Figur 6**) des jeweiligen ersten Läufers 201 und zweiten Läufers 202 hinterlegt.

Wie in **Figur 7** gezeigt ist, werden in einem ersten Schritt 601 die lateralen Positionen des ersten Läufers 201 und zweiten Läufers 202 auf dem Stator 5 erfasst. Der erste Läufer 201 befindet sich an einer ersten Position P1, und der zweite Läufer 202 befindet sich an einer zweiten Position P2. Die Positionserfassung wird mit Hilfe des die Magnetfeldsensoren 115 umfassenden Positionserfassungssystems des Stators 5 durchgeführt. Auf diese Weise werden Informationen über die aktuelle erste Position P1 und die aktuelle zweite Position P2 des ersten Läufers 201 und zweiten Läufers 202 zur Verfügung gestellt.

Gemäß **Figur 7** erfolgt in einem nachfolgenden und zur Aktivierung dienenden zweiten Schritt 602 ein durch die Hauptsteuervorrichtung 500 (durch Ausgeben von Sollstromwerten 300, vgl. **Figur 4**) veranlasstes Bestromen von Statorleitern 125 bzw. Dreiphasensystemen 150 des Stators 5 an der ersten Position P1 des ersten Läufers 201. Dies führt, wie in **Figur 7** anhand eines ersten Pfeils 610 angedeutet ist, zu einer induktiven Übertragung von Energie von dem Stator 5 zu dem ersten Läufer 201. Hiermit verbunden ist ein Einleiten der Energieversorgung der Steuereinrichtung 280 (vgl. **Figur 6**) des ersten Läufers 201. Dies hat gemäß **Figur 7** zur Folge, dass in einem dritten Schritt 603 ein durch die Steuereinrichtung 280 des ersten Läufers 201 veranlasstes Übermitteln der ersten Läuferkennung M1 (zweiter Pfeil 620) des ersten Läufers 201 an den Stator 5 bzw. an die Funkempfangseinrichtung 50 erfolgt (gemäß **Figur 6** per Funkübertragung), welche daraufhin von dem Stator 5 bzw. der Funkempfangseinrichtung 50 an die Hauptsteuervorrichtung 500 weitergeleitet wird.

In entsprechender Weise erfolgt gemäß **Figur 7** in einem anschließenden und zur Aktivierung eingesetzten vierten Schritt 604 ein durch die Hauptsteuervorrichtung 500 veranlasstes Bestromen von Statorleitern 125 bzw. Dreiphasensystemen 150 an der zweiten Position P2 des zweiten Läufers 202, wodurch es zu einer induktiven Energieübertragung von dem Stator 5 zu dem zweiten Läufer 202 (erster Pfeil 610) kommt. Dies ist verbunden mit einem Einleiten der Energieversorgung der Steuereinrichtung 280 (vgl. **Figur 6**) des zweiten Läufers 202. Dies führt gemäß **Figur 7** dazu, dass in einem fünften Schritt 605 ein durch die Steuereinrichtung 280 des zweiten Läufers 202 initiiertes Übertragen der zweiten Läufererkennung M2 (zweiter Pfeil 620) des zweiten Läufers 202 an den Stator 5 bzw. an die Funkempfangseinrichtung 50 erfolgt (gemäß **Figur 6** per Funkübertragung), welche daraufhin von dem Stator 5 bzw. der Funkempfangseinrichtung 50 an die Hauptsteuervorrichtung 500 übermittelt wird.

In einem nachfolgenden sechsten Schritt 606 des in **Figur 7** gezeigten Verfahrensablaufs werden die Positionsinformationen, also Informationen zu der ersten Position P1 und zweiten Position P2, und die erste Läuferkennung M1 und zweite Läuferkennung M2 des ersten Läufers 201 und zweiten Läufers 202 durch die Hauptsteuervorrichtung 500 miteinander verknüpft. Hierbei werden jeweils Informationen zu der ersten Position P1 mit der ersten Läuferkennung M1, und Informationen zu der zweiten Position P2 mit der zweiten Läuferkennung M2 in Verbindung gebracht bzw. einander zugeordnet. Auf diese Weise können der erste Läufer 201 und zweite Läufer 202 durch die Hauptsteuervorrichtung 500 eindeutig identifiziert und voneinander unterschieden werden.

Mit Bezug auf das vorstehend beschriebene Verfahren ist es möglich, das Bestromen von Dreiphasensystemen 150 des Stators 5 an den Positionen der Läufer 200 zum Aktivieren derselben zum Übertragen der Läuferkennungen (zweiter Schritt 602 und vierter Schritt 604 in **Figur 7**) derart durchzuführen, dass die Läufer 200 ortsfest auf dem Stator 5 gehalten werden. Es ist zum Beispiel möglich, dass die Läufer 200 aufgrund der hierbei von dem Stator 5 erzeugten Magnetfelder aktiv an den Stator 5 herangezogen werden. Auf diese Weise können die Läufer 200 im Rahmen der Identifizierung zuverlässig auf dem Stator 5 fixiert werden.

Ferner besteht die Möglichkeit, dass die Bestromung von Dreiphasensystemen 150 an den Positionen der Läufer 200 und damit die Energieversorgung der Läufer 200 nach der Aktivierung der Läufer 200 zum Übertragen der Läuferkennungen (zweiter Schritt 602 und vierter Schritt 604 in **Figur 7**) nicht beendet, sondern stattdessen aufrechterhalten bleibt, indem die Dreiphasensysteme 150 an diesen Stellen weiterhin bestromt werden. Auch können die Läufer 200 nachfolgend, durch entsprechendes Bestromen von Dreiphasensystemen 150 des Stators 5, bewegt bzw. von den vorherigen ortsfesten Positionen wegbewegt werden.

Es wird ferner darauf hingewiesen, dass die Positionserfassung der Läufer 200 nicht nur, wie in **Figur 7** anhand des ersten Schritts 601 dargestellt ist, einmalig bzw. am Anfang des Verfahrensablaufs erfolgen kann, sondern stattdessen mehrfach bzw. kontinuierlich im Betrieb des Planarantriebssystems 1 durchgeführt werden kann. Auch kann das Verknüpfen von Positionsinformationen der Läufer 200 und Läuferkennungen, wie in **Figur 7** anhand des sechsten Schritts 606 dargestellt ist, nicht lediglich am Ende des Identifizierungsverfahrens durch die Hauptsteuervorrichtung 500 durchgeführt werden. Das Verknüpfen von Positionsinformationen mit einer Läuferkennung kann jeweils nach Erhalt bzw. Bereitstellen der Läuferkennung erfolgen. Sofern abweichend von **Figur 7** (und auch **Figur 1**) eine größere Anzahl an Läufern 200 bei dem Planarantriebssystem 1 zur Anwendung kommt, werden in entsprechender Weise eine größere Anzahl an Aktivierungsschritten (zweiter Schritt 602 und vierter Schritt 604 in **Figur 7**) und Schritten zur Übertragung der Läuferkennung (dritter Schritt 603 und fünfter Schritt 605 in **Figur 7**) durchgeführt.

Das Identifizieren der Läufer 200 des Planarantriebssystems 1 kann bei jedem Systemstart bzw. Systemneustart des Planarantriebssystems 1 erfolgen. Auf diese Weise kann zu Beginn des jeweiligen Betriebs des Planarantriebssystems 1 eine eindeutige Zuordnung und Erkennung der Läufer 200 durchgeführt werden. Dadurch kann zum Beispiel für den Fall, dass ein oder mehrere Läufer 200 in einem ausgeschalteten Zustand des Planarantriebssystems 1, oder während eines Stromausfalls, bewegt oder vertauscht werden, eine unsachgemäße oder fehlerhafte Betriebsweise des Planarantriebssystems 1 vermieden werden.

Im Anschluss an das Identifizieren der Läufer 200 kann mit Hilfe der Hauptsteuervorrichtung 500 der weitere Betrieb des Planarantriebssystems 1 vollzogen werden, indem einzelne, mehrere oder sämtliche Läufer 200 durch entsprechendes Ansteuern des Stators 5 durch die Hauptsteuervorrichtung 500 angetrieben bzw. bewegt werden. Da die Läufer 200 identifiziert sind, kann der Betrieb des Planarantriebssystems 1 mit einer hohen Zuverlässigkeit und Genauigkeit erfolgen.

In diesem Zusammenhang besteht ferner die Möglichkeit, dass die Hauptsteuervorrichtung 500 das Ansteuern des Stators 5 zum Antreiben wenigstens eines Läufers 200 auf der Grundlage eines individualisierten, und auf den Läufer 200 abgestimmten Parametersatzes durchführt. Möglich ist auch, das Antreiben von mehreren oder sämtlichen Läufern 200 des Planarantriebssystems 1 auf der Grundlage von den Läufern 200 zugehörigen individualisierten Parametersätzen durchzuführen. Auf diese Weise kann das Antreiben des bzw. der betreffenden Läufer(s) 200 mit einer hohen Genauigkeit erfolgen. Die individualisierten Parametersätze können den Läuferkennungen, und damit den Läufern 200 zugeordnet sein. Das Identifizieren von Läufern 200 ermöglicht es der Hauptsteuervorrichtung 500 hierbei, einem identifizierten Läufer 200 dessen zugehörigen Parametersatz zuzuordnen, und dadurch basierend auf dem Parametersatz das Ansteuern des Stators 5 zum Antreiben des Läufers 200 vorzunehmen. Weitere Details hierzu werden weiter unten näher erläutert.

Im Folgenden werden weitere mögliche Varianten und Ausgestaltungen beschrieben, welche in Bezug auf das Planarantriebssystem 1 und das Identifizierungsverfahren in Betracht kommen können. Übereinstimmende Merkmale und Details sowie gleiche und gleich wirkende Komponenten werden im Folgenden nicht erneut detailliert beschrieben. Für Details hierzu wird stattdessen auf die obige Beschreibung Bezug genommen. Ferner können Aspekte und Details, welche in Bezug auf eine Ausgestaltung genannt werden, auch in Bezug auf eine andere Ausgestaltung zur Anwendung kommen und können Merkmale von zwei oder mehreren Ausgestaltungen miteinander kombiniert werden.

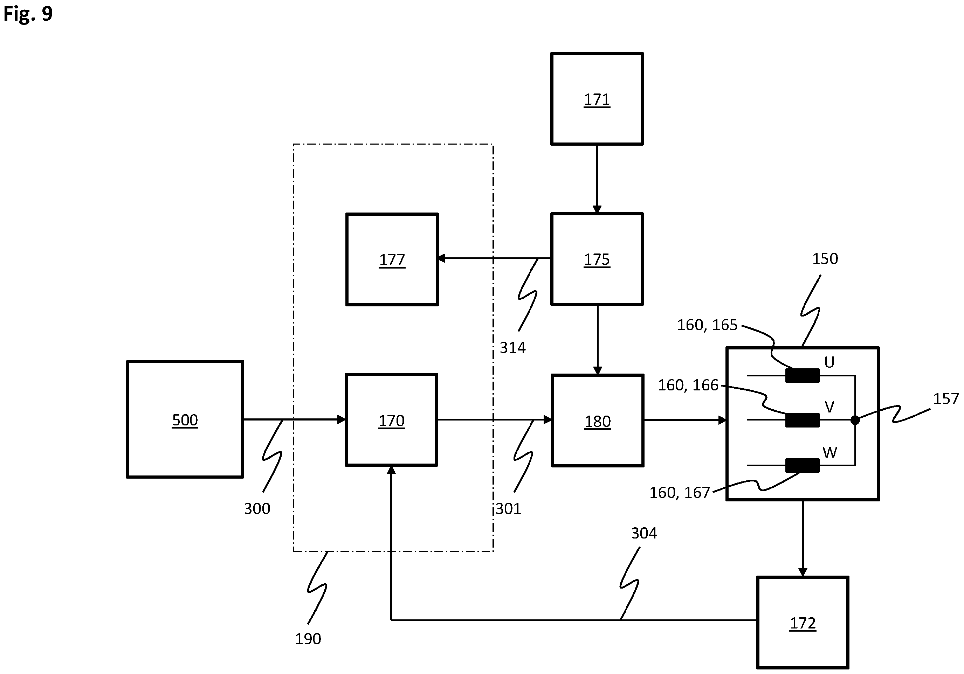

Eine Datenübertragung zum Übermitteln der Läuferkennungen der Läufer 200 kann nicht nur über Funk, sondern auch auf andere Art und Weise verwirklicht sein. Möglich ist zum Beispiel die Anwendung einer Lastmodulation. In diesem Zusammenhang können die Läufer 200 zum zeitweisen elektrischen Belasten der zugehörigen Läuferspule 240 ausgebildet sein. Durch das Belasten der Läuferspule 240 eines Läufers 200 kann aus dem durch die pulsweitenmodulierte Bestromung von Dreiphasensystemen 150 des Stators 5 erzeugten magnetischen Wechselfeld Energie entzogen bzw. in verstärkter Form entzogen werden. Hiermit verbunden ist eine Erhöhung der Stromentnahme von bestromten Dreiphasensystemen 150 des Stators 5. Durch intermittierendes bzw. pulsförmiges Belasten der Läuferspule 240 kann eine intermittierend bzw. pulsförmig auftretende erhöhte Stromaufnahme bei dem Stator 5 hervorgerufen, und können hierauf basierend Datensignale von dem Läufer 200 zu dem Stator 5 übertragen werden. Durch Erfassen der erhöhten Stromaufnahme, was im Rahmen eines Messens eines Summenstroms 314 (vgl. **Figur 9**) von bestromten Dreiphasensystemen 150 erfolgen kann, und durch Durchführen einer Auswertung, kann auf die von dem Läufer 200 erzeugten Datensignale geschlossen werden.

Zur Veranschaulichung zeigt **Figur 8** anhand einer Schaltungsanordnung eine mögliche Ausgestaltung eines Läufers 200. Die in **Figur 8** gezeigte Ausgestaltung kann auf sämtliche Läufer 200 des Planarantriebssystems 1 zutreffen. Der Läufer 200 weist wie oben beschrieben eine Läuferspule 240 auf, in welcher aufgrund der pulsweitenmodulierten Bestromung von Dreiphasensystemen 150 des Stators 5 und dem hiermit verbundenen Hervorrufen eines magnetischen Wechselfelds eine elektrische Wechselspannung induziert werden kann. Die Läuferspule 240 kann in einer ersten Leiterplatte 230 integriert sein (vgl. **Figur 3**). Weitere Bestandteile des in **Figur 8** gezeigten Läufers 200 sind ein mit der Läuferspule 240 verbundener Gleichrichter 260 und ein mit dem Gleichrichter 260 verbundener Glättungskondensator 266. Der Gleichrichter 260, welcher vorliegend in Form eines Brückengleichrichters verwirklicht ist, umfasst eine erste Diode 261, eine zweite Diode 262, eine dritte Diode 263 und eine vierte Diode 264. Mit Hilfe des Gleichrichters 260 kann die in der Läuferspule 240 induzierte Wechselspannung in eine Gleichspannung umgewandelt werden. Der Glättungskondensator 266 dient zum Glätten der Gleichspannung.

Die mit Hilfe des Gleichrichters 260 und des Glättungskondensators 266 erzeugte geglättete Gleichspannung kann gemäß der in **Figur 8** dargestellten Schaltungsanordnung zwischen einem ersten Anschluss 286 und einem zweiten Anschluss 287 anliegen, welche mit dem Gleichrichter 260 und dem Glättungskondensator 266 verbunden sind. Der erste Anschluss 286 kann ein Masseanschluss sein. Die Gleichspannung kann zur Energieversorgung wenigstens einer weiteren Einrichtung dienen.

Gemäß der in **Figur 8** gezeigten Ausgestaltung ist der Läufer 200 ausgebildet, für das Durchführen der Lastmodulation durch zeitweises elektrisches Belasten der Läuferspule 240 einen Spulenteil der Läuferspule 240 kurzzuschließen. Hierdurch kann erreicht werden, dass während des Belastens die in der Läuferspule 240 induzierte Wechselspannung nur zu einem Teil einbricht, und dadurch eine induktive Energieübertragung von dem Stator 5 zu dem Läufer 200 aufrechterhalten bleibt.

Wie in **Figur 8** gezeigt ist, umfasst die Läuferspule 240 einen ersten Spulenteil 248 und einen zweiten Spulenteil 249, wobei der zweite Spulenteil 249 für das zeitweise Kurzschließen eingesetzt wird. Der Läufer 200 weist ferner einen mit der Läuferspule 240 verbundenen Lastwiderstand 272, und eine mit dem Lastwiderstand 272 und mit dem ersten Anschluss 286 verbundene Schalteinrichtung 271 auf. Die Schalteinrichtung 271 kann in Form eines Transistors verwirklicht sein. Durch Schließen der Schalteinrichtung 271 kann der zweite Spulenteil 249 der Läuferspule 240 über den Lastwiderstand 272 kurzgeschlossen werden. Gemäß **Figur 8** wird der zweite Spulenteil 249 bzw. werden dessen Enden hierbei mit dem als Masseanschluss dienenden ersten Anschluss 286 verbunden. Das Kurzschließen des zweiten Spulenteils 249 ist mit Effekten wie einer Impedanzänderung und einem Auftreten eines Wirbelstroms verbunden, so dass wie oben beschrieben eine verstärkte Energieentnahme aus dem magnetischen Wechselfeld des Stators 5 und damit ein erhöhter Stromverbrauch von bestromten Dreiphasensystemen 150 des Stators 5 bewirkt werden kann. Durch Öffnen der Schalteinrichtung 271 kann der Kurzschluss des zweiten Spulenteils 249 wieder aufgehoben, und kann insofern das Vorliegen des erhöhten Stromverbrauchs bei dem Stator 5 wieder beendet werden.

Wie in **Figur 8** gezeigt ist, weist der Läufer 200 des Weiteren eine mit der Schalteinrichtung 271 verbundene Steuereinrichtung 280 auf. Die Steuereinrichtung 280, welche in Form eines Mikrocontrollers verwirklicht sein kann, dient zum Ansteuern der Schalteinrichtung 271, und damit zum Steuern der Datenübertragung von dem Läufer 200 zu dem Stator 5. Die Steuereinrichtung 280 kann über die durch den Gleichrichter 260 bereitgestellte Gleichspannung mit elektrischer Energie versorgt werden (nicht dargestellt). Mit Hilfe der Steuereinrichtung 280 kann die Schalteinrichtung 271 derart periodisch bzw. pulsförmig zum Kurzschließen des zweiten Spulenteils 249 der Läuferspule 240 angesteuert werden, dass entsprechende Datensignale von dem Läufer 200 erzeugt und zu dem Stator 5 übertragen werden. Der in **Figur 8** dargestellte Läufer 200 weist ferner, entsprechend **Figur 6****,** eine Speichereinrichtung 281 auf, in welcher die dem Läufer 200 zugehörige Läuferkennung (zum Beispiel wie gezeigt die erste Läuferkennung M1) hinterlegt ist. Die Speichereinrichtung 281 kann Bestandteil der Steuereinrichtung 280 oder in geeigneter Weise mit der Steuereinrichtung 280 verbunden sein.

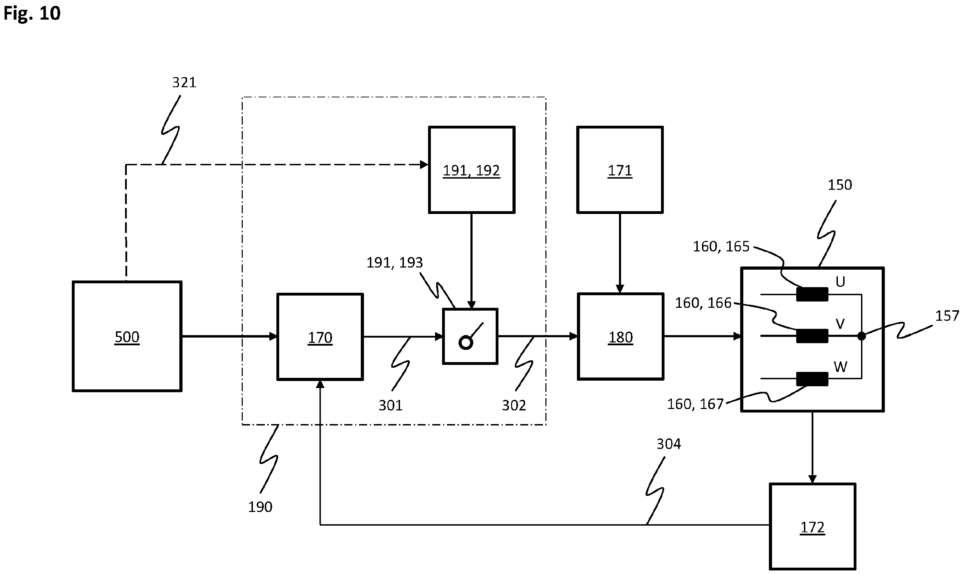

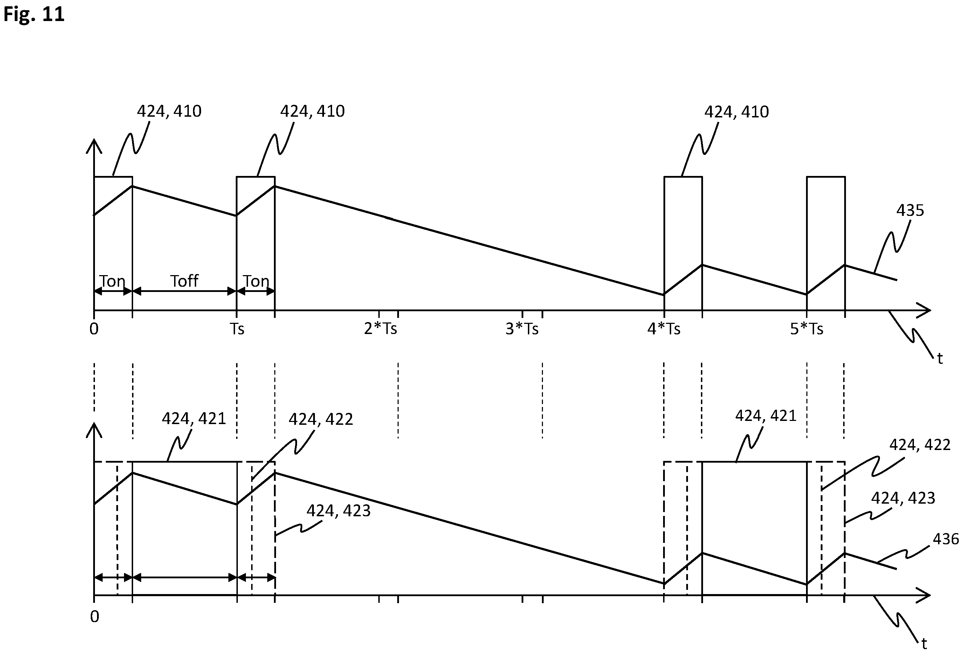

Wie in **Figur 8** gezeigt ist, kann der Läufer 200 darüber hinaus eine mit der Läuferspule 240 verbundene Spannungsmesseinrichtung 283 aufweisen. Mit Hilfe der Spannungsmesseinrichtung 283 kann die in der Läuferspule 240 induzierte Wechselspannung gemessen, und können entsprechende Messsignale an die Steuereinrichtung 280 übermittelt werden. Diese Ausgestaltung kann im Hinblick auf eine Datenübertragung von dem Stator 5 zu den Läufern 200 eingesetzt werden, wie weiter unten anhand der **Figuren 10** **und** **11** näher erläutert wird. Mit Bezug auf die in **Figur 8** gezeigte Schaltungsanordnung besteht die Möglichkeit, dass hier gezeigte Läuferkomponenten wie der Gleichrichter 260, der Glättungskondensator 266, der Lastwiderstand 272, die Schalteinrichtung 271, die Steuereinrichtung 280 und die Spannungsmesseinrichtung 283 Bestandteile der ersten Leiterplatte 230 (vgl. **Figur 3**) des betreffenden Läufers 200 und/oder auf der ersten Leiterplatte 230 angeordnet sind.

Für den Stator 5 des Planarantriebssystems 1 kann im Hinblick auf die Datenübertragung von den Läufern 200 zu dem Stator 5 mittels Lastmodulation die im Folgenden erläuterte Ausgestaltung zur Anwendung kommen, um die durch das Belasten einer Läuferspule 240 eines Läufers 200 hervorgerufene erhöhte Stromaufnahme von bestromten Dreiphasensystemen 150 erfassen und auswerten zu können.

**Figur 9** zeigt ein Blockschaltbild eines weiteren Regelkreises zur Stromregelung eines Dreiphasensystems 150 eines Statormoduls 10, wie er bei dem Planarantriebssystem 1 vorgesehen sein kann. Der Regelkreis basiert auf dem in **Figur 4** gezeigten Regelkreis und umfasst, neben der Hauptsteuervorrichtung 500 des Planarantriebssystems 1, oben erläuterte Komponenten wie eine Modulsteuervorrichtung 190, eine Stromregeleinrichtung 170, eine Endstufeneinrichtung 180, einen Zwischenkreis 171, ein Dreiphasensystem 150 und eine Strommesseinrichtung 172. Im Hinblick auf Details zu diesen Komponenten wird auf die obige Beschreibung zu **Figur 4** Bezug genommen. Gemäß **Figur 9** kommen des Weiteren eine Summenstrommesseinrichtung 175 und eine Auswerteeinrichtung 177 zum Einsatz. Die Summenstrommesseinrichtung 175 und die Auswerteeinrichtung 177 sind Bestandteile des Stators 5 bzw. eines Statormoduls 10 desselben. Jedes Statormodul 10 weist jeweils eine Summenstrommesseinrichtung 175 und eine Auswerteeinrichtung 177 auf.

Wie in **Figur 9** gezeigt ist, befindet sich die Summenstrommesseinrichtung 175 zwischen dem Zwischenkreis 171 und der Endstufeneinrichtung 180. Hinsichtlich der oben beschriebenen Ausgestaltung eines Statormoduls 10 mit einem Zwischenkreis 171 und mehreren (d.h. vierundzwanzig) Endstufeneinrichtungen 180 ist die Summenstrommesseinrichtung 175 zwischen dem Zwischenkreis 171 und sämtlichen Endstufeneinrichtungen 180 des betreffenden Statormoduls 10 angeordnet, und mit dem Zwischenkreis 171 und den Endstufeneinrichtungen 180 verbunden. Wie oben beschrieben wurde, werden die Endstufeneinrichtungen 180 und damit die Dreiphasensysteme 150 aus dem Zwischenkreis 171 des Statormoduls 10 mit elektrischer Energie versorgt. Mit Hilfe der Summenstrommesseinrichtung 175 kann infolgedessen der Summenstrom 314 von bestromten Dreiphasensystemen 150 des Statormoduls 10 gemessen werden. Wie ebenfalls oben beschrieben wurde, können mehrere Dreiphasensysteme 150 gleichzeitig bestromt werden. Insofern kann sich der Summenstrom 314 auf den Stromverbrauch der mehreren gleichzeitig bestromten Dreiphasensysteme 150 innerhalb des betreffenden Statormoduls 10 beziehen.

Die Summenstrommesseinrichtung 175 ist des Weiteren, wie in **Figur 9** dargestellt ist, mit der Auswerteeinrichtung 177 verbunden. Die Auswerteeinrichtung 177 ist ausgebildet zum Verarbeiten und Auswerten des mit Hilfe der Summenstrommesseinrichtung 175 gemessenen Summenstroms 314. Im Rahmen der Auswertung können Auswertesignale bzw. Auswertedaten durch die Auswerteeinrichtung 177 bereitgestellt werden, welche die von einem Läufer 200 durch zeitweises Belasten der Läuferspule 240 erzeugten Datensignale wiedergeben. Die Auswerteeinrichtung 177 kann Bestandteil der Modulsteuervorrichtung 190 des betreffenden Statormoduls 10 sein. Es ist möglich, zwischen der Summenstrommesseinrichtung 175 und der Auswerteeinrichtung 177 zusätzlich einen nicht dargestellten Filter bzw. Bandpassfilter vorzusehen, mit dessen Hilfe ein Herausfiltern von Störgrößen erfolgen kann.

Die Hauptsteuervorrichtung 500 ist, wie oben beschrieben wurde, derart mit den Statormodulen 10 des Stators 5 verbunden, dass eine Datenkommunikation zwischen der Hauptsteuervorrichtung 500 und den Statormodulen 10 möglich ist (vgl. **Figur 1**). Dies schließt die Auswerteeinrichtungen 177 der Statormodule 10 mit ein. Infolgedessen können Daten von einem Läufer 200 durch zeitweises Belasten der Läuferspule 240 an den Stator 5 und von diesem weiter an die Hauptsteuervorrichtung 500 übermittelt werden, indem entsprechende Auswertedaten von einer oder mehreren Auswerteeinrichtungen 177 des Stators 5 an die Hauptsteuervorrichtung 500 weitergeleitet werden. Die Auswertedaten können durch die Hauptsteuervorrichtung 500 weiterverarbeitet werden. Auf diese Weise können die von dem betreffenden Läufer 200 erzeugten Datensignale ermittelt werden.

Für das Übermitteln der in der Speichereinrichtung 281 gespeicherten Läuferkennung eines Läufers 200 (vgl. **Figur 8**) an den Stator 5 kann das zeitweise Belasten der Läuferspule 240 derart erfolgen, dass die hierdurch bei dem Stator 5 zeitweise bewirkte erhöhte Stromaufnahme in einer die Läuferkennung wiedergebenden Weise moduliert ist. Dies kann durch die zugehörige Steuereinrichtung 280 des Läufers 200 gesteuert werden, indem die Steuereinrichtung 280 die Schalteinrichtung 271 des Läufers 200 in einer auf die Läuferkennung abgestimmten Weise periodisch bzw. pulsförmig zum Kurzschließen des zweiten Spulenteils 249 ansteuert (vgl. **Figur 8**). Durch Messen des Summenstroms 314 von bestromten Dreiphasensystemen 150 des Stators 5 und Auswerten desselben mit Hilfe von einer oder mehreren Summenstrommesseinrichtungen 175 und einer oder mehreren Auswerteeinrichtungen 177 des Stators 5 (vgl. **Figur 9**) können die Läuferkennung wiedergebende Auswertedaten erzeugt werden, welche an die Hauptsteuervorrichtung 500 übermittelt werden, und welche durch die Hauptsteuervorrichtung 500 weiterverarbeitet werden können. Auf diese Weise kann die Läuferkennung zur Verfügung gestellt werden.

In dem oben erläuterten und in **Figur 7** veranschaulichten Identifizierungsverfahren ist vorgesehen, neben dem Bereitstellen von Positionsinformationen der Läufer 200 die Läufer 200 derart zu aktivieren, dass die Läufer 200 nacheinander ihre jeweilige Läuferkennung übermitteln. Für das Aktivieren der Läufer 200 wird nacheinander mit Hilfe des Stators 5 an denjenigen Positionen, an welchen sich die Läufer 200 befinden, ein die Läufer 200 zum Übermitteln der Läuferkennung aktivierendes magnetisches Wechselfeld erzeugt und dadurch eine Wechselspannung in der Läuferspule 240 der Läufer 200 induziert.

Gemäß der in **Figur 8** gezeigten Ausgestaltung weisen die Läufer 200 eine Steuereinrichtung 280 auf, welche durch die in der Läuferspule 240 induzierte Wechselspannung, und die hieraus erzeugte Gleichspannung mit elektrischer Energie versorgt werden kann. Insofern kann auch in dieser Ausgestaltung durch das Erzeugen des aktivierenden magnetischen Wechselfelds an den Positionen der Läufer 200 die Energieversorgung der Steuereinrichtung 280 der Läufer 200 eingeleitet werden. Die Steuereinrichtung 280 jedes Läufers 200 kann in diesem Zusammenhang ausgebildet sein, das Übermitteln der Läuferkennung, was gemäß **Figur 8** durch entsprechendes Ansteuern der Schalteinrichtung 271 des jeweiligen Läufers 200 erfolgt, zu veranlassen, sobald die Energieversorgung aufgrund der Spannungsinduktion in der Läuferspule 240 einsetzt.

Indem das Erzeugen des aktivierenden magnetischen Wechselfelds nacheinander an den Positionen der Läufer 200 durchgeführt wird (zweiter Schritt 602 und vierter Schritt 604 in **Figur 7**), kann auch die Energieversorgung der Steuereinrichtungen 280 der Läufer 200 nacheinander eingeleitet werden. In entsprechender Weise können die Steuereinrichtungen 280 der Läufer 200 nacheinander das Übermitteln der Läuferkennungen an den Stator 5 (dritter Schritt 603 und fünfter Schritt 605 in **Figur 7**), vorliegend durch Belasten der Läuferspule 240 (vgl. **Figur 8**), initiieren. Ausgehend von dem Stator 5 können die Läuferkennungen, in Form der von den Auswerteeinrichtungen 177 (vgl. **Figur 9**) bereitgestellten Auswertedaten, nacheinander zu der Hauptsteuervorrichtung 500 weitergeleitet werden. Die dadurch nacheinander zu der Hauptsteuervorrichtung 500 gelangenden Läuferkennungen kann die Hauptsteuervorrichtung 500 eindeutig mit den Positionsinformationen der Läufer 200 verknüpfen.

Das sequenzielle Aktivieren der Läufer 200 zum Übermitteln der Läuferkennung an den Stator 5 kann nicht nur durch aufeinanderfolgendes Einleiten der Energieversorgung einer Steuereinrichtung 280 der Läufer 200, sondern auch auf andere Art und Weise bewirkt werden. Es ist zum Beispiel möglich, das Bestromen von Statorleitern 125 bzw. Dreiphasensystemen 150 des Stators 5 zum Erzeugen des aktivierenden magnetischen Wechselfelds an den Positionen der Läufer 200 und dadurch Induzieren einer Wechselspannung in der Läuferspule 240 der Läufer 200 derart durchzuführen, dass hierdurch nacheinander ein Aktivierungsbefehl an die Läufer 200 übertragen wird. Zu diesem Zweck kann das Planarantriebssystem 1 wie folgt zum Ermöglichen einer Datenübertragung von dem Stator 5 zu den Läufern 200 ausgebildet sein.

Die Datenkommunikation von dem Stator 5 zu den Läufern 200 kann auf einem zeitweisen Beeinflussen der Bestromung von einem oder mehreren bestromten Dreiphasensystemen 150 des Stators 5 beruhen. Hierdurch kann eine Veränderung in Bezug auf das durch den Stator 5 erzeugte magnetische Wechselfeld, und dadurch auf die in der Läuferspule 240 eines Läufers 200 induzierte Wechselspannung bewirkt werden. Durch intermittierendes bzw. pulsförmiges Beeinflussen der Bestromung kann eine intermittierend bzw. pulsförmig auftretende Veränderung der Induktionsspannung in der Läuferspule 240 eines Läufers 200 hervorgerufen werden, und können hierauf basierend Datensignale von dem Stator 5 zu dem betreffenden Läufer 200 übermittelt werden. Durch Messen der Induktionsspannung, was mit einer Spannungsmesseinrichtung 283 erfolgen kann (vgl. **Figur 8**), und durch Durchführen einer Auswertung, kann auf die von dem Stator 5 erzeugten Datensignale geschlossen werden.

Zur Veranschaulichung zeigt **Figur 10** ein Blockschaltbild eines weiteren Regelkreises zur Stromregelung eines Dreiphasensystems 150 eines Statormoduls 10, wie er bei dem Planarantriebssystem 1 für die Datenübertragung von dem Stator 5 zu den Läufern 200 vorgesehen sein kann. Der Regelkreis basiert auf dem in **Figur 4** gezeigten Regelkreis und umfasst, neben der Hauptsteuervorrichtung 500 des Planarantriebssystems 1, oben erläuterte Komponenten wie eine Modulsteuervorrichtung 190, eine Stromregeleinrichtung 170, eine Endstufeneinrichtung 180, einen Zwischenkreis 171, ein Dreiphasensystem 150 und eine Strommesseinrichtung 172. Anhand des Regelkreises von **Figur 9** erläuterte weitere Komponenten wie eine Summenstrommesseinrichtung 175 und eine Auswerteeinrichtung 177, welche im Rahmen der Datenübertragung von den Läufern 200 zu dem Stator 5 genutzt werden können, und welche in entsprechender Weise bei dem Regelkreis von **Figur 10** vorhanden sein können, sind aus Gründen der Übersichtlichkeit in **Figur 10** weggelassen. Im Hinblick auf Details zu den bereits erläuterten Komponenten wird auf die obige Beschreibung zu den **Figuren 4** **und** **9** Bezug genommen.

Gemäß **Figur 10** kommt des Weiteren eine Beeinflussungseinrichtung 191 zur Anwendung, welche Bestandteil der Modulsteuervorrichtung 190 sein kann. Die Beeinflussungseinrichtung 191 dient zum zeitweisen Beeinflussen der Stromregelung des Dreiphasensystems 150. Die Beeinflussungseinrichtung 191 kann durch die Hauptsteuervorrichtung 500 des Planarantriebssystems 1 angesteuert, und dadurch aktiviert und in Betrieb genommen werden. Sofern die Beeinflussungseinrichtung 191 nicht aktiviert ist, erfolgt die Stromregelung bei dem Dreiphasensystem 150 in der oben beschriebenen Art und Weise, wie sie anhand von **Figur 4** erläutert wurde.

Im zur Datenübertragung eingesetzten Betrieb der Beeinflussungseinrichtung 191 erfolgt demgegenüber eine zeitweise Beeinflussung der Stromregelung des Dreiphasensystems 150, und zwar derart, dass das Auftreten des Rippelstroms in dem Dreiphasensystem 150 zeitweise unterdrückt wird. Auf diese Weise kann erzielt werden, dass das mit dem Rippelstrom verknüpfte Erzeugen eines magnetischen Wechselfelds, und damit das Induzieren einer Wechselspannung in der Läuferspule 240 eines Läufers 200 zeitweise unterdrückt oder im Wesentlichen unterdrückt wird. Infolge der Beeinflussung wird daher keine Induktionsspannung oder nur eine kleine bzw. vernachlässigbar kleine Induktionsspannung in der Läuferspule 240 erzeugt.

Gemäß der in **Figur 10** gezeigten Ausgestaltung umfasst die Beeinflussungseinrichtung 191 eine Datensteuereinrichtung 192 und eine Unterbrechungseinrichtung 193. Mit Hilfe der Unterbrechungseinrichtung 193 wird das Übermitteln von durch die Stromregeleinrichtung 170 für die Endstufeneinrichtung 180 ausgegebenen Steuersignalen 301 zeitweise unterbrochen, so dass die Steuersignale 301 nicht mehr an die Endstufeneinrichtung 180 angelegt werden. Dies dient dem Zweck, eine beeinflusste Betriebsweise der Endstufeneinrichtung 180 und damit des Dreiphasensystems 150 hervorzurufen, in welcher das Auftreten des Rippelstroms in dem Dreiphasensystem 150 wie oben angegeben zeitweise unterbleibt. Hierzu können, wie in **Figur 10** gezeigt ist, geänderte Steuersignale 302 von der Unterbrechungseinrichtung 193 erzeugt und an die Endstufeneinrichtung 180 angelegt werden.

Das mit Hilfe der Unterbrechungseinrichtung 193 bewirkte Unterbrechen der von der Stromregeleinrichtung 170 erzeugten Steuersignale 301 und das Ausgeben von geänderten Steuersignalen 302 wird durch die Datensteuereinrichtung 192 der Beeinflussungseinrichtung 191 gesteuert, welche die Unterbrechungseinrichtung 193 zu diesem Zweck ansteuert und entsprechende Steuersignale an die Unterbrechungseinrichtung 193 anlegt. Dieser Vorgang wird durch die Hauptsteuervorrichtung 500 des Planarantriebssystems 1 initiiert, welche der Datensteuereinrichtung 192 sich auf die Datenübertragung von dem Stator 5 zu dem Läufer 200 beziehende Datensteuersignale 321 übermittelt. Basierend auf den Datensteuersignalen 321 steuert die Datensteuereinrichtung 192 die Unterbrechungseinrichtung 193 entsprechend an, um hierdurch zeitweise ein Unterdrücken des Rippelstroms in dem Dreiphasensystem 150 hervorzurufen.

Zur Veranschaulichung einer zeitweisen Beeinflussung der Stromregelung zeigt **Figur 11** mögliche elektrische Spannungs- und Stromverläufe in Abhängigkeit der Zeit t, wie sie bei einer pulsweitenmodulierten elektrischen Ansteuerung von Spulensystemen, einschließlich einer mit Hilfe der Beeinflussungseinrichtung 191 erzielbaren Beeinflussung, auftreten können. Das obere Diagramm von **Figur 11** zeigt, entsprechend **Figur 5****,** zur vereinfachenden Darstellung Gegebenheiten bei einer Ansteuerung eines einphasigen Spulensystems mit lediglich einer Spule 160. Das obere Diagramm von **Figur 11** kann auch hier als Äquivalenzdarstellung für ein dreiphasiges Spulensystem dienen. Das untere Diagramm von **Figur 11** bezieht sich auf die Ansteuerung eines dreiphasigen Spulensystems mit drei Spulen 160, wie sie bei einem Dreiphasensystem 150 des Planarantriebssystems 1 eingesetzt werden kann.

Gemäß dem oberen Diagramm von **Figur 11** wird das Spulensystem mit ersten Spannungspulsen 410 beaufschlagt, und erfolgt ferner eine Beeinflussung der elektrischen Ansteuerung des Spulensystems, so dass ein dritter elektrischer Stromverlauf 435 vorliegt. Im Bereich der ersten Spannungspulse 410 folgt der Strom den ersten Spannungspulsen 410, so dass der dritte Stromverlauf 435 in diesem Bereich ein dreieckförmiges Aussehen besitzt. Die Beeinflussung der Ansteuerung des Spulensystems erstreckt sich gemäß dem in **Figur 11** dargestellten Beispiel über zwei PWM-Taktperioden, d.h. vorliegend vom Zeitpunkt 2*Ts bis zum Zeitpunkt 4*Ts, wodurch zwei erste Spannungspulse 410 ausgelassen werden. Dieser Vorgang kann auch als Austasten der ersten Spannungspulse 410 bezeichnet werden. Die Beeinflussung hat zur Folge, dass in dem beeinflussten Zeitraum kein Rippelstrom vorhanden ist. Aufgrund einer Trägheit des Spulensystems ist in dem beeinflussten Zeitraum weiterhin ein Stromfluss mit abnehmendem Strombetrag vorhanden, wie anhand des dritten Stromverlaufs 435 deutlich wird.

Das untere Diagramm von **Figur 11** zeigt Gegebenheiten bei einer Ansteuerung und Beeinflussung eines dreiphasigen Spulensystems bzw. Dreiphasensystems 150. Das Dreiphasensystem 150 wird mit mittenzentrierten zweiten Spannungspulsen 421, dritten Spannungspulsen 422 und vierten Spannungspulsen 423 mit unterschiedlichen Pulsbreiten beaufschlagt. Des Weiteren findet eine Beeinflussung der elektrischen Ansteuerung des Dreiphasensystems 150 statt, so dass ein vierter elektrischer Stromverlauf 436 vorliegt. Der vierte Stromverlauf 436 bezieht sich auf eine der drei Spulen 160 des Dreiphasensystems 150. Im Bereich der zweiten Spannungspulse 421, dritten Spannungspulse 422 und vierten Spannungspulse 423, also dort, wo sich die zugehörigen drei Ansteuerspannungen nicht auf dem gleichen (oberen oder unteren) Spannungsniveau befinden, liegt eine Vergrößerung des Strombetrags vor und folgt der Strom den Ansteuerspannungen, so dass der vierte Stromverlauf 436 in diesem Bereich ein dreieckförmiges Aussehen besitzt.

Die Ansteuerung und deren Beeinflussung wird bei dem unteren Diagramm von **Figur 11** korrespondierend zu dem oberen Diagramm durchgeführt, so dass der vierte Stromverlauf 436 in dem Dreiphasensystem 150 mit dem dritten Stromverlauf 435 in dem einphasigen Spulensystem übereinstimmt. Das Beeinflussen durch Austasten erfolgt derart, dass in dem beeinflussten Zeitraum ein zweiter Spannungspuls 421, dritter Spannungspuls 422 und vierter Spannungspuls 423 ausgelassen werden. Dies hat zur Folge, dass in dem beeinflussten Zeitraum keine Vergrößerung des Strombetrags und damit kein Rippelstrom auftritt. Aufgrund der Trägheit des Spulensystems ist in dem beeinflussten Zeitraum weiterhin ein Stromfluss mit abnehmendem Strombetrag vorhanden, wie es bei dem vierten Stromverlauf 436 dargestellt ist. Bei den zwei anderen Spulen 160 des Dreiphasensystems 150 liegen zu dem vierten Stromverlauf 436 korrespondierende, nicht gezeigte Stromverläufe vor. Auch hierbei erfolgt jeweils eine Vergrößerung des Strombetrags, wenn sich sämtliche drei Ansteuerspannungen nicht auf dem gleichen Spannungsniveau befinden, und ansonsten eine Verkleinerung des Strombetrags.

Wie oben erläutert wurde, kann die in **Figur 10** gezeigte Beeinflussungseinrichtung 191 im Rahmen der Datenübertragung von dem Stator 5 zu einem Läufer 200 mit Hilfe der Hauptsteuervorrichtung 500 des Planarantriebssystems 1 angesteuert werden. Hierauf basierend kann die Beeinflussungseinrichtung 191 die Stromregelung des in **Figur 10** gezeigten Dreiphasensystems 150 zeitweise beeinflussen. Hierdurch kann auch der Rippelstrom in dem Dreiphasensystem 150, damit das durch den Rippelstrom bedingte Erzeugen eines magnetischen Wechselfelds, und auf diese Weise das Induzieren einer elektrischen Wechselspannung in der Läuferspule 240 des betreffenden Läufers 200 zeitweise (im Wesentlichen) unterdrückt werden.

Mit Bezug auf den in **Figur 10** gezeigten Regelkreis besteht die Möglichkeit, dass jedes Statormodul 10 des Stators 5 eine einzelne Beeinflussungseinrichtung 191 aufweist. Die Beeinflussungseinrichtung 191 eines Statormoduls 10 kann dazu ausgebildet sein und in der oben beschriebenen Art und Weise dazu genutzt werden, die von wenigstens einer Stromregeleinrichtung 170 des zugehörigen Statormoduls 10 erzeugten Steuersignale 301 zeitweise zu unterbrechen und zeitweise eine beeinflusste Betriebsweise von wenigstens einer Endstufeneinrichtung 180, und damit ein Unterdrücken des Rippelstroms in wenigstens einem Dreiphasensystem 150 des Statormoduls 10, hervorzurufen. Möglich ist es auch, dass der Stator 5 für jedes Dreiphasensystem 150 und damit jede Stromregeleinrichtung 170 und jede Endstufeneinrichtung 180 eine eigene Beeinflussungseinrichtung 191 aufweist. In dieser Ausgestaltung kann jedes Statormodul 10 vierundzwanzig Beeinflussungseinrichtungen 191 aufweisen, mit deren Hilfe die Stromregelung von jeweils einem Dreiphasensystem 150 beeinflusst werden kann.

Wie oben beschrieben wurde, können mehrere Dreiphasensysteme 150 des Stators 5, welche gegebenenfalls auch Bestandteile von mehreren benachbarten Statormodulen 10 sein können, gleichzeitig bestromt werden. In dieser Hinsicht besteht die Möglichkeit, die Stromregelung von einem oder auch mehreren bestromten Dreiphasensystemen 150 zum Zwecke der Datenübertragung von dem Stator 5 zu einem Läufer 200 mit Hilfe von einer oder mehreren Beeinflussungseinrichtungen 191 zeitweise zu beeinflussen. Dies kann durch die Hauptsteuervorrichtung 500 initiiert und gesteuert werden, indem die Hauptsteuervorrichtung entsprechende Datensteuersignale 321 an eine oder mehrere Beeinflussungseinrichtungen 191 übermittelt. Bei einer Beeinflussung der Stromregelung von mehreren bestromten Dreiphasensystemen 150 kann die Beeinflussung zeitlich synchron zueinander erfolgen. Im Betrieb von einer oder mehreren Beeinflussungseinrichtungen 191 kann der Rippelstrom in einem oder mehreren Dreiphasensystemen 150 zeitweise unterdrückt werden. In entsprechender Weise kann das mit dem Rippelstrom verknüpfte Erzeugen eines magnetischen Wechselfelds, und damit das Induzieren einer elektrischen Wechselspannung in der Läuferspule 240 eines Läufers 200 zeitweise (im Wesentlichen) unterdrückt werden. Hierauf basierend können entsprechende Datensignale von dem Stator 5 zu dem betreffenden Läufer 200 übertragen werden.

Im Hinblick auf die Datenübertragung von dem Stator 5 zu den Läufern 200 sind die Läufer 200 des Planarantriebssystems 1 dazu ausgebildet, eine Messung der in der Läuferspule 240 induzierten Wechselspannung durchzuführen, um hierauf basierend die zeitweise Beeinflussung der Stromregelung von wenigstens einem Dreiphasensystem 150 des Stators 5 zu erfassen. Ferner erfolgt eine Auswertung, um Datensignale, welche von dem Stator 5 durch die zeitweise bzw. pulsförmig durchgeführte Beeinflussung der Stromregelung erzeugt werden können, zu ermitteln. Durch die Beeinflussung kann eine Veränderung in Bezug auf die in der Läuferspule 240 eines Läufers 200 induzierte Wechselspannung hervorgerufen werden.

Für die Läufer 200 kann in diesem Zusammenhang die in **Figur 8** gezeigte Ausgestaltung zur Anwendung kommen. Zum Zwecke der Spannungsmessung und Auswertung können die in **Figur 8** gezeigten Komponenten, d.h. die mit der Läuferspule 240 verbundene Spannungsmesseinrichtung 283 und die Steuereinrichtung 280, genutzt werden. Hierbei dient die Spannungsmesseinrichtung 283 zum Messen der in der Läuferspule 240 induzierten Wechselspannung. Die Spannungsmesseinrichtung 283 ist mit der Steuereinrichtung 280 verbunden, so dass entsprechende Messsignale der Wechselspannung an die Steuereinrichtung 280 übermittelt werden können. Durch Auswerten der Messsignale kann die Steuereinrichtung 280 die durch die zeitweise Beeinflussung der Bestromung von wenigstens einem Dreiphasensystem 150 des Stators 5 hervorgerufene Veränderung in Bezug auf die Induktionsspannung erfassen, und hierauf basierend die von dem Stator 5 erzeugten Datensignale ermitteln.

In dem oben erläuterten und in **Figur 7** veranschaulichten Identifizierungsverfahren ist vorgesehen, neben dem Bereitstellen von Positionsinformationen der Läufer 200 die Läufer 200 derart zu aktivieren, dass die Läufer 200 nacheinander ihre jeweilige Läuferkennung an den Stator 5 übermitteln. Für das Aktivieren der Läufer 200 wird nacheinander mit Hilfe des Stators 5 an denjenigen Positionen, an welchen sich die Läufer 200 befinden, ein die Läufer 200 zum Übermitteln der Läuferkennung aktivierendes magnetisches Wechselfeld erzeugt und dadurch eine Wechselspannung in der Läuferspule 240 der Läufer 200 induziert.

Hinsichtlich des Aktivierens der Läufer 200 zum Übermitteln der Läuferkennung kann, entsprechend der vorstehend beschriebenen Art und Weise, eine beeinflusste Bestromung von Dreiphasensystemen 150 des Stators 5 an den Positionen der Läufer 200 erfolgen. Dies kann derart durchgeführt werden, dass das hierbei jeweils an der Position eines Läufers 200 erzeugte aktivierende magnetische Wechselfeld und die damit in der Läuferspule 240 des betreffenden Läufers 200 induzierte Wechselspannung in einer einen Aktivierungsbefehl wiedergebenden Weise moduliert sind.

Eine solche Vorgehensweise kann durch die Hauptsteuervorrichtung 500 des Planarantriebssystems 1 gesteuert werden, indem die Hauptsteuervorrichtung 500 nacheinander jeweils eine oder mehrere Beeinflussungseinrichtungen 191 des Stators 5 ansteuert und sich auf den Aktivierungsbefehl beziehende Datensteuersignale 321 an die Beeinflussungseinrichtung(en) 191 übermittelt (vgl. **Figur 10**). Durch Messen der induzierten Wechselspannung und Auswerten der gemessenen induzierten Wechselspannung, was jeweils mit Hilfe der Spannungsmesseinrichtung 283 und der Steuereinrichtung 280 der Läufer 200 erfolgen kann (vgl. **Figur 8**), kann der Aktivierungsbefehl durch die Steuereinrichtung 280 der Läufer 200 erkannt werden. Die Steuereinrichtungen 280 der Läufer können in diesem Zusammenhang ausgebildet sein, das Übermitteln der Läuferkennung, was gemäß **Figur 8** durch entsprechendes Ansteuern der Schalteinrichtung 271 des jeweiligen Läufers 200 erfolgt, zu veranlassen, sofern die Steuereinrichtungen 280 den Empfang des Aktivierungsbefehls feststellen.

Mit Bezug auf die Identifizierung der Läufer 200 des Planarantriebssystems 1 kann nacheinander an den Positionen der Läufer 200 ein aktivierendes magnetisches Wechselfeld zur Übertragung des Aktivierungsbefehls erzeugt werden (erster Pfeil 610, zweiter Schritt 602 und vierter Schritt 604 in **Figur 7**), indem an den Positionen der Läufer 200 eine entsprechend beeinflusste Bestromung von Dreiphasensystemen 150 des Stators 5 erfolgt. Hierdurch kann erzielt werden, dass die Steuereinrichtungen 280 der Läufer 200 nacheinander das Übermitteln der Läuferkennungen an den Stator 5 initiieren (zweiter Pfeil 620, dritter Schritt 603 und fünfter Schritt 605 in **Figur 7**), d.h. gemäß der in **Figur 8** gezeigten Ausgestaltung durch entsprechendes Belasten der Läuferspule 240. Ausgehend von dem Stator 5 können die Läuferkennungen, in Form der von den Auswerteeinrichtungen 177 des Stators 5 auf der Messung des Summenstroms 314 von bestromten Dreiphasensystemen 150 (vgl. **Figur 9**) basierenden Auswertedaten, nacheinander zu der Hauptsteuervorrichtung 500 weitergeleitet werden. Die dadurch nacheinander zu der Hauptsteuervorrichtung 500 gelangenden Läuferkennungen kann die Hauptsteuervorrichtung 500 eindeutig mit den Positionsinformationen der Läufer 200 verknüpfen.

Mit Bezug auf die vorstehend beschriebene Ausgestaltung des Identifizierungsverfahrens besteht erneut die Möglichkeit, dass die Läufer 200 aufgrund der von dem Stator 5 bei dem Aktivieren erzeugten Magnetfelder ortsfest auf dem Stator 5 gehalten bzw. an den Stator 5 herangezogen werden.

Des Weiteren ist es möglich, Dreiphasensysteme 150 an den Positionen der Läufer 200 bereits vor (und auch nach) dem Übertragen des Aktvierungsbefehls zu bestromen, um auf diese Weise beispielsweise die Läufer 200 und deren Steuereinrichtungen 280 auf der Grundlage der in der Läuferspule 240 induzierten Wechselspannung mit Energie zu versorgen. In dieser Ausgestaltung erfolgt nacheinander eine entsprechende Beeinflussung der Bestromung von Dreiphasensystemen 150 des Stators 5 an den Positionen der Läufer 200, um nacheinander an den Positionen der Läufer 200 ein den Aktivierungsbefehl wiedergebendes magnetisches Wechselfeld zu erzeugen und dadurch nacheinander den Aktivierungsbefehl an die Läufer 200 zu übermitteln.

Das Übermitteln eines Aktivierungsbefehls von dem Stator 5 zu den Läufern 200 kann in entsprechender Weise für die in **Figur 6** gezeigte Bauform der Läufer 200 in Betracht kommen, in welcher die Läufer 200 eine Funksendeeinrichtung 250 aufweisen. Zu diesem Zweck können die Läufer 200, entsprechend der in **Figur 8** gezeigten Ausgestaltung, eine Spannungsmesseinrichtung 283 zum Messen der in der Läuferspule 240 induzierten Wechselspannung und zum Übermitteln von Messsignalen an die Steuereinrichtung 280 aufweisen. Die Steuereinrichtung 280 kann ausgebildet sein, das Übermitteln der Läuferkennung, was gemäß der in **Figur 6** gezeigten Ausgestaltung durch entsprechendes Ansteuern der Funksendeeinrichtung 250 des jeweiligen Läufers 200 erfolgt, zu veranlassen, sobald die Steuereinrichtung 280 den Empfang eines Aktivierungsbefehls erkennt. Wie oben beschrieben wurde, kann die Läuferkennung hierbei per Funk an den Stator 5 bzw. an eine (externe) Funkempfangseinrichtung 50 übermittelt, und hiervon ausgehend an die Hauptsteuervorrichtung 500 weitergeleitet werden.

Im Folgenden werden weitere mögliche Ausgestaltungen beschrieben, welche für das Planarantriebssystem 1 und dessen Komponenten, sowie für ein zum Identifizieren von Läufern 200 des Planarantriebssystem 1 durchführbares Verfahren, in Betracht kommen können.

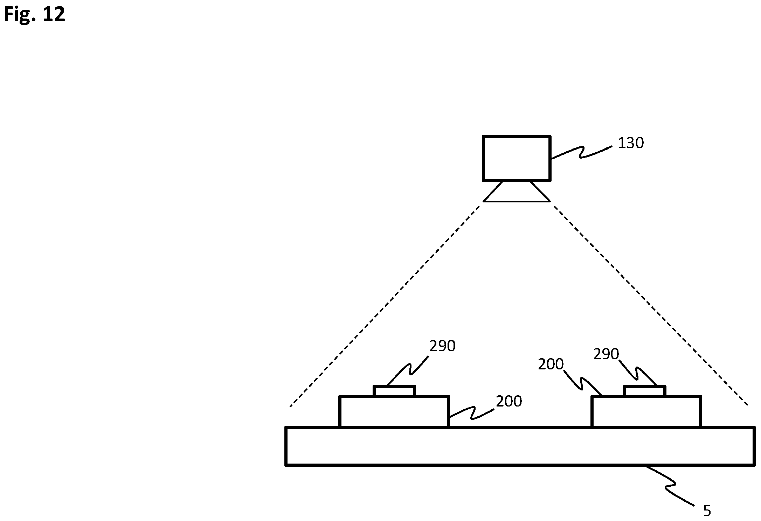

In einer möglichen Variante liegen die Läuferkennungen der Läufe 200 optisch sichtbar auf den Läufern 200 vor. Zu diesem Zweck können die Läuferkennungen in Form von optisch sichtbaren Zeichen 290 auf den Läufern 200 vorhanden sein, wie es in **Figur 12** dargestellt ist. Bei den Zeichen 290 kann es sich zum Beispiel um auf die Läufer 200 aufgedruckte Läuferkennungen handeln. Alternativ können die Zeichen 290 zum Beispiel in Form von die Läuferkennungen wiedergebenden und auf den Läufern 200 angeordneten Aufklebern verwirklicht sein. Die sichtbaren Läuferkennungen können ferner zum Beispiel in Form einer maschinenlesbaren Kennung, eines QR-Codes, eines Barcodes oder auch als Klartext ausgestaltet sein.

Sofern solche, die Läuferkennungen wiedergebenden Zeichen 290 auf den Läufern 200 zum Einsatz kommen, kann das Planarantriebssystem 1, wie in **Figur 12** gezeigt ist, eine Kamera 130 aufweisen. Mit Hilfe der Kamera 130 können die Zeichen 290 und damit die Läuferkennungen der Läufer 200 ausgelesen, und der Hauptsteuervorrichtung 500 des Planarantriebssystems 1 (vgl. **Figur 1**) zur Verfügung gestellt werden. Die Hauptsteuervorrichtung 500 und die Kamera 130 sind zu diesem Zweck derart miteinander verbunden, dass eine Datenkommunikation zwischen der Hauptsteuervorrichtung 500 und der Kamera 130 möglich ist, und entsprechende Bilddaten von der Kamera 130 zu der Hauptsteuervorrichtung 500 übermittelt werden können. Wie in **Figur 12** angedeutet ist, kann die Kamera 130 derart angeordnet sein, dass sich sämtliche Läufer 200 des Planarantriebssystems 1 im Bildbereich der Kamera 130 befinden können, und dadurch sämtliche Läufer 200 und deren Zeichen 290 mit Hilfe der Kamera 130 erfasst werden können.

Die Kamera 130 kann gegebenenfalls ferner dazu genutzt werden, um der Hauptsteuervorrichtung 500 Positionsinformationen der Läufer 200 zu übermitteln. Die kamerabasierten Positionsinformationen können durch die Hauptsteuervorrichtung 500 mit Positionsinformationen, welche mit Hilfe des Magnetfeldsensoren 115 umfassenden Positionserfassungssystems (vgl. **Figur 6**) bereitgestellt werden können, kombiniert oder abgeglichen werden. Zur Identifizierung der Läufer 200 kann die Hauptsteuervorrichtung 500 die Positionsinformationen und die mit Hilfe der Kamera 130 bereitgestellten Läuferkennungen der Läufer 200 miteinander verknüpfen.

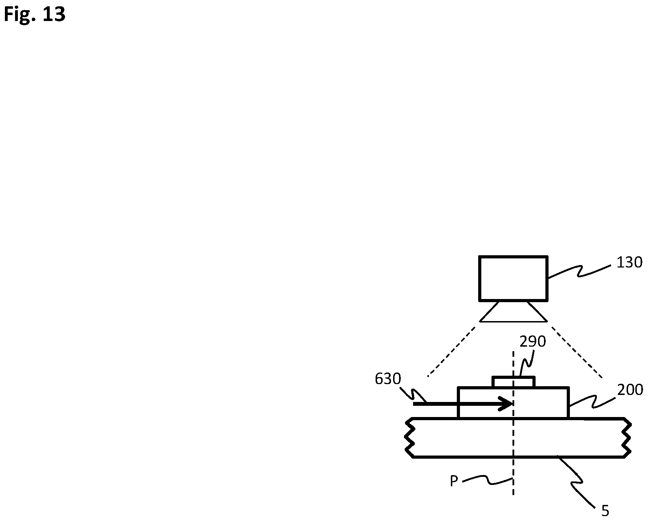

Im Hinblick auf das Bereitstellen der Positionsinformationen und der Läuferkennungen der Läufer 200 kann es des Weiteren in Betracht kommen, dass sich die Läufer 200 hierbei nicht an verschiedenen Positionen auf dem Stator 5 befinden. Stattdessen können die Läufer 200 nacheinander einzeln durch Antreiben der Läufer 200 zu einer vorgegebenen Ausleseposition P auf dem Stator 5 bewegt werden, an welcher jeweils die Läuferkennung eines Läufers 200 bereitgestellt wird, wie es weiter unten anhand der **Figuren 13****,** **14** **und** **15** erläutert wird. In den **Figuren 13****,** **14** **und** **15** ist die Bewegung des jeweils gezeigten Läufers 200 zu der Ausleseposition P anhand eines dritten Pfeils 630 angedeutet. Anschließend können die Läufer 200 von der Ausleseposition P wieder wegbewegt werden. Dies kann durch die Hauptsteuervorrichtung 500 durch entsprechendes Ansteuern des Stators 5 zum Bestromen von Dreiphasensystemen 150 des Stators 5 gesteuert werden. In dieser Ausgestaltung kann die vorgegebene Ausleseposition P als Auslesestation des Stators 5 dienen. Auf diese Weise können im Rahmen der Identifizierung für die Läufer 200 jeweils dieselben Positionsinformationen zur Verfügung gestellt werden, welche mit den nacheinander jeweils an der vorgegebenen Ausleseposition P bereitgestellten Läuferkennungen der Läufer 200 durch die Hauptsteuervorrichtung 500 verknüpft werden können.

Für das Bereitstellen der Läuferkennungen kann erneut, wie in **Figur 13** gezeigt ist, eine Kamera 130 zum Einsatz kommen, welche mit der Hauptsteuervorrichtung 500 verbunden ist. Die Kamera 130 kann sich im Bereich der vorgegebenen Ausleseposition P befinden, so dass die Läufer 200 einzeln unter die Kamera 130 zum Auslesen der Zeichen 290 und damit der Läuferkennungen der Läufer 200 gefahren werden können, um die Läuferkennungen der Hauptsteuervorrichtung 500 zur Verfügung zu stellen.

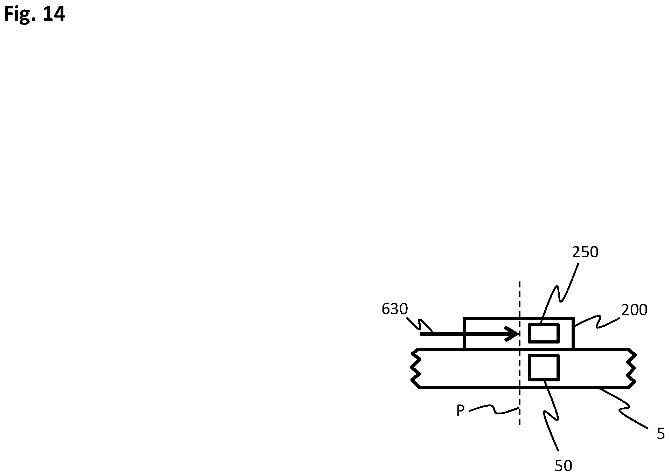

**Figur 14** zeigt eine weitere Ausgestaltung für eine Auslesestation. Hierbei ist an der vorgegebenen Ausleseposition P, zu welcher die Läufer 200 nacheinander bewegt werden, ein definierter Funkübertragungsbereich vorgesehen, an welchem die Läufer 200 die jeweilige Läuferkennung, entsprechend der oben anhand von **Figur 6** beschriebenen Ausgestaltung, mittels Funkübertragung an eine Funkempfangseinrichtung 50 übermitteln. Wie in **Figur 14** gezeigt ist, kann der Stator 5 die Funkempfangseinrichtung 50 aufweisen. Alternativ kann die Funkempfangseinrichtung 50 eine von dem Stator 5 separate externe Funkempfangseinrichtung 50 sein, welche mit der Hauptsteuervorrichtung 500 verbunden ist und sich außerhalb des Stators 5 befinden kann (nicht dargestellt). Die Funkempfangseinrichtung 50 kann im Bereich der vorgegebenen Ausleseposition P, oder an einer anderen Stelle vorhanden sein. Die Läufer 200 weisen eine Funksendeeinrichtung 250 auf, welche durch eine Steuereinrichtung 280 der Läufer 200 gesteuert werden kann, um die in einer Speichereinrichtung 281 hinterlegte Läuferkennung an den Stator 5 bzw. an die Funkempfangseinrichtung 50, und hiervon ausgehend zu der Hauptsteuervorrichtung 500 zu übermitteln (vgl. **Figur 6**).

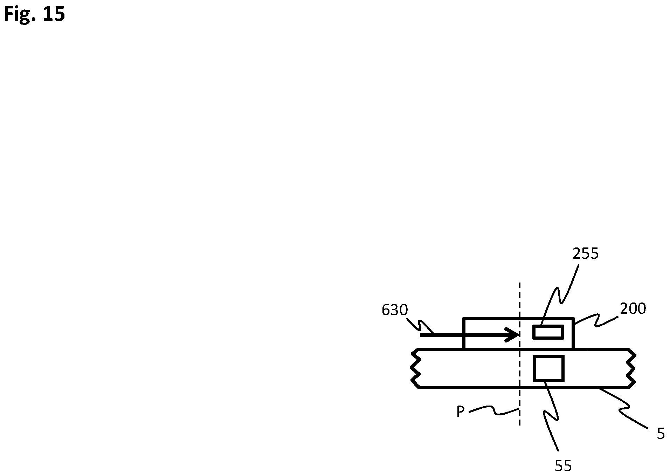

**Figur 15** veranschaulicht eine weitere Ausgestaltung für eine Auslesestation. Hierbei ist im Bereich der vorgegebenen Ausleseposition P, zu welcher die Läufer 200 nacheinander bewegt werden, eine NFC-Leseeinrichtung 55 vorhanden. Wie in **Figur 15** gezeigt ist, kann der Stator die NFC-Leseeinrichtung 55 aufweisen. Alternativ kann die NFC-Leseeinrichtung 55 eine von dem Stator 5 separate externe NFC-Leseeinrichtung 55 sein, welche mit der Hauptsteuervorrichtung 500 verbunden ist und sich außerhalb des Stators 5 befinden kann (nicht dargestellt). Die Läufer 200 umfassen einen NFC-Transponder 255, in welchem die jeweilige Läuferkennung hinterlegt ist. Der NFC-Transponder 255 kann hierzu eine entsprechende Speichereinrichtung aufweisen. Sofern die Läufer 200 zu der vorgegebenen Ausleseposition P bewegt werden, erfolgt ein Auslesen der Läuferkennung unter Verwendung der NFC-Leseeinrichtung 55, welche anschließend an die Hauptsteuervorrichtung 500 weitergeleitet werden kann.

Die vorstehend beschriebenen Ausgestaltungen können des Weiteren dahingehend abgewandelt werden, dass mehrere vorgegebene Auslesepositionen P bzw. räumlich verteilte Auslesestationen auf dem Stator 5 vorgesehen sind, zu welchen die Läufer 200 durch Antreiben derselben gefahren werden können, um an diesen Stellen die jeweilige Läuferkennung bereitzustellen (nicht dargestellt). Auch dies kann durch die Hauptsteuervorrichtung 500 durch entsprechendes Ansteuern des Stators 5 zum Bestromen von Dreiphasensystemen 150 des Stators 5 gesteuert werden. Auf diese Weise können im Rahmen der Identifizierung unterschiedliche Positionsinformationen der Läufer 200 zur Verfügung gestellt werden. Das Bereitstellen der Läuferkennungen an den unterschiedlichen vorgegebenen Auslesepositionen P bzw. Auslesestationen kann entsprechend den vorstehend beschriebenen Ausgestaltungen erfolgen, indem an diesen Stellen jeweils eine Kamera 130 zum Auslesen der optisch sichtbaren Läuferkennungen (vgl. **Figur 13**) und Weiterleiten derselben an die Hauptsteuervorrichtung 500, oder eine Funkempfangseinrichtung 50 (vgl. Fi**gur 14**) oder eine NFC-Leseeinrichtung 55 (vgl. **Figur 15**) vorhanden ist, so dass die Läuferkennungen von den Läufern 200 zu den jeweiligen Funkempfangseinrichtungen 50 oder NFC-Leseeinrichtungen 55, und daraufhin zu der Hauptsteuervorrichtung 500 übermittelt werden können.

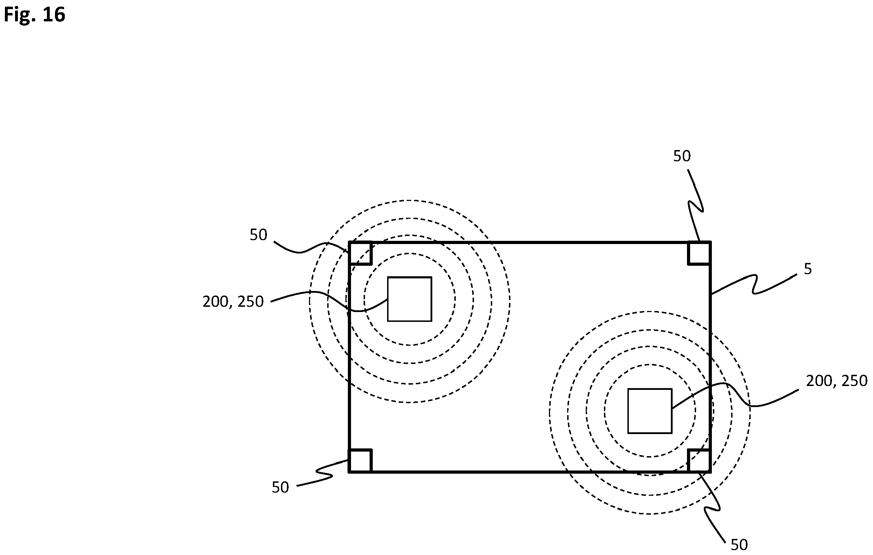

Im Hinblick auf ein Übermitteln der Läuferkennungen mittels Funkübertragung sind ferner folgende Ausgestaltungen denkbar. Beispielsweise können mehrere Funkempfangseinrichtungen 50 eingesetzt werden. Wie in **Figur 16** gezeigt ist, können die mehreren Funkempfangseinrichtungen 50 am Rand bzw. an den Ecken des Stators 5 angeordnet sein. Des Weiteren können die mehreren Funkempfangseinrichtungen 50 Bestandteile des Stators 5 oder externe Funkempfangseinrichtungen 50 sein. Entsprechend der in **Figur 6** gezeigten Ausgestaltung können die Läufer 200 eine Funksendeeinrichtung 250 zum Aussenden bzw. Übermitteln der jeweiligen Läuferkennung an die Funkempfangseinrichtungen 50 aufweisen. Die Funksendeeinrichtungen 250 können durch Steuereinrichtungen 280 der Läufer 200 gesteuert werden. Anhand unterschiedlicher Signalstärken von Funksignalen, welche von den Funksendeeinrichtungen 250 der Läufer 200 beim Aussenden der Läuferkennungen abgestrahlt werden können, bzw. unter Anwendung einer Funkpeilung mittels Triangulation, können die Positionen der Läufer 200 erfasst und Positionsinformationen der Läufer 200 bereitgestellt werden. Dies kann im Rahmen einer entsprechenden Auswertung, welche durch die Hauptsteuervorrichtung 500 durchgeführt werden kann, erfolgen. Die Hauptsteuervorrichtung 500 kann die Positionsinformationen ferner mit den per Funk an den Stator 5 übermittelten, und von diesem an die Hauptsteuervorrichtung 500 weitergeleiteten Läuferkennungen verknüpfen.

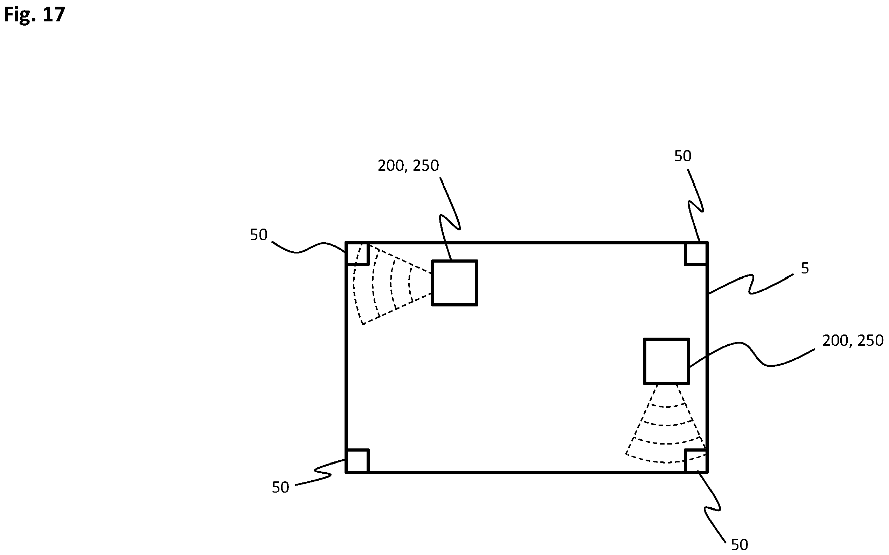

In entsprechender Weise kann die Anwendung von Richtfunk in Betracht gezogen werden. In diesem Zusammenhang können ebenfalls mehrere und gegebenenfalls am Rand bzw. an den Ecken des Stators 5 angeordnete Funkempfangseinrichtungen 50 eingesetzt werden und können die Funksendeeinrichtungen 250 der Läufer 200 ausgebildet sein, Funksignale in unterschiedliche Richtungen abzustrahlen, wie es in **Figur 17** dargestellt ist. Auch auf diese Weise kann anhand unterschiedlicher Signalstärken der Funksignale eine Positionserfassung und, durch Durchführen einer entsprechenden Auswertung durch die Hauptsteuervorrichtung 500, ein Bereitstellen von Positionsinformationen der Läufer 200 erfolgen, welche mit den per Funk übertragenen Läuferkennungen verknüpft werden können.

Mit Bezug auf die anhand der **Figuren 16** **und** **17** erläuterten Ausgestaltungen besteht die Möglichkeit, dass das Aussenden der Läuferkennungen durch die Funksendeeinrichtungen 250 der Läufer 200 nacheinander oder gleichzeitig erfolgt. Des Weiteren kann mit den vorstehend beschriebenen Methoden (Funkpeilung, Richtfunk) eine grobe Erfassung der Läuferpositionen erfolgen. Darüber hinaus können weitere Positionsinformationen der Läufer 200 herangezogen werden, welche mit Hilfe des Magnetfeldsensoren 115 umfassenden Positionserfassungssystems (vgl. **Figur 6**) bereitgestellt werden können. Hierbei können die groben Positionsinformationen durch die Hauptsteuervorrichtung 500 mit Positionsinformationen, welche mit Hilfe des Positionserfassungssystems bereitgestellt werden können, kombiniert oder abgeglichen werden.

Bei Ausgestaltungen, in welchen Läuferkennungen der Läufer 200 mittels Funkübertragung bereitgestellt werden, wie es anhand der **Figuren 14****,** **16** **und** **17** erläutert wurde, kann ein Aktivieren der Läufer 200 zum Aussenden bzw. Übermitteln der Läuferkennungen entsprechend der zuvor beschriebenen Ausgestaltungen erfolgen. In diesem Sinne kann an den Positionen der Läufer 200 ein die Läufer 200 aktivierendes magnetisches Wechselfeld erzeugt und dadurch eine Wechselspannung in der Läuferspule 240 der Läufer 200 induziert werden. Durch das Erzeugen des magnetischen Wechselfelds und das Induzieren der Wechselspannung kann die Energieversorgung von Steuereinrichtungen 280 der Läufer 200 eingeleitet oder alternativ ein Aktivierungsbefehl an die Läufer 200 übertragen werden, woraufhin die Steuereinrichtungen 280 das Übermitteln der Läuferkennungen veranlassen können.

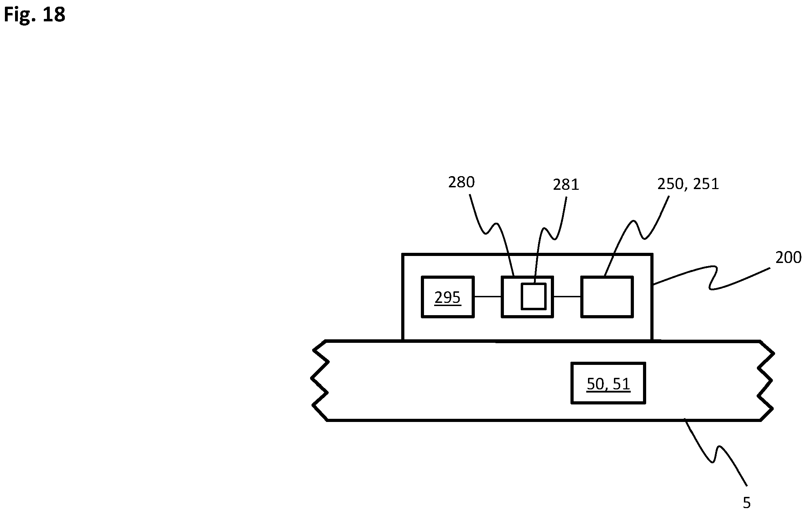

Eine weitere Variante besteht darin, das Aktivieren der Läufer 200 zum Aussenden der Läuferkennung per Funk ebenfalls mittels Funkübertragung durchzuführen. Wie in **Figur 18** gezeigt ist, kann der Stator 5 zu diesem Zweck einen Stator-Transceiver 51 aufweisen, mit welchem Funksignale gesendet und empfangen werden können. Beim Empfang fungiert der Stator-Transceiver 51 als Funkempfangseinrichtung 50. Die Läufer 200 können, wie in **Figur 18** anhand eines Läufers 200 dargestellt ist, einen Läufer-Transceiver 251 aufweisen, mit welchem ebenfalls Funksignale gesendet und empfangen werden können. Beim Senden dient der Läufer-Transceiver 251 als Funksendeeinrichtung 250. Mit Hilfe des Stator-Transceivers 51 kann ein Aktivierungsbefehl per Funk von dem Stator 5 an mehrere bzw. sämtliche Läufer 200, oder jeweils nacheinander an die Läufer 200 übermittelt werden, um diese zum Übertragen der Läuferkennung, ebenfalls per Funk, zu aktivieren. Der Läufer-Transceiver 251 eines Läufers 200 kann, wie in **Figur 18** angedeutet ist, durch eine Steuereinrichtung 280 gesteuert werden. Die Steuereinrichtung 280 kann dazu ausgebildet sein, einen per Funk übertragenen Aktivierungsbefehl zu erkennen, um hierauf basierend den Läufer-Transceiver 251 zum Aussenden der Läuferkennung entsprechend anzusteuern. Die Läuferkennung kann in einer Speichereinrichtung 281 hinterlegt sein.

Mit Bezug auf die vorgenannte Ausgestaltung kann die Anwendung einer kurzreichweitigen Funkübertragungstechnik wie zum Beispiel NFC in Betracht kommen. Des Weiteren kann, abweichend von der Darstellung in **Figur 18****,** ein von dem Stator 5 separater externer Funktransceiver eingesetzt werden, welcher mit der Hauptsteuervorrichtung 500 verbunden sein kann (nicht dargestellt). Hierbei kann ein Aktivierungsbefehl per Funk von dem externen Funktransceiver zu den Läufern 200, und können die Läuferkennungen ebenfalls per Funk von den Läufern 200 zu dem externen Funktransceiver, und von diesem weiter zu der Hauptsteuervorrichtung 500, übermittelt werden.

Die Läufer 200 des Planarantriebssystems 1 können des Weiteren einen elektrischen Energiespeicher 295 aufweisen, wie ebenfalls in **Figur 18** dargestellt ist. Bei dem Energiespeicher 295 kann es sich zum Beispiel um eine Batterie handeln. Mit Hilfe des Energiespeichers 295 kann die Energie zum Aussenden bzw. Übermitteln der Läuferkennung zur Verfügung gestellt werden, und können Läuferkomponenten wie die Steuereinrichtung 280 und die Funksendeeinrichtung 250 bzw. der Läufer-Transceiver 251 elektrisch versorgt werden. Mit Hilfe des Energiespeichers 295 eines Läufers 200 kann ferner wenigstens eine weitere Einrichtung, welche auf dem Läufer 200 angeordnet und/oder Bestandteil des Läufers 200 sein kann, elektrisch versorgt werden (nicht dargestellt). Hierbei kann es sich zum Beispiel um eine Aktorik handeln.

Bei einer Ausgestaltung der Läufer 200 mit einem Energiespeicher 295 kann die Verwendung einer Läuferspule 240 entfallen, und können Läufer 200 somit ohne Läuferspule 240 ausgebildet sein. Des Weiteren kann die Verwendung eines Energiespeichers 295 auch für vorstehend beschriebene Ausgestaltungen der Läufer 200, wie sie zum Beispiel in den **Figuren 6****,** **8****,** **14****,** **16** **und** **17** gezeigt sind, zur Anwendung kommen, um Läuferkomponenten wie eine Steuereinrichtung 280, eine Funksendeeinrichtung 250 usw. elektrisch zu versorgen.

Weitere Varianten in Bezug auf die Läufer 200 bestehen darin, Läufer 200 mit mehreren, zum Beispiel lateral nebeneinander angeordneten Läuferspulen 240 einzusetzen (nicht dargestellt). Die mehreren Läuferspulen 240 können zum Beispiel an einer Unterseite der Läufer 200, oder in Abstandshaltern 205 der Läufer 200 (vgl. **Figur 3**) angeordnet sein. Die mehreren Läuferspulen 240 können miteinander verbunden sein. Eine in den mehreren Läuferspulen 240 induzierte Wechselspannung kann ebenfalls zur Energieversorgung genutzt, und zu diesem Zweck mit Hilfe eines Gleichrichters 260 gleichgerichtet werden. Für das Durchführen einer Lastmodulation kann ein Spulenteil der mehreren Läuferspulen 240 kurzgeschlossen werden.

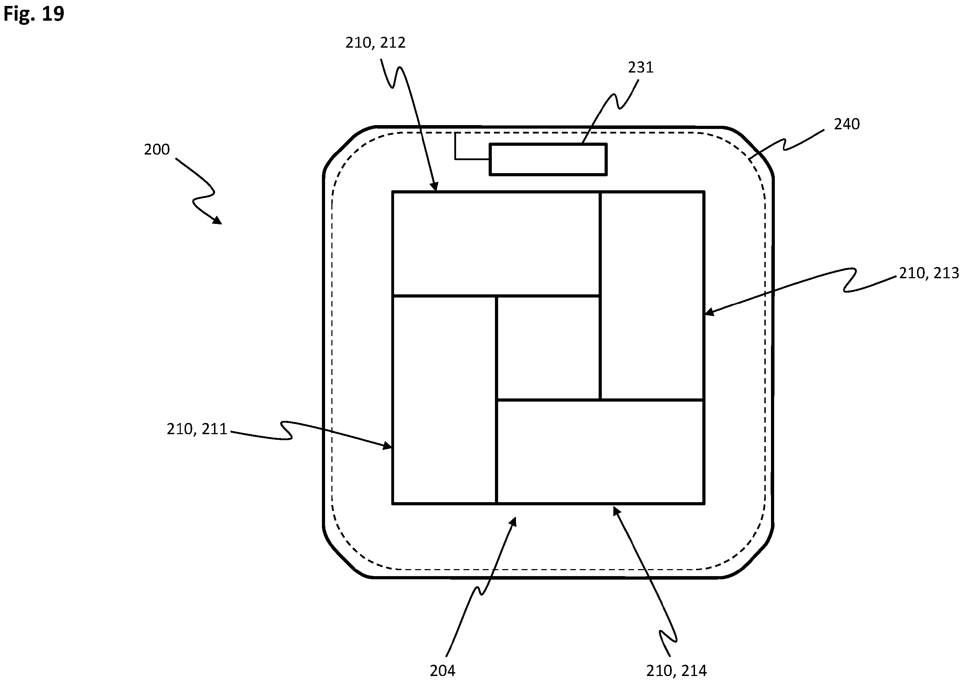

**Figur 19** zeigt eine weitere mögliche Ausgestaltung, welche für einen Läufer 200 des Planarantriebssystems 1 in Betracht kommen kann. Der in **Figur 19** gezeigte Läufer 200 weist eine Läuferspule 240 auf, welche wie vorstehend beschrieben für eine induktive Energieübertragung und für eine Datenübertragung zwischen dem Stator 5 und dem Läufer 200 eingesetzt werden kann. Die Läuferspule 240 ist in einem die Magneteinrichtung 204 aus den vier Magneteinheiten 210 lateral umgebenden Bereich bzw. Bauraum des Läufers 200 angeordnet. Die Läuferspule 240, welche sich im Bereich von lateralen Außenseiten des Läufers 200 befindet, kann zum Beispiel in Abstandshaltern des Läufers 200 integriert sein. Auch kann die Läuferspule 240 in Form eines mehrfach gewickelten Drahts verwirklicht sein (nicht dargestellt).

Wie in **Figur 19** angedeutet ist, kann der Läufer 200 ferner an einer geeigneten Stelle eine zweite Leiterplatte 231 aufweisen. Der Läufer 200 kann in diesem Zusammenhang zum Beispiel entsprechend der in **Figur 6** gezeigten Ausgestaltung zur Datenübertragung per Funk ausgebildet sein. Anhand von **Figur 6** erläuterte Komponenten wie der Gleichrichter 260, die Steuereinrichtung 280 und die Funksendeeinrichtung 250 können hierbei in entsprechender Weise Bestandteile der zweiten Leiterplatte 231 und/oder auf der zweiten Leiterplatte 231 angeordnet sein (nicht dargestellt).

Alternativ kann der in **Figur 19** dargestellte Läufer 200 zum Beispiel entsprechend der in **Figur 8** gezeigten Ausgestaltung zur Datenübertragung mittels Lastmodulation ausgebildet sein. Anhand von **Figur 8** erläuterte Komponenten wie der Gleichrichter 260, der Glättungskondensator 266, der Lastwiderstand 272, die Schalteinrichtung 271, die Steuereinrichtung 280 und die Spannungsmesseinrichtung 281 können hierbei in entsprechender Weise Bestandteile der zweiten Leiterplatte 231 und/oder auf der zweiten Leiterplatte 231 angeordnet sein. Des Weiteren können der in **Figur 8** dargestellte erste Spulenteil 248 und zweite Spulenteil 249 durch unterschiedliche Windungen der in Form eines gewickelten Drahts verwirklichten Läuferspule 240 gebildet sein (nicht dargestellt).

Mit Bezug auf die anhand von **Figur 19** erläuterte Bauform kann der Läufer 200 ferner derart verwirklicht sein, dass die zweite Leiterplatte 231 eine die Magneteinrichtung 204 umlaufende Form besitzt (nicht dargestellt). Die zweite Leiterplatte 231 kann in dieser Ausgestaltung mehrlagig ausgeführt sein. Des Weiteren kann die Läuferspule 240 durch übereinander angeordnete spiralförmige Leiterbahnen der zweiten Leiterplatte 231, und können der in **Figur 8** gezeigte erste Spulenteil 248 und zweite Spulenteil 249 durch unterschiedliche Leiterbahnen der zweiten Leiterplatte 231 gebildet sein.

Die Magneteinrichtung 204 des Läufers 200 kann, abweichend von **Figur 19****,** auch derart ausgebildet sein, dass die Magneteinrichtung 204 keinen Bereich bzw. Freiraum umgibt (nicht dargestellt). Auf diese Weise ist eine Ausgestaltung des Läufers 200 mit kleinen bzw. kleineren Abmessungen möglich. Bei einer Verwendung von mehreren baugleichen Läufern 200 in dem Planarantriebssystem 1 (vgl. **Figur 1**) können insofern mehr Läufer 200 auf dem Stator 5 genutzt werden.

Die vorstehend beschriebene und anhand von **Figur 19** erläuterte Ausgestaltung des Läufers 200 bietet die Möglichkeit, eine relativ große elektrische Leistung von dem Stator 5 zu dem Läufer 200 zu übertragen. Auf diese Weise können die Energie- und Datenübertragung zwischen dem Stator 5 und dem Läufer 200 begünstigt werden.

Wie oben angedeutet wurde, kann wenigstens einer Läuferkennung und damit wenigstens einem Läufer 200 des Planarantriebssystems 1 ein individualisierter Parametersatz zugeordnet sein, auf dessen Grundlage die Hauptsteuervorrichtung 500 das Antreiben des betreffenden Läufers 200 durch Ansteuern des Stators 5 vornehmen kann. Durch das Identifizieren der Läufer 200 kann die Hauptsteuervorrichtung 500 wenigstens einem identifizierten Läufer 200 dessen zugehörigen Parametersatz zuordnen, und basierend auf dem Parametersatz das Ansteuern des Stators 5 zum Antreiben des Läufers 200 durchführen.

Hierdurch kann berücksichtigt werden, dass ein oder mehrere Läufer 200 des Planarantriebssystems 1 bzw. deren Magneteinrichtungen 204 (vgl. die **Figuren 3** **und** **19**) herstellungsbedingt Toleranzabweichungen aufweisen können. Für solche Läufer 200 kann nach der Herstellung durch eine Messung bzw. Kalibrierung jeweils ein individualisierter Parametersatz ermittelt werden. Unter Verwendung des individualisierten Parametersatzes kann die Hauptsteuervorrichtung 500 eine genauere, d.h. die Toleranzabweichung zumindest teilweise kompensierende Steuerung des Antreibens des zugehörigen Läufers 200 vornehmen.

In diesem Zusammenhang kann zum Beispiel ein mehrstufiges System von Parametersätzen der Läufer 200 über deren Läuferkennungen zur Anwendung kommen. In einer ersten Stufe kann die mit der Hauptsteuervorrichtung 500 vorgenommene Steuerung des Antreibens der Läufer 200 unter Verwendung von generalisierten Parametern durchgeführt werden, welche für alle Läufer 200 gleich sind.

In einer zweiten Stufe kann die Steuerung des Antreibens eines einzelnen, mehrerer oder sämtlicher Läufer 200 des Planarantriebssystems 1 auf der Grundlage von individualisierten Parametersätzen durchgeführt werden, welche im Rahmen der Herstellung der Läufer 200 ermittelt worden sind. Solche Parametersätze können zum Beispiel mit den jeweiligen Läuferkennungen von einem Server runtergeladen werden. Dadurch ist eine genauere Steuerung der zugehörigen Läufer 200 in dem Planarantriebssystem 1 möglich.

Die individualisierten Parametersätze können auch in den Läufern 200 selbst gespeichert sein, zum Beispiel in einer Speichereinrichtung 281 derselben (vgl. zum Beispiel die **Figuren 6** **und** **8**). Hierbei können die individualisierten Parametersätze mit oben beschriebenen Methoden, zum Beispiel per Lastmodulation an den Stator 5 oder per Funk an (wenigstens) eine Funkempfangseinrichtung 50 des Stators 5 oder (wenigstens) eine externe Funkempfangseinrichtung 50, und hiervon ausgehend an die Hauptsteuervorrichtung 500, übermittelt werden. Dies kann zum Beispiel bei einer Erstinbetriebnahme des Planarantriebssystems 1 durchgeführt werden.

In diesem Zusammenhang besteht des Weiteren die Möglichkeit, dass ein Nutzer des Planarantriebssystems 1 zum Beispiel verschiedene Läufer 200 erwirbt. Eine erste Art von Läufern 200 kann dabei ausschließlich unter Verwendung generalisierter Parametersätze betrieben werden. Eine zweite Art von Läufern 200, welche genauer vermessen wurden, kann sowohl auf der Grundlage von generalisierten Parametersätzen oder auf der Grundlage von individualisierten, und dadurch genaueren Parametersätzen betrieben werden.

In einer dritten Stufe können noch genauere individualisierte Parametersätze für die Steuerung eines einzelnen, mehrerer oder sämtlicher Läufer 200 des Planarantriebssystems 1 eingesetzt werden. Derartige Parametersätze können zum Beispiel durch eine Messung über einen längeren Zeitraum oder mit einer höheren Auflösung gewonnen wurden.

Abgesehen hiervon können die Läuferkennungen der Läufer 200 auch für einen anderen Zweck genutzt werden. Möglich ist zum Beispiel eine Produktverfolgung bzw. Rückverfolgung der Läufer 200 von der Produktion bis zum Einsatz oder Servicefall, was anhand der Läuferkennungen erfolgen kann.

Bei den verwendeten Läuferkennungen kann es sich um systemweite Läuferkennungen handeln, welche lediglich auf das betrachtete Planarantriebssystem 1 und dessen Läufer 200 bezogen sind. Für ein weiteres Planarantriebssystem können dieselben, und erneut auf das jeweilige Planarantriebssystem bezogenen systemweiten Läuferkennungen eingesetzt werden.

Die eingesetzten Läuferkennungen können des Weiteren weltweite Läuferkennungen sein, welche für jeden Läufer 200 (auch von verschiedenen Systemen) lediglich einmal vergeben, und infolgedessen eineindeutig sind.

Darüber hinaus kann den Läufern 200 sowohl eine systemweite Läuferkennung als auch eine weltweite Läuferkennung zugeordnet sein. Hierbei können die systemweiten Läuferkennungen im üblichen Betrieb des Planarantriebssystems 1 zum Einsatz kommen, um die Läufer 200 durch Durchführen der Identifizierung eindeutig zuordnen und erkennen zu können. Die weltweiten Läuferkennungen können hingegen eingesetzt werden, um zum Beispiel eine Rückverfolgung der Läufer 200 vorzunehmen, oder um individualisierte Parametersätze für eine genauere Steuerung von Läufern 200 bereitzustellen. Es kann des Weiteren eine Verknüpfung von weltweiter Läuferkennung und systemweiter Läuferkennung durchgeführt werden, um der Hauptsteuervorrichtung 500 individualisierte Parametersätze für Läufer 200 des Planarantriebssystems 1 zur Verfügung zu stellen, anhand derer die Hauptsteuervorrichtung 500 eine genauere Steuerung des Antreibens der Läufer 200 vornehmen kann.

Im Rahmen des Identifizierens der Läufer 200 kann ein Bereitstellen von systemweiten Läuferkennungen der Läufer 200 erfolgen. Möglich ist auch ein Bereitstellen von weltweiten Läuferkennungen, oder ein Bereitstellen von systemweiten Läuferkennungen und weltweiten Läuferkennungen der Läufer 200.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 1: Planarantriebssystem
- 5: Stator
- 10: Statormodul
- 11: Statorfläche
- 12: erste Richtung
- 14: zweite Richtung
- 15: dritte Richtung
- 16: Anschlussleitung
- 18: Modulgehäuse
- 21: Außenkante
- 32: Modulunterseite
- 33: Seitenflächen
- 50: Funkempfangseinrichtung
- 51: Stator-Transceiver
- 55: NFC-Leseeinrichtung
- 100: Statoreinheit
- 101: erster Statorsektor
- 102: zweiter Statorsektor
- 103: dritter Statorsektor
- 104: vierter Statorsektor
- 106: Statorsektor
- 110: Verarbeitungseinrichtung
- 115: Magnetfeldsensor
- 125: Statorleiter
- 130: Kamera
- 150: Dreiphasensystem
- 157: Sternpunkt
- 160: Spule
- 165: erste Spule
- 166: zweite Spule
- 167: dritte Spule
- 170: Stromregeleinrichtung
- 171: Zwischenkreis
- 172: Strommesseinrichtung
- 175: Summenstrommesseinrichtung
- 177: Auswerteeinrichtung
- 180: Endstufeneinrichtung
- 190: Modulsteuervorrichtung
- 191: Beeinflussungseinrichtung
- 192: Datensteuereinrichtung
- 193: Unterbrechungseinrichtung
- 200: Läufer
- 201: erster Läufer
- 202: zweiter Läufer
- 204: Magneteinrichtung
- 205: Abstandshalter
- 206: erste Läuferrichtung
- 208: zweite Läuferrichtung
- 210: Magneteinheit
- 211: erste Magneteinheit
- 212: zweite Magneteinheit
- 213: dritte Magneteinheit
- 214: vierte Magneteinheit
- 216: Läufermagnet
- 230: erste Leiterplatte
- 231: zweite Leiterplatte
- 240: Läuferspule
- 248: erster Spulenteil
- 249: zweiter Spulenteil
- 250: Funksendeeinrichtung
- 251: Läufer-Transceiver
- 255: NFC-Transponder
- 260: Gleichrichter
- 261: erste Diode
- 262: zweite Diode
- 263: dritte Diode
- 264: vierte Diode
- 266: Glättungskondensator
- 271: Schalteinrichtung
- 272: Lastwiderstand
- 280: Steuereinrichtung
- 281: Speichereinrichtung
- 283: Spannungsmesseinrichtung
- 286: erster Anschluss
- 287: zweiter Anschluss
- 290: Zeichen
- 295: Energiespeicher
- 300: Sollstromwerte
- 301: Steuersignale
- 302: geänderte Steuersignale
- 304: Iststromwerte
- 314: Summenstrom
- 321: Datensteuersignale
- 410: erster Spannungspuls
- 421: zweiter Spannungspuls
- 422: dritter Spannungspuls
- 423: vierter Spannungspuls
- 424: Spannungspuls
- 430: erster Stromverlauf
- 431: zweiter Stromverlauf
- 435: dritter Stromverlauf
- 436: vierter Stromverlauf
- 470: Strommesszeitpunkt
- 500: Hauptsteuervorrichtung
- 601: erster Schritt
- 602: zweiter Schritt
- 603: dritter Schritt
- 604: vierter Schritt
- 605: fünfter Schritt
- 606: sechster Schritt
- 610: erster Pfeil
- 620: zweiter Pfeil
- 630: dritter Pfeil
- M1: erste Läuferkennung
- M2: zweite Läuferkennung
- P: Ausleseposition
- P1: erste Position
- P2: zweite Position
- t: Zeit
- Ton: Pulsdauer
- Toff: Auszeitdauer
- Ts: Periodendauer
- U: erste Phase
- V: zweite Phase
- W: dritte Phase

## Patentansprüche

1. Verfahren zum Betreiben eines Planarantriebssystems (1),
wobei das Planarantriebssystem (1) einen Stator (5), mehrere Läufer (200) und eine Hauptsteuervorrichtung (500) aufweist,
wobei der Stator (5) mehrere bestrombare Statorleiter (125) aufweist,
wobei ein Bestromen von Statorleitern (125) des Stators (5) mit Hilfe der Hauptsteuervorrichtung (500) steuerbar ist,
wobei jeder Läufer (200) eine Magneteinrichtung (204) mit wenigstens einem Läufermagneten (216) aufweist,
wobei zwischen bestromten Statorleitern (125) des Stators (5) und den Magneteinrichtungen (204) der Läufer (200) eine magnetische Wechselwirkung hervorrufbar ist, um die Läufer (200) anzutreiben,
wobei jedem Läufer (200) wenigstens eine eigene Läuferkennung zugeordnet ist,
und wobei eine Identifizierung der Läufer (200) durchgeführt wird,
indem Positionsinformationen der Läufer (200) und Läuferkennungen der Läufer (200) bereitgestellt werden,
und mit Hilfe der Hauptsteuervorrichtung (500) die bereitgestellten Positionsinformationen der Läufer (200) mit den bereitgestellten Läuferkennungen der Läufer (200) verknüpft werden.

2. Verfahren nach Anspruch 1,
wobei jeder Läufer (200) ausgebildet ist zum Übermitteln der Läuferkennung, um die Läuferkennung bereitzustellen,
und wobei für die Identifizierung die Läufer (200) derart aktiviert werden, dass die Läufer (200) nacheinander die Läuferkennung übermitteln.

3. Verfahren nach einem der vorhergehenden Ansprüche,
wobei jeder Läufer (200) ausgebildet ist zum Übermitteln der Läuferkennung, um die Läuferkennung bereitzustellen,
wobei der Stator (5) ausgebildet ist, das Bestromen von Statorleitern (125) derart durchzuführen, dass mit Hilfe von bestromten Statorleitern (125) ein magnetisches Wechselfeld erzeugbar ist,
wobei jeder Läufer (200) wenigstens eine Läuferspule (240) aufweist, in welcher aufgrund des magnetischen Wechselfelds eine Wechselspannung induzierbar ist,
und wobei für die Identifizierung nacheinander mit Hilfe des Stators (5) an denjenigen Positionen, an welchen sich die Läufer (200) befinden, ein die Läufer (200) zum Übermitteln der Läuferkennung aktivierendes magnetisches Wechselfeld erzeugt und dadurch eine Wechselspannung in der wenigstens einen Läuferspule (240) der Läufer (200) induziert wird, so dass die Läufer (200) nacheinander die Läuferkennung übermitteln.

4. Verfahren nach Anspruch 3,
wobei jeder Läufer eine Steuereinrichtung (280) zum Steuern des Übermittelns der Läuferkennung aufweist,
wobei die Steuereinrichtung (280) jedes Läufers (200) mit Hilfe der in der wenigstens einen Läuferspule (240) induzierten Wechselspannung mit Energie versorgbar ist,
wobei bei jedem Läufer (200) durch das Erzeugen des aktivierenden magnetischen Wechselfelds und die dadurch in der wenigstens einen Läuferspule (240) induzierte Wechselspannung die Energieversorgung der Steuereinrichtung (280) eingeleitet wird,
woraufhin die Steuereinrichtung (280) das Übermitteln der Läuferkennung veranlasst.

5. Verfahren nach Anspruch 3,
wobei jeder Läufer (200) eine Steuereinrichtung (280) zum Steuern des Übermittelns der Läuferkennung aufweist,
wobei bei jedem Läufer (200) durch das Erzeugen des aktivierenden magnetischen Wechselfelds und die dadurch in der wenigstens einen Läuferspule (240) induzierte Wechselspannung ein Aktivierungsbefehl an den Läufer (200) übertragen wird,
woraufhin die Steuereinrichtung (280) das Übermitteln der Läuferkennung veranlasst.

6. Verfahren nach einem der vorhergehenden Ansprüche,
wobei der Stator (5) ausgebildet ist, das Bestromen von Statorleitern (125) derart durchzuführen, dass mit Hilfe von bestromten Statorleitern (125) ein magnetisches Wechselfeld erzeugbar ist,
wobei jeder Läufer (200) wenigstens eine Läuferspule (240) aufweist, in welcher aufgrund des magnetischen Wechselfelds eine Wechselspannung induzierbar ist,
wobei jeder Läufer (200) ausgebildet ist zum Übermitteln der Läuferkennung an den Stator (5), um die Läuferkennung bereitzustellen,
und wobei jeder Läufer (200) ausgebildet ist, das Übermitteln der Läuferkennung an den Stator (5) durch zeitweises Belasten der wenigstens einen Läuferspule (240) durchzuführen, um dadurch zeitweise eine erhöhte Stromaufnahme von bestromten Statorleitern (125) des Stators (5) hervorzurufen.

7. Verfahren nach einem der Ansprüche 1 bis 5,
wobei jeder Läufer (200) ausgebildet ist zum Übermitteln der Läuferkennung mittels Funkübertragung, um die Läuferkennung bereitzustellen.

8. Verfahren nach einem der vorhergehenden Ansprüche,
wobei das Bereitstellen von Positionsinformationen der Läufer (200) mit Hilfe eines Positionserfassungssystems des Planarantriebssystems (1) durchgeführt wird, welches mehrere Magnetfeldsensoren (115) aufweist.

9. Verfahren nach einem der vorhergehenden Ansprüche,
wobei jeder Läufer (200) eine Speichereinrichtung (281) aufweist, in welcher die Läuferkennung hinterlegt ist.

10. Planarantriebssystem (1), ausgebildet zum Durchführen eines Verfahrens nach einem der vorhergehenden Ansprüche,
wobei das Planarantriebssystem (1) einen Stator (5), mehrere Läufer (200) und eine Hauptsteuervorrichtung (500) aufweist,
wobei der Stator (5) mehrere bestrombare Statorleiter (125) aufweist,
wobei die Hauptsteuervorrichtung (500) ausgebildet ist zum Steuern eines Bestromens von Statorleitern (125) des Stators (5),
wobei jeder Läufer (200) eine Magneteinrichtung (204) mit wenigstens einem Läufermagneten (216) aufweist,
wobei zwischen bestromten Statorleitern (125) des Stators (5) und den Magneteinrichtungen (204) der Läufer (200) eine magnetische Wechselwirkung hervorrufbar ist, um die Läufer (200) anzutreiben,
wobei jedem Läufer (200) wenigstens eine eigene Läuferkennung zugeordnet ist,
und wobei das Planarantriebssystem (1) ausgebildet ist zum Durchführen einer Identifizierung der Läufer (200),
indem Positionsinformationen der Läufer (200) und Läuferkennungen der Läufer (200) bereitgestellt werden,
und mit Hilfe der Hauptsteuervorrichtung (500) die bereitgestellten Positionsinformationen der Läufer (200) mit den bereitgestellten Läuferkennungen der Läufer (200) verknüpft werden.
